# EUROPEAN PATENT APPLICATION

(11) **EP 2 295 516 A1**
(43) Date of publication of application: **16.03.2011**
(21) Application number: 09742748.8
(22) Date of filing: 07.05.2009
(51) Int. Cl.: C09K 3/00, C08K 5/06, C08K 5/132, C08K 5/17, C08K 5/3412, C08L 101/00, C09D 5/32, C09D 7/12, C09D 201/00

(54) **ULTRAVIOLET ABSORBENT COMPOSITION**

(30) Priority: 09.05.2008 JP 2008123714
(71) Applicant: FUJIFILM Corporation, Tokyo 106-8620 (JP)
(72) Inventor: FURUKAWA, Kazushi, Odawara-shi Kanagawa 250-0001 (JP); TAKESHIMA, Youichiro, Odawara-shi Kanagawa 250-0001 (JP); KIMURA, Keizo, Odawara-shi Kanagawa 250-0001 (JP)
(74) Representative: HOFFMANN EITLE
(86) International application number: PCT/JP2009/058643
(87) International publication number: WO 2009/136624

(57) **Abstract**

An ultraviolet absorbent composition, containing:
an ultraviolet absorbent A represented by formula (1);
an ultraviolet absorbent B represented by formula(2-a) or (2-b); and
a compound C, which is at least one kind of compound selected from the group consisting of a singlet oxygen scavenger, an antioxidant and a radical trapping agent: 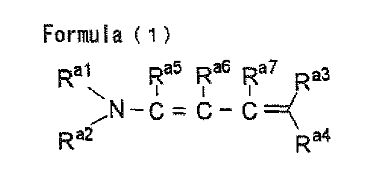 wherein
R^{a1} and R^{a2} each independently represent a hydrogen atom or a specific substituent; R^{a3} and R^{a4} each independently represent a substituent having a Hammett substituent constant σp value of 0.2 or more; R^{a5} to R^{a7} each represent a hydrogen atom or a monovalent substituent; 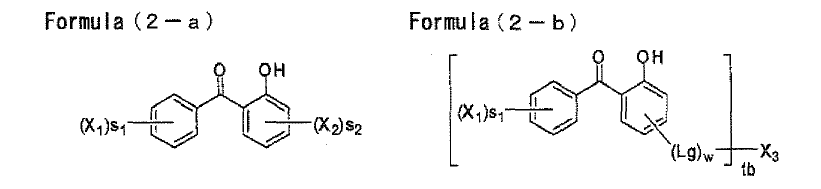 X₁ and X₂ each independently represent a hydrogen atom or a specific substituent; s₁ and s₂ each independently represent an integer of 1 to 3; Lg represents a divalent substituent or a single bond; w represents 0 or 1; tb represents 1 or 2; and X₃ represents, when tb is 1, a hydrogen atom or a specific substituent; and when tb is 2, X₃ represents a divalent substituent.

## Description

### TECHNICAL FIELD

The present invention relates to an ultraviolet absorbent composition.

### BACKGROUND ART

Ultraviolet absorbents have been used in combination with various resins or the like for providing materials with ultraviolet-absorptivity. As an ultraviolet absorbent, an inorganic ultraviolet absorbent and an organic ultraviolet absorbent may be used. The inorganic ultraviolet absorbent (see, for example. Patent Literatures 1 to 3) is superior in durability such as weather resistance and heat resistance. However, the freedom in selecting the compound is limited, because the absorption wavelength is determined by the band gap of the compound. There is hence no inorganic absorbent available that absorbs the light in a long-wavelength ultraviolet (UV-A) range of 320 to 400 nm, and the one can absorbs long-wavelength ultraviolet should have color because it would have absorption also in the visible range. It is known that a film having a shielding effect over a wide ultraviolet range can be obtained by coating a cerium oxide-based ultraviolet-shielding agent that blocks the UV-A range onto the surface of a specific titanic acid having a UV-B range blocking property (see, for example, Patent Literature 4).
In contrast, as to the organic ultraviolet absorbent, the freedom in designing the absorbent structure is much wider, and thus, it is possible to obtain absorbents having various absorption wavelengths by designing the absorbent chemical structure properly.

Various organic ultraviolet absorbent systems have been studied, and for absorption in the long-wavelength ultraviolet range, it is conceivable either to use an absorbent having the wavelength of maximal absorption in the long-wavelength ultraviolet range or to use a high concentration of absorbent. The absorbents described in, for example. Patent Literatures 5 and 6 have the wavelength of maximal absorption in the long-wavelength ultraviolet range, but they however are inferior in light stability, and their absorption capability declines with time.

In this regard, benzophenone- and benzotriazole-based ultraviolet absorbents are relatively high in light stability, and increase in concentration or film thickness leads to relatively clean blocking of the light in the longer-wavelength range (see, for example. Patent Literatures 7 and 8 ). However, when such an ultraviolet absorbent is applied as mixed with a resin or the like, the film thickness is limited to several tens of µm at the most. For blocking the light in the longer-wavelength range with the above-described film thickness to, it is necessary to add the ultraviolet absorbent to a considerably high concentration. However, simple increase in concentration only results in a problem of precipitation and bleed-out of the ultraviolet absorbent during long-term use. In addition, as an ultraviolet absorbent having the wavelength of maximal absorption in the long-wavelength ultraviolet range, when it also has absorption in the range of 400 nm or more, the material becomes yellowish. Thus, it deteriorates the tone of the color image observed in transmission. Accordingly, increase in concentration leads to distinct problems.
Under the circumstances, there is a need for an ultraviolet absorbent that blocks the light in a wide ultraviolet range and yet has no absorption in the visible range, further satisfying light deterioration resistance and the other properties.
Patent Literature 1: JP-A-5-339033
Patent Literature 2: JP-A-5-345639
Patent Literature 3: JP-A-6-56466
Patent Literature 4: JP-A-2006-316107
Patent Literature 5: JP-A-6-145387
Patent Literature 6: JP-A-2003-177235
Patent Literature 7: JP-T-2005-517787
Patent Literature 8: JP-A-7-285927

### DISCLOSURE OF INVENTION

### TECHINICAL PROBLEM

The present invention overcomes the aforementioned problems, and address to the provision of an ultraviolet absorbent composition having excellent ultraviolet absorptivity in both the UV-A and the UV-B ranges and yet having no absorption in the visible range, further satisfying light deterioration resistance and the other properties.

### SOLUTION TO PROBLEM

The inventors conducted intensive studies on compounds having absorption in the ultraviolet range and also studies into making the compounds block the light in the wider ultraviolet range and the UV light in the long-wavelength ultraviolet range more effectively and yet have no absorption in the visible range. As a result, the inventors found that it is not easy to solve the above problems with a single molecular compound that does not have a plurality of ultraviolet-absorbing structures. Thai is, when the light in the entire ultraviolet range is blocked with a single molecule ultraviolet absorbent, the absorption intensity mostly becomes smaller, and thus, increase in addition amount is needed to block the ultraviolet light effectively. The increase in addition amount, which may lead to bleed-out, is undesirable. The compound having absorption in a wide wavelength range has broad absorption spectra with its wavelength of maximal absorption at the center. Thus, when a wavelength range to be blocked reliably and a wavelength range to be transmitted reliably are close to each other, it is quite difficult to satisfy both requirements at the same time. In contrast, the compound having sharp absorption blocks the light only in a narrow range with its wavelength of maximal absorption at the center.
Based on these findings, it might be thought to employ an ultraviolet absorbent that does not have absorption on the long-wavelength side of the visible range but has sufficient absorption in the ultraviolet range, i.e., an ultraviolet absorbent having a steep spectrum in the long-wavelength range for absorption in the long-wavelength ultraviolet range, together with another ultraviolet absorbent for absorption in the other range where absorption is insufficient. It is thereby considered to be able to provide an ultraviolet absorbent composition blocking the light in the entire ultraviolet range and the light in the long-wavelength ultraviolet range effectively. However, when ultraviolet absorbents properly selected according to the aforementioned finding were used in combination, poor compatibility with the polymer resulted in a problem of bleed-out of the ultraviolet absorbents, and moreover poor solubility in the solvent caused a problem of inferior operating efficiency. Further, these ultraviolet absorbents were not fully satisfactory in terms of stability to light and heat.

Further, the inventors studied such ultraviolet-absorbing compounds having such a spectral shape. As described in Sumio Tokita "Chemistry Seminar 9. Color Chemistry" (Maruzen, 1982), p. 150 to 161, the spectral shape of a compound is constantly related to the energy level of its electron states as well as the levels of vibration and rotation. Restriction of the factors of molecular vibration and rotation would thus be effective in narrowing the absorbent body and giving a sharper spectral shape. However, even when the factors of vibration and rotation are restricted, the spectral shape may broaden, if the structure has side absorption in addition to its main absorption, the intensity of the side absorption is large, and the side absorption occurs in a wavelength range significantly separated from that of the main absorption. It was difficult to sharpen the spectral shape of a common ultraviolet absorbent, such as the benzotriazole- and triazine-based absorbents, which have been generally used as ultraviolet absorbents having broad absorption, for the above reasons. The inventors considered it essential for sharpening the spectral shape to depart from these structures and select a compound in the structure wherein the contribution of vibration and rotation is smaller and there is smaller side absorption. As a result, it was found to be possible to solve the problems in absorption effectively by using the compound represented by formulae (1) satisfying the requirements above as the ultraviolet absorbent. The inventors have also found that when the compound represented by formulae (1) is used as the ultraviolet absorbent, it is possible to solve the aforementioned problems of compatibility with a polymer and solubility in a solvent. Further, as a result of intensive studies in details, the inventors have found that the ultraviolet stabilizer can maintain its ultraviolet absorptive capacity over a long time in use together with a particular compound, even though the ultraviolet stabilizer is a material that does not maintain its ultraviolet absorptive capacity over a long time when the material is singly used. Even more surprising, the present inventors have found a significant effect of the compound represented by formula (1) having high solubility shows the remarkable effect to suppress bleeding-out of additives from a polymer.

JP-A-8-239509 (paragraph [0036] thereof) describes that, in the case of using a compound represented by formula (1) described below in an optical polymer film, various known additives such as a dispersant, a fluorescent dye, an antifoam, a lubricant, an anti-fading agent, or a preservative may be used, if needed. However, specific kinds and structures of the additives are unmentioned in the publication, and effects of the additives are not described therein. Further, JP-A-62-260152 (page 15, lower left column, lines 11-13) describes that, in the case of using a compound represented by formula (1) described below, an antioxidant, a quenching material, or the like may be incorporated for the purpose of increasing fastness of images or for other purposes. However, specific structures of these materials and effects obtained thereby are not described therein.
The present invention has been made on the basis of these findings.

The present invention provides the following means:
<1> An ultraviolet absorbent composition, comprising:
   an ultraviolet absorbent A represented by formula (1);
   an ultraviolet absorbent B represented by formula(2-a) or (2-b); and
   a compound C, which is at least one kind of compound selected from the group consisting of a singlet oxygen scavenger, an antioxidant and a radical trapping agent:

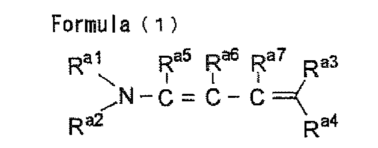

wherein
R^{a1} and R^{a2} each independently represent a hydrogen atom, a substituted or unsubstituted alkyl group, a substituted or unsubstituted aryl group or a substituted or unsubstituted heterocyclic group; R^{a1} and R^{a2} may bond to each other to form a nitrogen-containing ring;
R^{a3} and R^{a4} each independently represent a substituent having a Hammett substituent constant σp value of 0.2 or more; R^{a3} and R^{a4} may bond to each other to form a ring; R^{a5}, R^{a6} and R^{a7} each represent a hydrogen atom or a monovalent substituent; and any two of R^{a1}, R^{a5}, R^{a6} and R^{a7} may bond with each other to form a ring; and

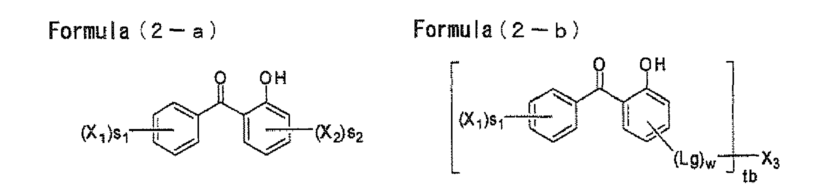

wherein, in formula (2-a),
X₁ and X₂ each independently represent a hydrogen atom, a halogen atom, a hydroxyl group, a substituted or unsubstituted alkyl group, a substituted or unsubstituted phenyl group, a substituted or unsubstituted alkoxy group, a substituted or unsubstituted alkylsulfonyl group, a substituted or unsubstituted arylsulfonyl group, a sulfonic acid group, a substituted or unsubstituted alkyloxycarbonyl group, a substituted or unsubstituted aryloxycarbonyl group or a substituted or unsubstituted amino group; and s₁ and s₂ each independently represent an integer of 1 to 3; and wherein, in formula (2-b),
X₁ represents a hydrogen atom, a halogen atom, a hydroxyl group, a substituted or unsubstituted alkyl group, a substituted or unsubstituted phenyl group, a substituted or unsubstituted alkoxy group, a substituted or unsubstituted alkylsulfonyl group, a substituted or unsubstituted arylsulfonyl group, a sulfonic acid group, a substituted or unsubstituted alkyloxycarbonyl group, a substituted or unsubstituted aryloxycarbonyl group, or a substituted or unsubstituted amino group; s₁ represents an integer of 1 to 3; Lg represents a divalent substituent or a single bond; w represents 0 or 1;
tb represents 1 or 2; X₃ represents, when tb is 1, a hydrogen atom, a halogen atom, a hydroxyl group, a substituted or unsubstituted alkyl group, a substituted or unsubstituted phenyl group, a substituted or unsubstituted alkoxy group, a substituted or unsubstituted alkylsulfonyl group, a substituted or unsubstituted arylsulfonyl group, a sulfonic acid group, a substituted or unsubstituted alkyloxycarbonyl group, a substituted or unsubstituted aryloxycarbonyl group, or a substituted or unsubstituted amino group; and when tb is 2, X₃ represents a divalent substituent.
<2> The ultraviolet absorbent composition described in the above item <1>, wherein the compound C is a compound represented by formula (3-a) or (3-b):

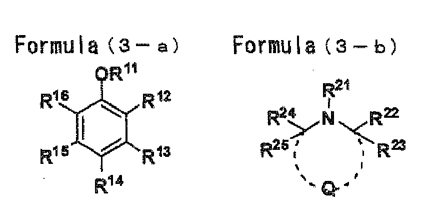

wherein
in formula (3-a), R¹¹ represents a hydrogen atom, an aliphatic group, an aromatic group, a heterocyclic group bound via a carbon atom, or a hydrolysable protective group; R¹², R¹³, R¹⁴, R¹⁵ and R¹⁶ each independently represent a hydrogen atom or a substituent; and R¹¹ and R¹², R¹² and R¹³, R¹³ and R¹⁴, R¹⁴ and R¹⁵, R¹⁵ and R¹⁶ and R¹⁶ and R¹¹ may bond to each other to form a ring; and
in formula (3-b), R²¹ represents a hydrogen atom, an aliphatic group, an acyl group, a sulfonyl group, a sulfinyl group, an oxy radical group or a hydroxyl group; Q represents a group of nonmetallic atoms necessary for forming a 5-, 6- or 7-membered ring; R²², R²³, R²⁴ and R²⁵ each independently represents a hydrogen atom, an aliphatic group, an aromatic group, or a heterocyclic group bound via a carbon atom; and R²¹ and R²², R²² and R²³, R²⁴ and R²⁵, and R²¹ and R²⁴ may bond to each other to form a ring.
<3> The ultraviolet absorbent composition described in the above item <1> or <2>, wherein the ultraviolet absorbent A has the maximum absorption wavelength of 350 nm or more and 400 nm or less, the half width of 55 nm or less, and the molar extinction coefficient at the maximum absorption wavelength of 50,000 or more.
<4> The ultraviolet absorbent composition described in any one of the above items <1> to <3>, wherein the ultraviolet absorbent B has the maximum absorption wavelength of less than 320 nm.
<5> The ultraviolet absorbent composition described in any one of the above items <1> to <3>, wherein the ultraviolet absorbent B has the maximum absorption wavelength of 320 nm or more and 350 nm or less.
<6> The ultraviolet absorbent composition described in any one of the above items <1> to <5>, wherein a mixing ratio of the ultraviolet absorbent A the ultraviolet absorbent B is 1:10 to 10:1.
<7> The ultraviolet absorbent composition described in any one of the above items <2> to <6>, wherein the compound C is the compound represented by formula (3-b).
<8> An ultraviolet absorbent dispersion, comprising the ultraviolet absorbent composition described in any one of the above items <1> to <7>.
<9> An ultraviolet absorbent solution, comprising the ultraviolet absorbent composition described in any one of the above items <1> to <7>.
<10> A polymer material, comprising the ultraviolet absorbent composition described in any one of the above items <1> to <7>.

### Advantageous Effects of Invention

The ultraviolet absorbent composition of the present invention is superior, as advantageous effect, in ultraviolet-absorbing capacity in the UV-A and UV-B ranges, yet having no absorption in the visible range, further satisfying excellent light deterioration resistance and the other properties. Furthermore, the inventive ultraviolet possesses so high compatibility to a polymer that it can prevent bleed out, and also possesses so high solubility to various solvents that it can improve manufacturing operation efficiency.

Other and further features and advantages of the invention will appear more fully from the following description, taking the accompanying drawing into consideration.

### BRIEF DESCRIPTION OF DRAWINGS

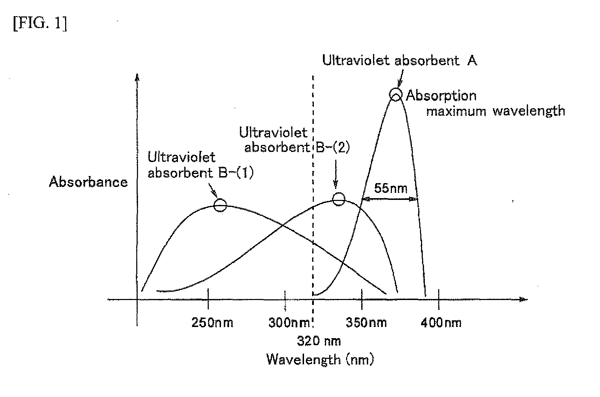

[Fig. 1] Fig. 1 shows an example of preferred absorption spectrum of the ultraviolet absorbents A and B for use in the present invention.

### BEST MODE FOR CARRYING OUT INVENTION

Hereinafter, the present invention will be described in detail.
A solution for measuring the spectral absorption maximum wavelength is obtained by dissolving the ultraviolet absorbent compositions (A), (B), and the compound (C) in an organic or inorganic solvent or water, either singly or as a mixture.

Examples of the organic solvent include amide-series solvents (e.g., N,N-dimethylformamide, N,N-dimethylacetamide, and 1-methyl-2-pyrrolidone), sulfone-series solvents (e.g., sulfolane), sulfoxide-series solvents (e.g., dimethyl sulfoxide), ureido-series solvents (e.g., tetramethylurea), ether-series solvents (e.g., dioxane, tetrahydrofuran, and cyclopentyl methyl ether), ketone-series solvents (e.g., acetone and cyclohexanone), hydrocarbon-series solvents (e.g., toluene, xylene, and n-decane), halogen-containing solvents (e.g., tetrachloroethane, chlorobenzene, and chloronaphthalene), alcohol-series solvents (e.g., methanol, ethanol, isopropyl alcohol, ethylene glycol, cyclohexanol, and phenol), pyridine-series solvents (e.g., pyridine, γ-picoline, and 2,6-lutidine), ester-series solvents (e.g., ethyl acetate and butyl acetate), carboxylic acid-series solvents (e.g., acetic acid and propionic acid), nitrile-series solvents (e.g., acetonitrile), sulfonic acid-series solvents (e.g., methanesulfonic acid), and amine-series solvents (e.g., triethylamine and tributylamine). Examples of the inorganic solvent include sulfuric acid and phosphoric acid.

Among these, amide-series solvents, sulfone-series solvents, sulfoxide-series solvents, ureido-series solvents, ether-series solvents, ketone-series solvents, halogen-containing solvents, alcohol-series solvents, ester-series solvents, and nitrile-series solvents are preferable from the viewpoint of solubility of ultraviolet absorbents. The concentrations of the ultraviolet absorbent compositions (A) and (B) for measurement are not particularly limited insofar as the maximum wavelength of spectral absorption can be confirmed, and are preferably in a range of from 1 × 10⁻⁷ mol/L to 1 × 10¹³ mol/L. The measurement temperatures are not particularly limited, and are preferably from 0°C to 80°C.

As measurement apparatus, a common spectral absorption measurement apparatus (e.g., U-4100 spectrophotometer, trade name, manufactured by Hitachi High-Technologies Corp.) can be used.

In the present specification, the aliphatic group means an alkyl group, a substituted alkyl group, an alkenyl group, a substituted alkenyl group, an alkynyl group, a substituted alkynyl group, an aralkyl group, and a substituted aralkyl group. The aforementioned alkyl group may have a branch or may form a ring. The alkyl group preferably has 1 to 20 carbon atoms, and more preferably 1 to 18 carbon atoms. The alkyl moiety in the aforementioned substituted alkyl group is the same as the above mentioned alkyl group. The aforementioned alkenyl group may have a branch or may form a ring. The alkenyl group has preferably 2 to 20 carbon atoms, and more preferably 2 to 18 carbon atoms. The alkenyl moiety in the aforementioned substituted alkenyl group is the same as the above mentioned alkenyl group. The aforementioned alkynyl group may have a branch or may form a ring. The alkynyl group has preferably 2 to 20 carbon atoms, and more preferably 2 to 18 carbon atoms. The alkynyl moiety in the aforementioned substituted alkynyl group is the same as the above mentioned alkynyl group. The alkyl moiety in the aforementioned aralkyl group and substituted aralkyl group is the same as the above mentioned alkyl group. The aryl moiety in the aforementioned aralkyl group and substituted aralkyl group is the same as the aryl group mentioned below.

Specific examples of the substituent in the alkyl portion of the substituted alkyl group, the substituted alkenyl group, the substituted alkynyl group, and the substituted aralkyl group include: a halogen atom (e.g. a chlorine atom, a bromine atom, or an iodine atom); an alkyl group [which represents a substituted or unsubstituted linear, branched, or cyclic alkyl group, and which includes an alkyl (preferably an alkyl having 1 to 30 carbon atoms, e.g. methyl, ethyl, n-propyl, isopropyl, t-butyl, n-octyl, eicosyl, 2-chloroethyl, 2-cyanoethyl, or 2-ethylhexyl), a cycloalkyl group (preferably a substituted or unsubstituted cycloalkyl group having 3 to 30 carbon atoms, e.g. cyclohexyl, cyclopentyl, or 4-n-dodecylcyclohexyl), a bicycloalkyl group (preferably a substituted or unsubstituted bicycloalkyl group having 5 to 30 carbon atoms, i.e. a monovalent group obtained by removing one hydrogen atom from a bicycloalkane having 5 to 30 carbon atoms, e.g. bicyclo[1,2,2]heptan-2-yl or bicyclo[2,2,2]octan-3-yl), and a tricyclo or higher structure having three or more ring structures; and an alkyl group in substituents described below (e.g. an alkyl group in an alkylthio group) represents such an alkyl group of the above concept];

an alkenyl group [which represents a substituted or unsubstituted linear, branched, or cyclic alkenyl group, and which includes an alkenyl group (preferably a substituted or unsubstituted alkenyl group having 2 to 30 carbon atoms, e.g. vinyl, allyl, prenyl, geranyl, or oleyl), a cycloalkenyl group (preferably a substituted or unsubstituted cycloalkenyl group having 3 to 30 carbon atoms, i.e. a monovalent group obtained by removing one hydrogen atom from a cycloalkene having 3 to 30 carbon atoms, e.g. 2-cyclopenten-1-yl or 2-cyclohexen-1-yl), and a bicycloalkenyl group (which represents a substituted or unsubstituted bicycloalkenyl group, preferably a substituted or unsubstituted bicycloalkenyl group having 5 to 30 carbon atoms, i.e. a monovalent group obtained by removing one hydrogen atom from a bicycloalkene having one double bond, e.g. bicyclo[2,2,1]hept-2-en-1-yl or bicyclo[2,2,2]oct-2-en-4-yl)]; an alkynyl group (preferably a substituted or unsubstituted alkynyl group having 2 to 30 carbon atoms, e.g. ethynyl, propargyl, or trimethylsilylethynyl);

an aryl group (preferably a substituted or unsubstituted aryl group having 6 to 30 carbon atoms, e.g. phenyl, p-tolyl, naphthyl, m-chlorophenyl, or o-hexadecanoylaminophenyl); a heterocyclic group (preferably a monovalent group obtained by removing one hydrogen atom from a substituted or unsubstituted 5- or 6-membered aromatic or nonaromatic heterocyclic compound; more preferably a 5- or 6-membered aromatic heterocyclic group having 3 to 30 carbon atoms, e.g. 2-furyl, 2-thienyl, 2-pyrimidinyl, 2-benzothiazolyl); a cyano; a hydroxyl; a nitro; a carboxyl; an alkoxy (preferably a substituted or unsubstituted alkoxy having 1 to 30 carbon atoms, e.g. methoxy, ethoxy, isopropoxy, t-butoxy, n-octyloxy, or 2-methoxyethoxy); an aryloxy (preferably a substituted or unsubstituted aryloxy having 6 to 30 carbon atoms, e.g. phenoxy, 2-methylphenoxy, 4-t-butylphenoxy, 3-nitrophenoxy, or 2-tetradecanoylaminophenoxy);

a silyloxy group (preferably a silyloxy group having 3 to 20 carbon atoms, e.g. trimethylsilyloxy or t-butyldimethylsilyloxy); a heterocyclic oxy group (preferably a substituted or unsubstituted heterocyclic oxy group having 2 to 30 carbon atoms, e.g. 1-phenyltetrazol-5-oxy or 2-tetrahydropyranyloxy); an acyloxy group (preferably a formyloxy group, a substituted or unsubstituted alkylcarbonyloxy group having 2 to 30 carbon atoms, or a substituted or unsubstituted arylcarbonyloxy group having 7 to 30 carbon atoms, e.g. formyloxy, acetyloxy, pivaloyloxy, stearoyloxy, benzoyloxy, or p-methoxyphenylcarbonyloxy); a carbamoyloxy group (preferably a substituted or unsubstituted carbamoyloxy group having 1 to 30 carbon atoms, e.g. N,N-dimethylcarbamoyloxy, N,N-diethylcarbamoyloxy, morpholinocarbonyloxy, N,N-di-n-octylaminocarbonyloxy, or N-n-octylcarbamoyloxy);

an alkoxycarbonyloxy group (preferably a substituted or unsubstituted alkoxycarbonyloxy group having 2 to 30 carbon atoms, e.g. methoxycarbonyloxy, ethoxycarbonyloxy, t-butoxycarbonyloxy, or n-octylcarbonyloxy); an aryloxycarbonyloxy group (preferably a substituted or unsubstituted aryloxycarbonyloxy group having 7 to 30 carbon atoms, e.g. phenoxycarbonyloxy, p-methoxyphenoxycarbonyloxy, or p-n-hexadecyloxyphenoxycarbonyloxy); an amino group (preferably an amino group, a substituted or unsubstituted alkylamino group having 1 to 30 carbon atoms, or a substituted or unsubstituted arylamino group having 6 to 30 carbon atoms, e.g. amino, methylamino, dimethylamino, anilino, N-methyl-anilino, or diphenylamino); an acylamino group (preferably a formylamino group, a substituted or unsubstituted alkylcarbonylamino group having 1 to 30 carbon atoms, or a substituted or unsubstituted arylcarbonylamino group having 6 to 30 carbon atoms, e.g. formylamino, acetylamino, pivaloylamino, lauroylamino, benzoylamino, or 3,4,5-tri-n-octyloxyphenylcarbonylamino);

an aminocarbonylamino group (preferably a substituted or unsubstituted aminocarbonylamino group having 1 to 30 carbon atoms, e.g. carbamoylamino, N,N-dimethylaminocarbonylamino, N,N-diethylaminocarbonylamino, or morpholinocarbonylamino); an alkoxycarbonylamino group (preferably a substituted or unsubstituted alkoxycarbonylamino group having 2 to 30 carbon atoms, e.g. methoxycarbonylamino, ethoxycarbonylamino, t-butoxycarbonylamino, n-octadecyloxycarbonylamino, or N-methyl-methoxycarbonylamino); an aryloxycarbonylamino group (preferably a substituted or unsubstituted aryloxycarbonylamino group having 7 to 30 carbon atoms, e.g. phenoxycarbonylamino, p-chlorophenoxycarbonylamino, or m-n-octyloxyphenoxycarbonylamino); a sulfamoylamino group (preferably a substituted or unsubstituted sulfamoylamino group having 0 to 30 carbon atoms, e.g. sulfamoylamino, N,N-dimethylaminosulfonylamino, or N-n-octylaminosulfonylamino);

an alkyl- or aryl-sulfonylamino group (preferably a substituted or unsubstituted alkylsulfonylamino group having 1 to 30 carbon atoms, or a substituted or unsubstituted arylsulfonylamino group having 6 to 30 carbon atoms, e.g. methylsulfonylamino, butylsulfonylamino, phenylsulfonylamino, 2,3,5-trichlorophenylsulfonylamino, or p-methylphenylsulfonylamino); a mercapto group; an alkylthio group (preferably a substituted or unsubstituted alkylthio group having 1 to 30 carbon atoms, e.g. methylthio, ethylthio, or n-hexadecylthio); an arylthio group (preferably a substituted or unsubstituted arylthio group having 6 to 30 carbon atoms, e.g. phenylthio, p-chlorophenylthio, or m-methoxyphenylthio); a heterocyclic thio group (preferably a substituted or unsubstituted heterocyclic thio group having 2 to 30 carbon atoms, e.g. 2-benzothiazolylthio or 1-phenyltetrazol-5-ylthio); a sulfamoyl group (preferably a substituted or unsubstituted sulfamoyl group having 0 to 30 carbon atoms, e.g. N-ethylsulfamoyl, N-(3-dodecyloxypropyl)sulfamoyl, N,N-dimethylsulfamoyl, N-acetylsulfamoyl, N-benzoylsulfamoyl, or N-(N'-phenylcarbamoyl)sulfamoyl); a sulfo group;

an alkyl- or aryl-sulfinyl group (preferably a substituted or unsubstituted alkylsulfinyl group having 1 to 30 carbon atoms, or a substituted or unsubstituted arylsulfinyl group having 6 to 30 carbon atoms, e.g. methylsulfinyl, ethylsulfinyl, phenylsulfinyl, or p-methylphenylsulfinyl); an alkyl- or aryl-sulfonyl group (preferably a substituted or unsubstituted alkylsulfonyl group having 1 to 30 carbon atoms, or a substituted or unsubstituted arylsulfonyl group having 6 to 30 carbon atoms, e.g. methylsulfonyl, ethylsulfonyl, phenylsulfonyl, or p-methylphenylsulfonyl); an acyl group (preferably a formyl group, a substituted or unsubstituted alkylcarbonyl group having 2 to 30 carbon atoms, a substituted or unsubstituted arylcarbonyl group having 7 to 30 carbon atoms, or a substituted or unsubstituted heterocyclic carbonyl group having 4 to 30 carbon atoms, which is bonded to said carbonyl group through a carbon atom, e.g. acetyl, pivaloyl, 2-chloroacetyl, stearoyl, benzoyl, p-n-octyloxyphenylcarbonyl, 2-pyridylcarbonyl, or 2-furylcarbonyl);

an aryloxycarbonyl group (preferably a substituted or unsubstituted aryloxycarbonyl group having 7 to 30 carbon atoms, e.g. phenoxycarbonyl, o-chlorophenoxycarbonyl, m-nitrophenoxycarbonyl, or p-t-butylphenoxycarbonyl); an alkoxycarbonyl group (preferably a substituted or unsubstituted alkoxycarbonyl group having 2 to 30 carbon atoms, e.g. methoxycarbonyl, ethoxycarbonyl, t-butoxycarbonyl, or n-octadecyloxycarbonyl); a carbamoyl group (preferably a substituted or unsubstituted carbamoyl group having 1 to 30 carbon atoms, e.g. carbamoyl, N-methylcarbamoyl, N,N-dimethylcarbamoyl, N,N-di-n-octylcarbamoyl, or N-(methylsulfonyl)carbamoyl); an aryl- or heterocyclic-azo group (preferably a substituted or unsubstituted aryl azo group having 6 to 30 carbon atoms, or a substituted or unsubstituted heterocyclic azo group having 3 to 30 carbon atoms, e.g. phenylazo, p-chlorophenylazo, or 5-ethylthio-1,3,4-thiadiazol-2-ylazo); an imido group (preferably N-succinimido or N-phthalimido);

a phosphino group (preferably a substituted or unsubstituted phosphino group having 2 to 30 carbon atoms, e.g. dimethylphosphino, diphenylphosphino, or methylphenoxyphosphino); a phosphinyl group (preferably a substituted or unsubstituted phosphinyl group having 2 to 30 carbon atoms, e.g. phosphinyl, dioctyloxyphosphinyl, or diethoxyphosphinyl);a phosphinyloxy group (preferably a substituted or unsubstituted phosphinyloxy group having 2 to 30 carbon atoms, e.g. diphenoxyphosphinyloxy or dioctyloxyphosphinyloxy); a phosphinylamino group (preferably a substituted or unsubstituted phosphinylamino group having 2 to 30 carbon atoms, e.g. dimethoxyphosphinylamino or dimethylaminophosphinylamino); and a silyl group (preferably a substituted or unsubstituted silyl group having 3 to 30 carbon atoms, e.g. trimethylsilyl, t-butyldimethylsilyl, or phenyldimethylsilyl).

Among the substituents, with respect to one having a hydrogen atom, the hydrogen atom may be removed and be substituted by any of the above-mentioned substituents. Examples thereof include: an alkylcarbonylaminosulfonyl group, an arylcarbonylaminosulfonyl group, an alkylsulfonylaminocarbonyl group, and an arylsulfonylaminocarbonyl group. Specific examples thereof include a methylsulfonylaminocarbonyl group, a p-methylphenylsulfonylaminocarbonyl group, an acetylaminosulfonyl group, and a benzoylaminosulfonyl group.

Examples of a substituent of the aryl portion of the substituted aralkyl group are similar to the examples of a substituent of the substituted aryl groups mentioned later.

In this specification, the aromatic groups refer to aryl groups and substituted aryl groups. To the aromatic groups, an aliphatic ring, another aromatic ring, or a heterocycle may be condensed. The aromatic group preferably has 6 to 40 carbon atoms, more preferably 6 to 30 carbon atoms, and even more preferably 6 to 20 carbon atoms. Among the above, phenyl or naphthyl is preferable as the aryl group, and phenyl is particularly preferable.

The aryl portion of the substituted aryl group is similar to the above-mentioned aryl groups. Examples of a substituent of the substituted aryl groups are similar to the above-mentioned examples of the substituent of the alkyl portions of the substituted alkyl group, the substituted alkenyl group, the substituted alkynyl group, and the substituted aralkyl group.

In this specification, the heterocyclic groups preferably contain a 5-membered or 6-membered, saturated or unsaturated heterocycle. To the heterocycle, an aliphatic ring, an aromatic ring, or another heterocycle may be condensed. Examples of a heteroatom of the heterocycle include B, N, O, S, Se, and Te. As the heteroatom, N, O, and S are preferable. It is preferable that a carbon atom of the heterocycle has a free valence (monovalent) (the heterocyclic group is preferably to be bonded at a carbon atom thereof). The heterocyclic group preferably has 1 to 40 carbon atoms, more preferably 1 to 30 carbon atoms, and even more preferably 1 to 20 carbon atoms. Examples of the saturated heterocycle include a pyrrolidine ring, a morpholine ring, a 2-bora-1,3-dioxolane ring, and 1,3-thiazolidine ring. Examples of the unsaturated heterocycles include an imidazole ring, a thiazole ring, a benzothiazole ring, a benzoxazole ring, a benzotriazole ring, a benzoselenazole ring, a pyridine ring, a pyrimidine ring, and a quinoline ring. The heterocyclic groups may have a substituent. Examples of the substituent are similar to the previously-mentioned examples of the substituent of the alkyl portions of the substituted alkyl group, the substituted alkenyl group, the substituted alkynyl group, and the substituted aralkyl group.

The ultraviolet absorbent composition according to the present invention characteristically contains an ultraviolet absorbent A represented by formula (1) and an ultraviolet absorbent B represented by formula (2-a) or (2-b) each having a particular absorption spectral shape, and a compound C, which is at least one kind of compound selected from a singlet oxygen scavenger, an antioxidant and a radical trapping agent.

The blending ratio of the ultraviolet absorbent A to the ultraviolet absorbent B represented by formula (2-a) or (2-b) may be arbitrary. The ratio of the ultraviolet absorbent A to the ultraviolet absorbent B (A:B) is arbitrary excluding 0:1 1 and 1:0. It is preferably 1:10 to 10:1, more preferably 1:5 to 5:1, particularly preferably 1:4 to 4:1, most preferably 1:2 to 2:1. The blending ratio in the present invention is expressed by molar ratio. It is possible to convert the molar ratio to the weight ratio, when the molecular weight of the ultraviolet absorbent is known, and thus, those with normal skill in the art can mix the ingredients based on weight ratio.

The ultraviolet absorbent composition according to the present invention preferably includes two or less kinds of compounds, particularly preferably one kind of compound, as the ultraviolet absorbent A. It preferably includes three or less kinds of compounds, more preferably two or less kinds of compounds, and particularly preferably one kind of compound, as the ultraviolet absorbent B.

The ultraviolet absorbent having a particular absorption spectral shape according to the present invention particular will be described below.
The ultraviolet absorbent A represented by formula (1) has an absorption maximum wavelength preferably of 350 nm or more and 400 nm or less, and a half value width of 55 nm or less. Further, it is preferable to be the molar extinction coefficient at the maximum absorption wavelength of 50,000 or more.
The ultraviolet absorbent B represented by formula (2-a) or (2-b) preferably has an absorption maximum wavelength of 350 nm or less. Further, the absorbance at 320 nm of the ultraviolet absorbent B represented by formula (2-a) or (2-b) preferably shows 30% or more of the absorbance at the absorption maximum wavelength. In particular, the absorbance of the ultraviolet absorbent B at 320 nm is preferably 50% or more of the absorbance at the absorption maximum wavelength.

As preferred ultraviolet absorbent B, for example, as shown in Fig. 1, the material can be classified into an ultraviolet absorbent (B-(1)) having an absorption maximum wavelength of less than 320 nm and an ultraviolet absorbent (B-(2)) having an absorption maximum wavelength of from 320 nm to 350 nm. Fig. 1 shows preferable absorption spectra of the ultraviolet absorbent A and the ultraviolet absorbent B for use in the present invention.

The absorption maximum wavelength and the half value specified in the present invention can be determined easily by a skilled person in the art. The measuring methods are described, for example, in Chemical Society of Japan Ed., "Experimental Chemistry Lecture, Chapter 7 Spectroscopy II", 4th Ed., (Maruzen, 1992), p. 180 to 186. Specifically, they are determined by dissolving a sample in a suitable solvent and measuring the spectrum in a spectrophotometer by using two quartz or glass cells for the sample and control. For example, the solvent for use is required to be capable of dissolving the sample, have no absorption in the measurement wavelength range, have smaller interaction with the solute molecule, and have relatively low volatility. Any solvent may be used, as long as it satisfies the conditions above. In the present invention, the measurement is made by using ethyl acetate (EtOAc) as the solvent.

The absorption maximum wavelength and the half value width of the dyes in the present invention are determined by preparing a solution in ethyl acetate as the solvent at a concentration of approximately 5 × 10⁻⁵ mol·dm⁻³ and by measurement while using a quartz cell having an optical path length of 10 mm.

The spectral half value width is described, for example, in Chemical Society of Japan Ed., "Experimental Chemistry Lecture, Chapter 3 Basic Operation III", 4th Ed., (Maruzen, 1991), p. 154. The half value width is described in the literature above by using wave number as abscissa, but the half value width is plotted against wavelength in the present invention and thus, the unit of the half value width is nm. Specifically, it is defined as the width of the absorption band at an absorbance of 1/2 of that at the absorption maximum wavelength and used as an indicator of the absorption spectral shape. A spectrum having a smaller half value width is a sharp spectrum, while that having a large half value width, a broad spectrum. An ultraviolet absorbent giving a broad spectrum has absorption in a wider range from the absorption maximum wavelength to the long-wavelength side. For this reason, for shielding the light in the long-wavelength ultraviolet range effectively without yellowing, an ultraviolet absorbent showing a spectrum having a smaller half value width is preferable.

As described in Sumio Tokita, "Chemistry Seminar 9, Color Chemistry ", (Maruzen, 1982), p. 154 to 155, the absorption intensity, that is the oscillator intensity of light, is proportional with the integral of the molar extinction coefficient. When the absorption spectra is symmetrical, the oscillator intensity is proportional to the product of the absorbance at the absorption maximum wavelength and the half value width (in such a case, the half value width is a value expressed by wavelength), which means that a compound having a spectrum having a smaller half value width has larger absorbance at the absorption maximum wavelength, even when the transition moment is the same. Such an ultraviolet absorbent has an advantage that it is possible to block the light in the range around the absorption maximum wavelength effectively even when it is added in a small amount, but the absorbance drops rapidly as the wavelength is shifted slightly from the absorption maximum wavelength, prohibiting light blocking over a wide range.

The ultraviolet absorbent A in the present invention preferably has an absorption maximum wavelength of from 350 nm to 400 nm and a half value width of 55 nm or less. The use of the ultraviolet absorbent A having the absorption of the above-described wavelength range in combination with the ultraviolet absorbent B is suitable for the coverage of the ultraviolet absorption range. However, a possibility of yellow-color development of a composition has been expected. In view of the possibility, it was difficult for a skilled person in the art to come up with the combination of these ultraviolet absorbents. Though improvement of light deterioration resistance is expected to be achieved by the use together with a compound C, it was difficult for a skilled person in the art to come up with such combination because problems occur most often with respect to solubility.

Hereinafter, the ultraviolet absorbent A represented by formula (1) for use in the present invention will be described.

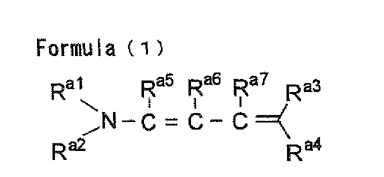

[In formula (1), R^{a1} and R^{a2} each independently represent a hydrogen atom, a substituted or unsubstituted alkyl group, a substituted or unsubstituted aryl group or a substituted or unsubstituted heterocyclic group. R^{a1} and R^{a2} may bond to each other to form a nitrogen-containing ring.
R^{a3} and R^{a4} each independently represent a substituent having a Hammett substituent constant σp value of 0.2 or more. R^{a3} and R^{a4} may bond to each other to form a ring. R^{a5}, R^{a6} and R^{a7} each represent a hydrogen atom or a monovalent substituent. Any two of R^{a1}, R^{a5}, R^{a6} and R^{a7} may bond with each other to form a ring.]

In formula (1), R^{a1} and R^{a2} each independently represent a hydrogen atom, a substituted or unsubstituted alkyl group, a substituted or unsubstituted aryl group or a substituted or unsubstituted heterocyclic group. The alkyl group is preferably an alkyl group having 1 to 20 carbon atoms, and examples thereof include a methyl group, an ethyl group and a propyl group. The alkyl group may have one or more monovalent substituents at any position of the alkyl group.

Examples of the monovalent substituent include a halogen atom (e.g., a fluorine atom, a chlorine atom, a bromine atom, an iodine atom), an alkyl group (e.g., methyl, ethyl), an aryl group (e.g., phenyl, naphthyl), a cyano group, a carboxyl group, an alkoxycarbonyl group (e.g., methoxycarbonyl), an aryloxycarbonyl group (e.g., phenoxycarbonyl), a substituted or unsubstituted carbamoyl group (e.g., carbamoyl, N-phenylcarbamoyl, N,N-dimethylearbamoyl), an alkylcarbonyl group (e.g., acetyl), an arylcarbonyl group (e.g., benzoyl), a nitro group, a substituted or unsubstituted amino group (e.g., amino, dimethylamino, anilino), an acylamino group (e.g., acetamino, ethoxycarbonylamino), a sulfonamido group (e.g., methanesulfonamido), an imido group (e.g., succinimido, phthalimido), an imino group (e.g., benzylideneimino), a hydroxyl group, an alkoxy group (e.g., methoxy), an aryloxy group (e.g., phenoxy), an acyloxy group (e.g., acetoxy), an alkylsulfonyloxy group (e.g., methanesulfonyloxy), an arylsulfonyloxy group (e.g., benzenesulfonyloxy), a sulfo group, a substituted or unsubstituted sulfamoyl group (e.g., sulfamoyl, N-phenylsulfamoyl), an alkylthio group (e.g., methylthio), an arylthio group (e.g., phenylthio), an alkylsulfonyl group (e.g., methanesulfonyl), an arylsulfonyl group (e.g., benzenesulfonyl), and a heterocyclic group (e.g., pyridyl, morpholino). The substituent may be further substituted. In the case where there are a plurality of substituents, they may be the same as or different from. Alternatively, they may bond together to form a ring.

The aryl group is preferably an aryl group having 6 to 20 carbon atoms, and examples thereof include a phenyl group and a naphthyl group. The aryl group may have one or more monovalent substituents at any position of the aryl group. The monovalent substituent is, for example, the monovalent substituent described above.

The heterocyclic group is preferably a heterocyclic group having 6 to 20 carbon atoms, and examples thereof include a pyridyl group, a piperidino group, and a morpholino group. The heterocyclic group may have a monovalent substituent at an arbitrary position thereof. The monovalent substituent is, for example, the monovalent substituent described above.

R^{a1} and R^{a2} may bond to each other to form a nitrogen-containing ring. The ring to be formed is preferably a nitrogen-containing 5-or 6-membered ring. Examples of the ring include a pyrrolidine ring, a pyrroline ring, an imidazolidine ring, an imidazoline ring, a oxazoline ring, a thiazoline ring, a pyperidine ring, a morpholine ring, and a pyperadine ring. These rings may have a monovalent substituent on their rings. Examples of the substituent include examples of monovalent substituents described above. Further, the ring may form a ring-fused structure with an aromatic ring or the like.

R^{a3} and R^{a4} each independently represent a substituent having a Hammett substituent constant σp value of 0.2 or more. The expression "Hammett substituent constant σ value" used herein will be briefly described. Hammett's rule is a rule of thumb advocated by L. P. Hammett in 1935 for quantitatively considering the effect of substituents on the reaction or equilibrium of benzene derivatives, and the appropriateness thereof is now widely recognized. The substituent constant determined in the Hammett's rule involves σₚ value and σₘ value. These values can be found in a multiplicity of general publications, and are detailed in, for example, "Lange's Handbook of Chemistry" 12th edition by J. A. Dean, 1979 (McGraw-Hill), "Kagaku no Ryoiki" special issue, No. 122, pp. 96 to 103, 1979 (Nankodo) and Chem.Rev., vol. 91, pp. 165 to 195, 1991. The substituent having a Hammett substituent constant σp of 0.2 or more in the present invention is an electron-withdrawing group. The σp value is preferably 0.25 or more, more preferably 0.3 or more, and particularly preferably 0.35 or more.

Examples of R^{a3} and R^{a4} include a cyano group (0.66), a carboxyl group (-COOH: 0.45), an alkoxycarbonyl group (e.g. -COOMe: 0.45), an aryloxycarbonyl group (e.g. -COOPh: 0.44), a carbamoyl group (-CONH₂: 0.36), an alkylcarbonyl group (e.g. -COMe: 0.50), an arylcarbonyl group (e.g. -COPh: 0.43), an alkylsulfonyl group (e.g. -SO₂Me: 0.72), an arylsulfonyl group (e.g. -SO₂Ph: 0.68) and the like. In the present specification, "Me" represents a methyl group and "Ph" represents a phenyl group. The values in parenthesis are the σp values of typical substituents, as extracted from Chem. Rev., 1991, vol. 91, p. 165 to 195.

R^{a3} and R^{a4} may bond to each other to form a ring. The σp values of R^{a3} and R^{a4} may not be specified when, for example, a ring is formed by R^{a3} and R^{a4}. However, the σp values thereof when a ring is formed are defined, assuming that partial ring structures are substituted respectively as R^{a3} and R^{a4}, in the present invention. For example, when a 1,3-indandione ring is formed, benzoyl groups are considered to be substituted respectively as R^{a3} and R^{a4}.

R^{a5}, R^{a6} and R^{a7} each independently represent a hydrogen atom or a monovalent substituent. The monovalent substituent is, for example, the monovalent substituent described above. It is preferably a hydrogen atom, an alkyl group, an aryl group or an alkoxy group.

Any two of R^{a1}, R^{a5}, R^{a6} and R^{a7} may bind with each other to form a ring. A combination of binding is not particularly limited. In the case of forming a ring, the ring is preferably formed by a pair of R^{a1} and R^{a5}, or a pair of R^{a5} and R^{a7}. As the ring to be formed, it is more preferable to form 4- to 8-membered ring containing the a carbon atom or nitrogen atom as previously defined in the above-described formula (1) is more preferable.

The ultraviolet absorbent represented by formula (1) may be an ultraviolet absorbent represented by formula (1-2) or (1-3). Next, the ultraviolet absorbent represented by formula (1-2) or (1-3) will be described in detail.

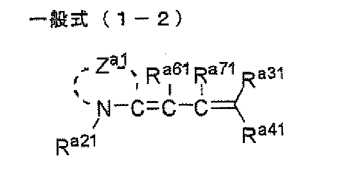

[In formula (1-2),
R^{a21} represents a hydrogen atom, a substituted or unsubstituted alkyl group, a substituted or unsubstituted aryl group, or a substituted or unsubstituted heterocyclic group;
R^{a31} and R^{a41} each represent -CN, -COOR^{a25}, -CONR^{a26}R^{a27}, -COR^{a28} or -SO₂R^{a29} (R^{a25}, R^{a26}, R^{a27} and R^{a28} each independently represent a hydrogen atom, a substituted or unsubstituted alkyl group, a substituted or unsubstituted aryl group, or a substituted or unsubstituted heterocyclic group; R^{a26} and R^{a27} may bond to each other to form a nitrogen-containing ring; and R^{a29} represents a substituted or unsubstituted alkyl group, a substituted or unsubstituted aryl group, or a substituted or unsubstituted heterocyclic group);
R^{a61} and R^{a71} each represent a hydrogen atom or a monovalent substituent; R^{a61} and R^{a71} may bind to each other to form a ring; and
Z^{a1} represents a group of atoms necessary for forming a 4- to 8-membered ring with the carbon atom and the nitrogen atom.]

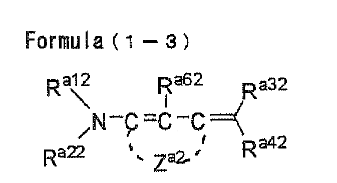

[In formula (1-3),
R^{a12} and R^{a22} each independently represent a hydrogen atom, an alkyl group, an aryl group, or a heterocyclic group; R^{a12} and R^{a22} may bond to each other to form a nitrogen-containing ring
R^{a32} and R^{a42} each represent -CN, -COOR^{a35}, -CONR^{a36}R^{a37}, -COR^{a38} or -SO₂R^{a39} (R^{a35}, R^{a36}, R^{a37} and R^{a38} each independently represent a hydrogen atom, an alkyl group, an aryl group, or a heterocyclic group; R^{a36} and R^{a37} may bond to each other to form a nitrogen-containing ring; and R^{a39} represents an alkyl group, an aryl group, or a heterocyclic group);
R^{a62} represents a hydrogen atom or a monovalent substituent; and
Z^{a2} represents a group of atoms necessary for forming a 4- to 8-membered ring with the carbon atoms.]

In formula (1-2), R^{a21} represents a hydrogen atom, a substituted or unsubstituted alkyl group, a substituted or unsubstituted aryl group, or a substituted or unsubstituted heterocyclic group. Examples of the substituted or unsubstituted alkyl group, the substituted or unsubstituted aryl group, and the substituted or unsubstituted heterocyclic group are the same as those of R^{a1} in the above-described formula (1), and preferable examples thereof are also the same as preferable examples of R^{a1}.

R^{a31} and R^{a41} each represent -CN, -COOR^{a25}, -CONR^{a26}R^{a27}, -COR^{a28} or-SO₂R^{a29}. R^{a25}, R^{a26}, R^{a27} and R^{a28} each independently represent a hydrogen atom, a substituted or unsubstituted alkyl group, a substituted or unsubstituted aryl group, or a substituted or unsubstituted heterocyclic group. R^{a29} represents a substituted or unsubstituted alkyl group, a substituted or unsubstituted aryl group, or a substituted or unsubstituted heterocyclic group. Examples of the substituted or unsubstituted alkyl group, the substituted or unsubstituted aryl group, and the substituted or unsubstituted heterocyclic group, all of which are represented by R^{a25} to R^{a29} are the same as those of R^{a1} in the above-described formula (1), and preferable examples thereof are also the same as preferable examples of R^{a1}. R^{a26} and R^{a27} may bond to each other to form a nitrogen-containing ring. The ring to be formed is preferably a nitrogen-containing 5-to 8-membered ring.

R^{a61} and R^{a71} each represent a hydrogen atom or a monovalent substituent. R^{a61} and R^{a71} may bind to each other to form a ring. R^{a61} and R^{a71} each have the same meaning as those of R^{a6} and R^{a7} in formula (1), respectively, and the favorable examples thereof are also the same.
Z^{a1} represents a group of atoms necessary for forming a 4- to 8-membered ring with the carbon atom and the nitrogen atom. Examples of the ring include a pyrrolidine ring, a pyrroline ring, an imidazolidine ring, an imidazoline ring, a oxazoline ring, a thiazoline ring, a pyperidine ring, a morpholine ring, and a pyperadine ring. These rings may have a monovalent substituent. Examples of the substituent include examples of the monovalent substituent as described above. Further, these rings may form a ring-fused structure with an aromatic ring or the like.

In formula (1-3), R^{a12} and R^{a22} each independently represent a hydrogen atom, a substituted or unsubstituted alkyl group, a substituted or unsubstituted aryl group, or a substituted or unsubstituted heterocyclic group. Examples of the substituted or unsubstituted alkyl group, the substituted or unsubstituted aryl group, and the substituted or unsubstituted heterocyclic group are the same as those of R^{a1} and R^{a2} in the above-described formula (1), and preferable examples thereof are also the same as preferable examples of R^{a1} and R^{a2}. R^{a12} and R^{a22} may bond to each other to form a nitrogen-containing ring. Examples of the ring to be formed are the same as those of R^{a1} and R^{a2} in the above-described formula (I), and preferable examples thereof are also the same as preferable examples of R^{a1} and R^{a2}.
R^{a32} and R^{a42} each represent -CN, -COOR^{a35}, -CONR^{a36}R^{a37}, -COR^{a38} or - SO₂R^{a39}. R^{a35} to R^{a39} each have the same meaning as those of R^{a25} to R^{a29} in formula (1-2), respectively, and the favorable examples thereof are also the same.

R^{a62} represents a hydrogen atom or a monovalent substituent. R^{a62} has the same meaning as that of R^{a6} in formula (1), and the favorable examples thereof are also the same.

Z^{a2} represents a group of atoms necessary for forming a 4- to 8-membered ring with the carbon atoms. Examples of the ring include a cyclopentene ring, a cyclohexene ring, a cycloheptene ring, a pyrroline ring, an imidazoline ring, a oxazoline ring, a thiazoline ring, an oxole ring, an azine ring, an oxazine ring, and a diazine ring. These rings may have a monovalent substituent. Examples of the substituent include examples of the monovalent substituent as described above. Further, these rings may form a ring-fused structure with an aromatic ring or the like.

In the ultraviolet absorbent represented by formula (1-3), it is preferable that R^{a32} is a substituent selected from -CN, -COOR^{a35} or -SO₂R^{a39}, and R^{a42} is a substituent selected from -CN, -COOR^{a35} or -SO₂R^{a39}. However, both the case in which both of R^{a32} and R^{a42} are -COO R^{a35}, and the case in which R^{a32} and R^{a42} are a combination of - CN and -COO R^{a35}, are excluded.
Further, with respect to the ultraviolet absorbent represented by the above-described formula (1-3), at least one of R^{a12} and R^{a22} is preferably a substituent selected from the group consisting of an allyl group, a hydroxyethyl group, and a benzyl group. Especially, it is preferable that both of R^{a31} and R^{a32} are the same substituent selected from these groups.

The ultraviolet absorbent represented by any one of the above-described formulae (1), (1-2) and (1-3) can be synthesized with reference to known patent bulletins and literatures, for example, from page 6, upper right column, line 1 to page 8, upper right column, line 15 in JP-A-51-56620, page 8, left column, line 1 to right column, line 3 in JP-A-53-128333; page 8, upper right column, line 10 to lower right column, line 5 in JP-A-62-56957; from page 10, column 20, line 19 to page 11, column 22, line 4 in JP-B-1-53455; page 10, upper left column, lines 6 to 18 in JP-A-4-257486; page 66, paragraph No. 0115 to paragraph No. 0117 in Japanese Patent Application National phase Publication No. 2005-538072; and Experimental Section of J. Am. Chem. Soc., 1247.

Hereinafter, specific examples of the ultraviolet absorbent represented by any one of formulae (1), (1-2) and (1-3) for use in the present invention will be shown, but the present invention should not be considered to be limited thereto.

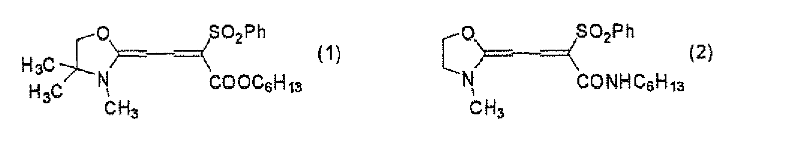

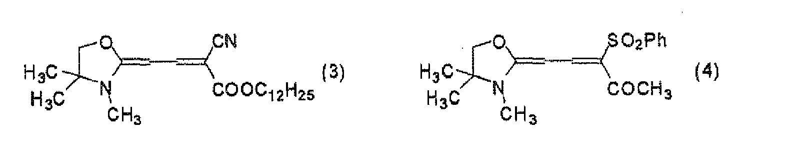

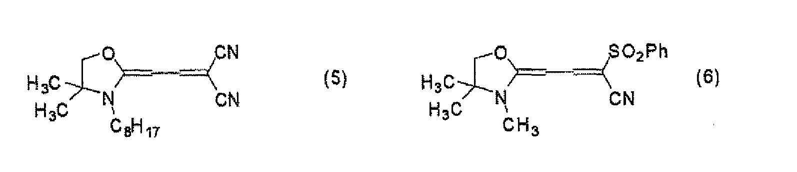

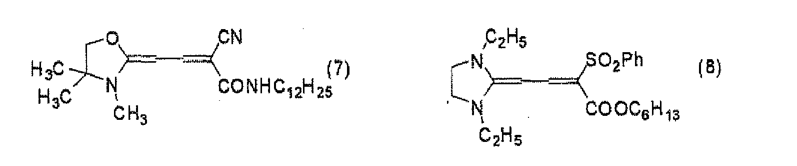

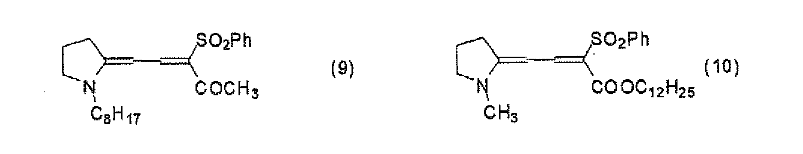

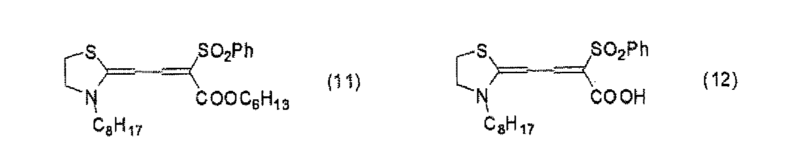

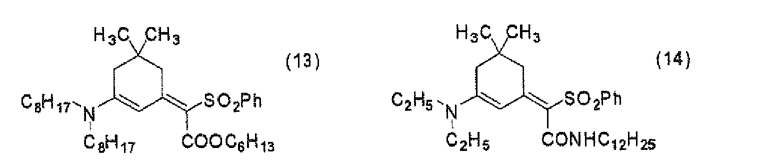

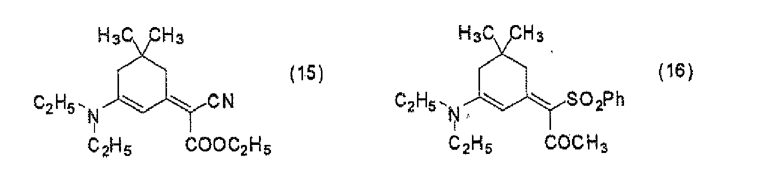

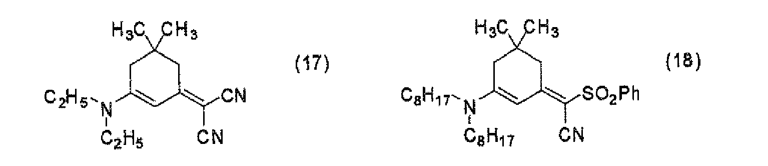

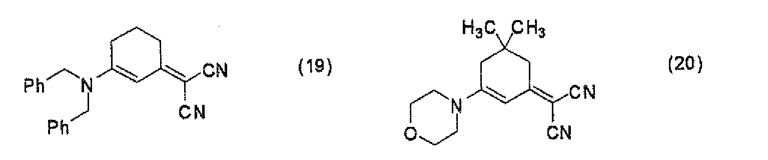

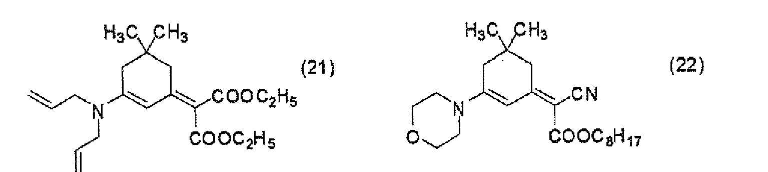

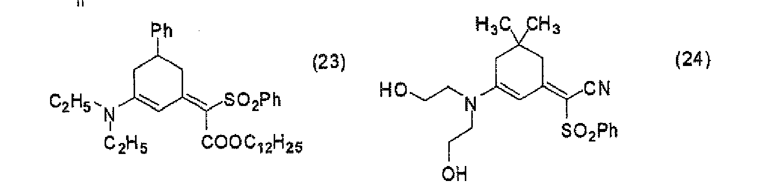

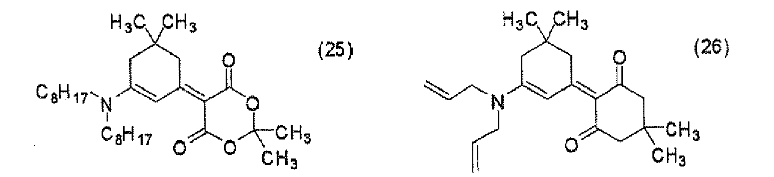

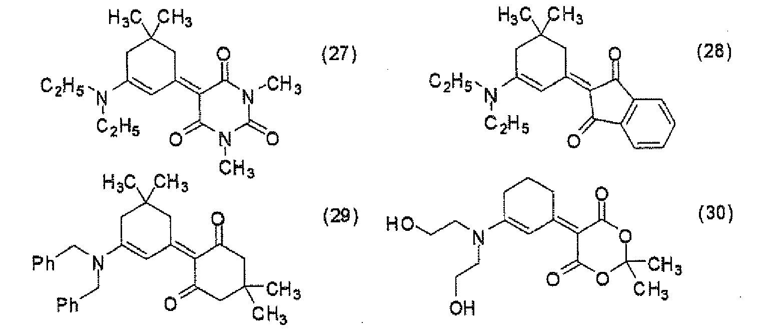

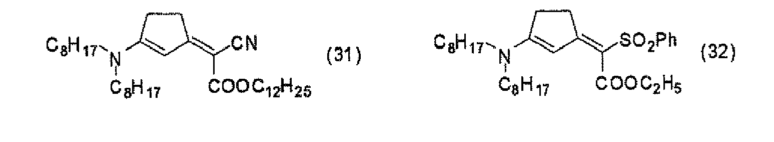

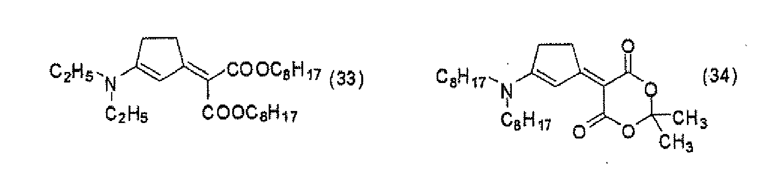

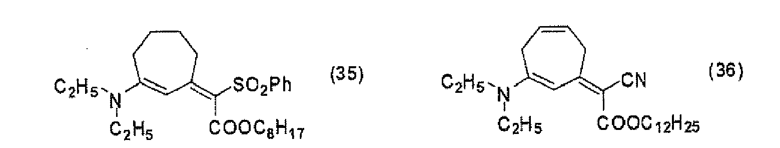

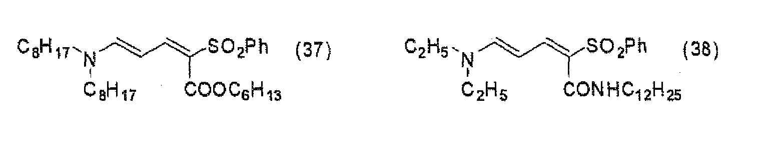

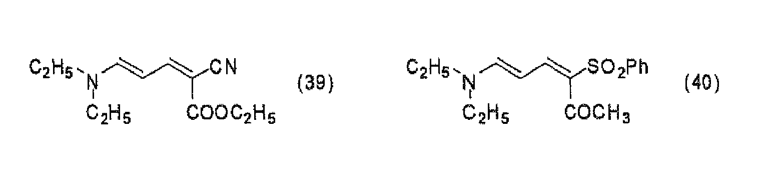

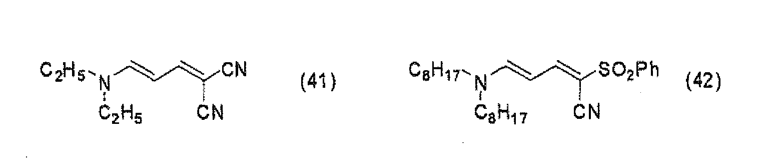

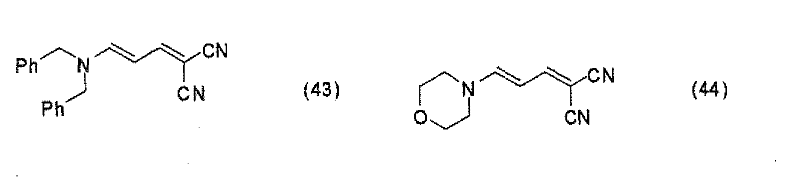

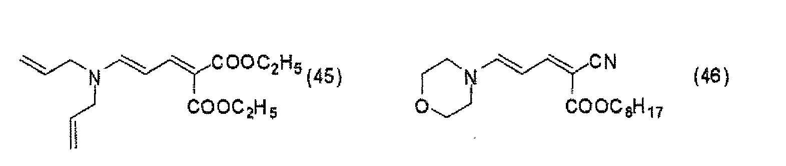

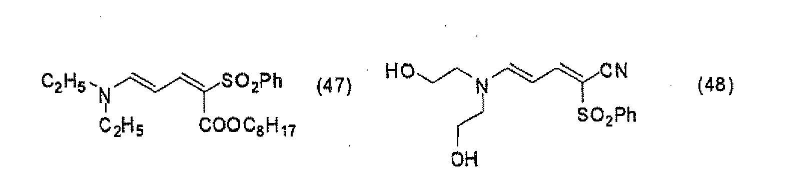

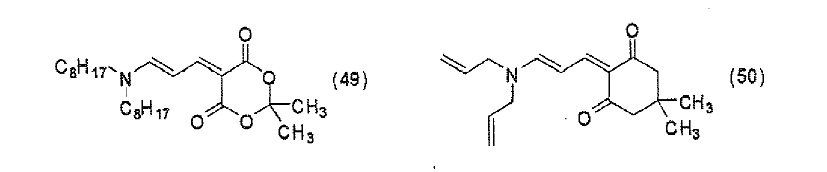

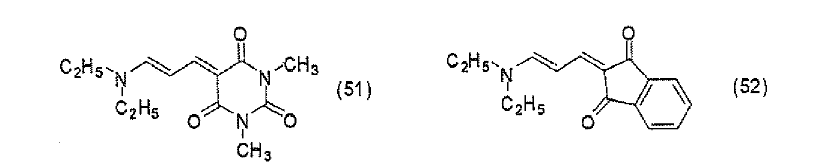

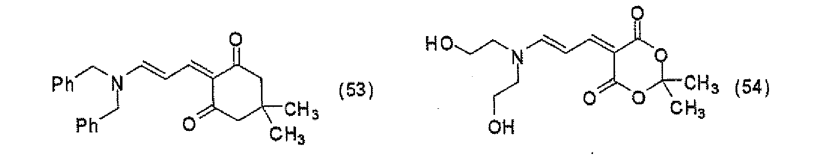

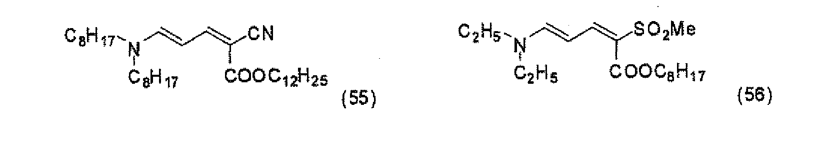

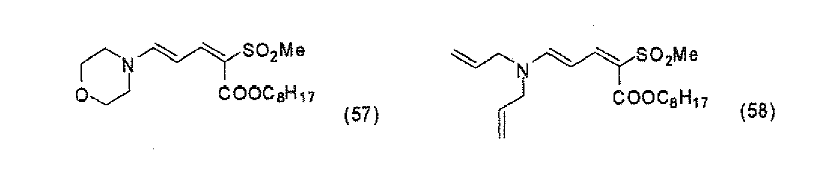

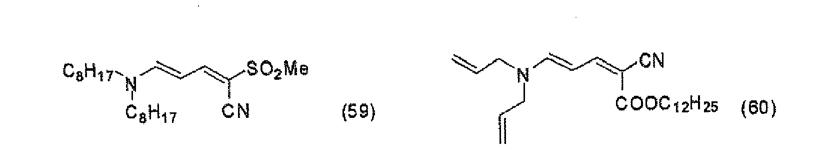

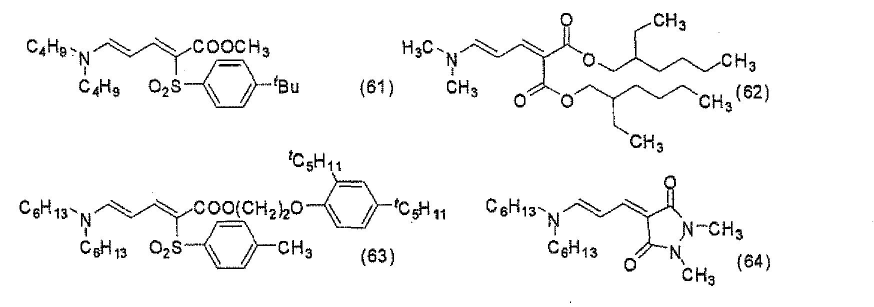

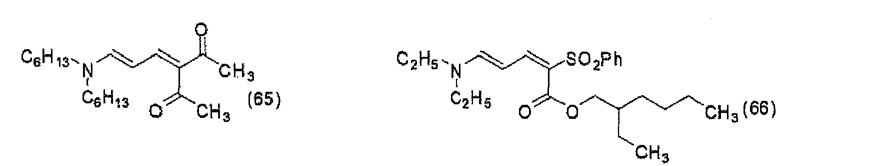

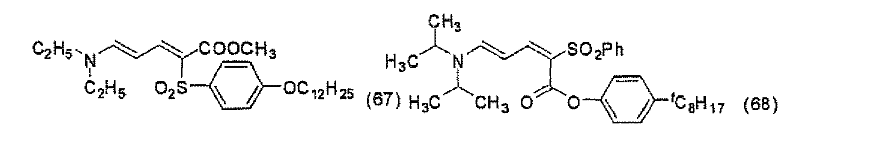

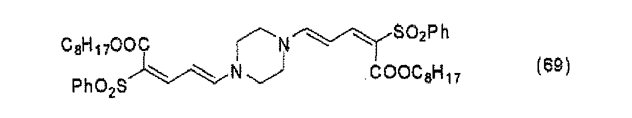

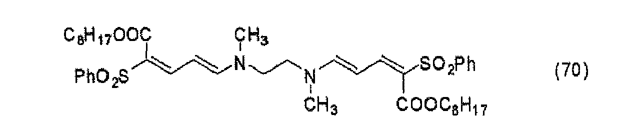

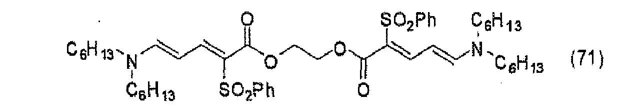

The ultraviolet absorbent represented by any one of formulae (1), (1-2) and (1-3) for use in the present invention may have a tautomer, depending on its structure and the environment to which the compound is exposed. In the present specification, only a typical tautomer is described, but the other tautomer different from that described in the present specification are also included in the compound of the present invention.

The ultraviolet absorbent represented by any one of formulae (1), (1-2) and (1-3) for use in the present invention may have an isotopic element (such as ²H, ³H, ¹³C, ¹⁵N, ¹⁷O, or ¹⁸O).

A polymer having the structure of the ultraviolet absorbent represented by any one of formulae (1), (1-2), and (1-3) above in its repeating unit as the ultraviolet absorptive group can also be used favorably in the present invention. Hereinafter, examples of the repeating unit containing the structure of the ultraviolet absorbent represented by formula (1), (1-2), or (1-3) above will be shown.

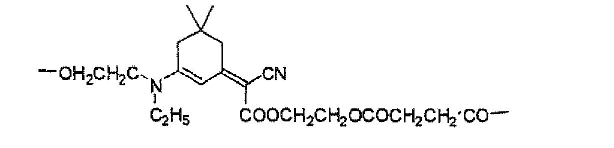

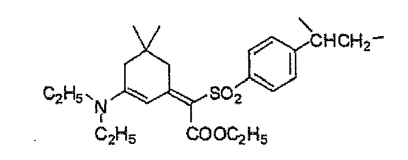

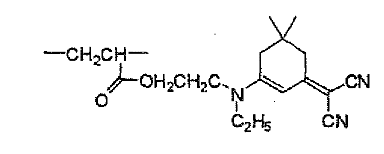

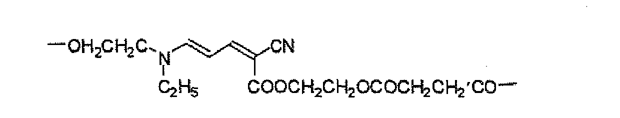

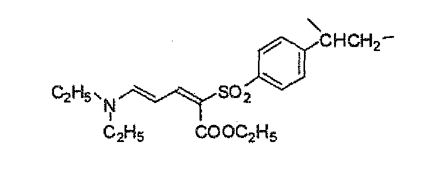

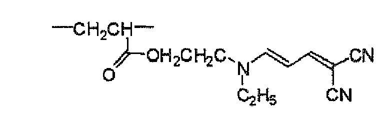

The polymer may be a homopolymer having one kind of repeating unit or a copolymer having two or more kinds of repeating units. It may be a copolymer having another repeating unit additionally. Hereinafter, examples of the other repeating unit are shown.

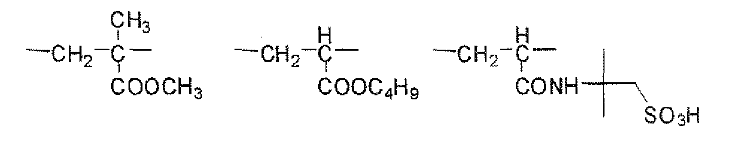

Examples of the polymer having the structure of the ultraviolet absorbent in the repeating unit are described, for example, in JP-B-1-53455 ("JP-B" means examined Japanese patent publication), left column, line 39 to p. 12, right column, line 38; JP-A-61-189530, p. 3, right upper column, line 8 to p. 7, left lower column, line 15; JP-A-62-260152, right lower column, line 3 to p. 12, right upper column, line 10; JP-A-63-53544, left upper column, line 1 to p. 15, right lower column, line 19; JP-A-63-56651, p. 2, right upper column, line 10 to p. 14, left lower column, line 3; EP Patent No. 27242, p. 4, line 29 to p. 16, line 34; and WO 2006/009451 pamphlet, p. 3, line 28 to p. 26, line 1. The polymer can be prepared with reference to the methods described in these Patent Documents.

As the ultraviolet absorbent A represented by any one of formulae (1), (1-2) and (1-3) for use in the present invention, the exemplified compound (47) is most preferable.

A content of the above-described ultraviolet absorbent A in the ultraviolet absorbent composition of the present invention is in the range of preferably from 5 to 85% by mole, and more preferably from 20 to 70% by mole.

Next, the ultraviolet absorbent B represented by formula (2-a) or (2-b) for use in the present invention will be described.

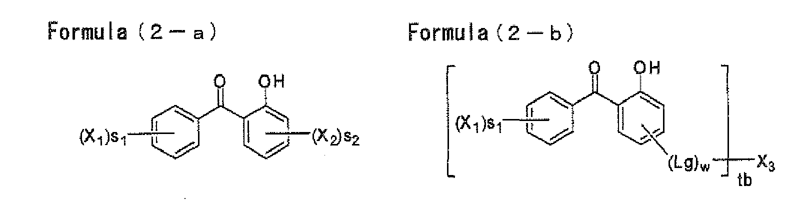

(In formula (2-a), X₁ and X₂ each independently represent a hydrogen atom, a halogen atom, a hydroxyl group, a substituted or unsubstituted alkyl group, a substituted or unsubstituted phenyl group, a substituted or unsubstituted alkoxy group, a substituted or unsubstituted alkylsulfonyl group, a substituted or unsubstituted aryl-sulfonyl group, a sulfonic acid group, a substituted or unsubstituted alkyloxycarbonyl group, a substituted or unsubstituted aryloxycarbonyl group or a substituted or unsubstituted amino group; and s₁ and s₂ each independently represent an integer of 1 to 3.)

(In formula (2-b), X₁ represents a hydrogen atom, a halogen atom, a hydroxyl group, a substituted or unsubstituted alkyl group, a substituted or unsubstituted phenyl group, a substituted or unsubstituted alkoxy group, a substituted or unsubstituted alkylsulfonyl group, a substituted or unsubstituted arylsulfonyl group, a sulfonic acid group, a substituted or unsubstituted alkyloxycarbonyl group, a substituted or unsubstituted aryloxycarbonyl group, or a substituted or unsubstituted amino group; s1 represents an integer of 1 to 3;
Lg represents a divalent substituent or a single bond; w represents 0 or 1;
tb represents 1 or 2; and when tb is 1, X₃ represents a hydrogen atom, a halogen atom, a hydroxyl group, a substituted or unsubstituted alkyl group, a substituted or unsubstituted phenyl group, a substituted or unsubstituted alkoxy group, a substituted or unsubstituted alkylsulfonyl group, a substituted or unsubstituted arylsulfonyl group, a sulfonic acid group, a substituted or unsubstituted alkyloxycarbonyl group, a substituted or unsubstituted aryloxycarbonyl group, or a substituted or unsubstituted amino group; and when tb is 2, X₃ represents a divalent substituent.)

(Formula (2-a))
X₁ and X₂ each independently represent a hydrogen atom, a halogen atom, a hydroxyl group, a substituted or unsubstituted alkyl group, a substituted or unsubstituted phenyl group, a substituted or unsubstituted alkoxy group, a substituted or unsubstituted alkylsulfonyl group, a substituted or unsubstituted arylsulfonyl group, a sulfonic acid group, a substituted or unsubstituted alkyloxycarbonyl group, a substituted or unsubstituted aryloxycarbonyl group, or a substituted or unsubstituted amino group. X₁ and X₂ each are preferably a hydrogen atom, a chlorine atom, a hydroxyl group, a substituted or unsubstituted alkyl group having 1 to 18 carbon atoms, a substituted or unsubstituted aryl group having 6 to 24 carbon atoms, a substituted or unsubstituted alkoxy group having 1 to 18 carbon atoms, an alkyloxycarbonyl group having 2 to 18 carbon atoms, an aryloxycarbonyl group having 7 to 24 carbon atoms, a sulfonic acid group or a substituted or unsubstituted amino group having 1 to 16 carbon atoms; and particularly preferably a hydrogen atom, a hydroxyl group, a substituted or unsubstituted alkoxy group having 1 to 18 carbon atoms, a sulfonic acid group or a substituted or unsubstituted amino group having 1 to 16 carbon atoms.

(Formula (2-b))
tb is 1 or 2, w is 0 or 1, and s1 is an integer of 1 to 3.
The substituent X₁ represents a hydrogen atom, a halogen atom, a hydroxyl group, a substituted or unsubstituted alkyl group, a substituted or unsubstituted phenyl group, a substituted or unsubstituted alkoxy group, a substituted or unsubstituted alkylsulfonyl group, a substituted or unsubstituted arylsulfonyl group, a sulfonic acid group, a substituted or unsubstituted alkyloxycarbonyl group, a substituted or unsubstituted aryloxycarbonyl group, or a substituted or unsubstituted amino group.

X₁ is preferably a hydrogen atom, a chlorine atom, a hydroxyl group, a substituted or unsubstituted alkyl group having 1 to 18 carbon atoms, a substituted or unsubstituted aryl group having 6 to 24 carbon atoms, a substituted or unsubstituted alkoxy group having 1 to 18 carbon atoms, a substituted or unsubstituted alkyloxycarbonyl group having 2 to 18 carbon atoms, an aryloxycarbonyl group having 7 to 24 carbon atoms, a sulfonic acid group or a substituted or unsubstituted amino group having 1 to 16 carbon atoms; and particularly preferably a hydrogen atom, a hydroxyl group, a substituted or unsubstituted alkoxy group having 1 to 18 carbon atoms, a sulfonic acid group or a substituted, or unsubstituted amino group having 1 to 16 carbon atoms.

-Lg- represents a divalent linking group or a single bond. w represents an integer of 0 or 1. The case where w is 0 (zero) means that X₃ directly bonds with the benzene ring without involving Lg, that is, -Lg- represents a single bond.
The divalent linking group -Lg- is explained. The divalent linking group Lg is a divalent substituent represented by formula (b).

Formula (b) -(Lg₁)_{mg1}-(Lg₂)_{mg2}-(Lg₃)_{mg3}-(Lg₄)_{mg4}-(Lg₅)_{mg5}-

In formula (b), mg1, mg2, mg3, mg4 and mg5 each represent an integer of 0 to 2.
Lg₁, Lg₂, Lg₃, Lg₄ and Lg₅ each independently represent -CO-, -O-, -SO₂-, -SO-, -NRg_{L}-, a substituted or unsubstituted divalent alkyl group, a substituted or unsubstituted divalent alkenyl group, or a substituted or unsubstituted divalent aryl group. Rg_{L} represents a hydrogen atom, a substituted or unsubstituted alkyl group or a substituted or unsubstituted aryl group.

Examples of Rg_{L} include a hydrogen atom, a methyl group, an ethyl group, a propyl group, a hexyl group, an octyl group, a phenyl group and a naphthyl group.
The group may be substituted with one or more monovalent substituents at any position of the alkyl or aryl groups. The monovalent substituent is, for example, the monovalent substituent described above. Rg_{L} is preferably a substituted or unsubstituted alkyl group having 3 to 20 carbon atoms, or a substituted or unsubstituted aryl group having 6 to 14 carbon atoms; and more preferably a substituted or unsubstituted alkyl group having 6 to 12 carbon atoms, or a substituted or unsubstituted aryl group having 6 to 10 carbon atoms.

That is, preferred examples of the divalent substituent -Lg- include -O-, -O-CO-C₂H₄-CO-O-, -O-C₄H₈-O-, -O-CO-C₃H₆-, -NH-CO-C₃H₆-CO-NH-, -NH-CO-C₄H₈-, -CH₂-, -C₂H₄-, -C₃H₆-, -C₄H₈-, -C₅H₁₀-, -C₈H₁₆-, -C₄H₈-CO-O-, -C₆H₄-C₆H₄- and -NH-SO₂-C₃H₆-.

When tb is 1, X₃ represents a hydrogen atom, a halogen atom, a hydroxyl group, a substituted or unsubstituted phenyl group, a substituted or unsubstituted alkyl group, a substituted or unsubstituted alkoxy group, a substituted or unsubstituted alkylsulfonyl group, a substituted or unsubstituted arylsulfonyl group, a sulfonic acid group, a substituted or unsubstituted alkyloxycarbonyl group, a substituted or unsubstituted aryloxycarbonyl group or a substituted or unsubstituted amino group.
When tb is 1, X₃ is preferably a hydrogen atom, a hydroxyl group, a chlorine atom, a substituted or unsubstituted alkyl group having 1 to 18 carbon atoms, a substituted or unsubstituted aryl group having 6 to 24 carbon atoms, a substituted or unsubstituted alkoxy group having 1 to 18 carbon atoms, a substituted or unsubstituted alkyloxycarbonyl group having 2 to 18 carbon atoms, an aryloxycarbonyl group having 7 to 24 carbon atoms, a sulfonic acid group, or a substituted or unsubstituted amino group having 1 to 16 carbon atoms.
X₃ is particularly preferably a hydrogen atom, a hydroxyl group, a substituted or unsubstituted alkoxy group having 1 to 18 carbon atoms, a sulfonic acid group, or a substituted or unsubstituted amino group having 1 to 16 carbon atoms.

When tb is 2, X₃ represents a divalent substituent.
When tb is 2, examples of X₃ include the same examples as the above-described divalent substituent -L-. When tb is 2, X₃ is preferably -CH₂-, -C₄H₈-, -O-C₄H₈-O-, -O-CO,C₂H₄-CO-O-, or -NH-CO-C₃H₆-CO-NH-.

In formula (2-b), tb is particularly preferably 1.
That is, the component of formula (2-b) is preferable combined as follows.
Specifically, when tb is 1, a preferable combination is that
X₁ is a hydrogen atom, a hydroxyl group, a substituted or unsubstituted alkoxy group having 1 to 18 carbon atoms, a sulfonic acid group, or a substituted or unsubstituted amino group having 1 to 16 carbon atoms;
Lg is -O-, -O-CO-C₂H₄-CO-O-, -O-C₄H₈-O-, -O-CO-C₃H₆-, -NH-CO-C₃H₆-CO-NH-, -NH-CO-C₄H₈-, -CH₂-, -C₂H₄-, -C₃H₆-, -C₄H₈-, -C₅H₁₀-, -C₈H₁₆-, -C₄H₈-COO-, -C₆H₄-C₆H₄-, -NH-SO₂-C₃H₆-, or a single bond; and
X₃ is a hydrogen atom, a hydroxyl group, a chlorine atom, a substituted or unsubstituted alkyl group having 1 to 18 carbon atoms, a substituted or unsubstituted aryl group having 6 to 24 carbon atoms, a substituted or unsubstituted alkoxy group having 1 to 18 carbon atoms, a substituted or unsubstituted alkyloxycarbonyl group having 2 to 18 carbon atoms, an aryloxycarbonyl group having 7 to 24 carbon atoms, a sulfonic acid group, or a substituted or unsubstituted amino group having 1 to 16 carbon atoms.

When tb is 2, a preferable combination is that
X₁ is a hydrogen atom, a hydroxyl group, a substituted or unsubstituted alkoxy group having 1 to 18 carbon atoms, a sulfonic acid group, or a substituted or unsubstituted amino group having 1 to 16 carbon atoms;
Lg is -O-, -O-CO-C₂H₄-CO-O-, -O-C₄H₈-O-, -O-CO-C₃H₆-, -NH-CO-C₃H₆-CO-NH-, -NH-CO-C₄H₈-, -CH₂-, -C₂H₄-, -C₃H₆-, -C₄H₈-, -C₅H₁₀-, -C₈H₁₆-, -C₄H₈-CO-O-, -C₆H₄-C₆H₄-, -NH-SO₂-C₃H₆-, or a single bond; and X₃ is -CH₂-, -C₄H₈-, -O-C₄H₈-O-, -O-CO-C₂H₄-CO-O-, or -NH-CO-C₃H₆-CO-NH-.

Typical examples of the ultraviolet absorbent B represented by formula (2-a) or (2-b) include 2,4-dihydroxybenzophenone, 2-hydroxy-4-methoxybenzophenone, 2-hydroxy-4-octyloxybenzophenone, 2-hydroxy-4-decyloxybenzophenone, 2-hydroxy-4-dodecyloxybenzophenone, 2-hydroxy-4-benzyloxybenzophenone, 2-hydroxy-4-(2-hydroxy-3-methacryloxypropoxy)benzophenone, 2-hydroxy-4-methoxy-5-sulfobenzophenone, 2-hydroxy-4-methoxy-5-sulfobenzophenone trihydrate, 2-hydroxy-4-methoxy-2'-carboxybenzophenone, 2-hydroxy-4-octadecyloxybenzophenone, 2-hydroxy-4-diethylamino-2'-hexyloxycarbonylbenzophenone, 2,2'-dihydroxy-4-methoxybenzophenone, 2,2',4,4'-tetrahydroxybenzophenone, 2,2'-dihydroxy-4,4'-dimethoxybenzophenone, 1,4-bis(4-benzyloxy-3-hydroxyphenoxy)butane, hexyl 2-(4-diethylamino-2-hydroxybenzoyl)benzoate, 1,4-bis(4-benzoyl-3-hydroxyphenoxy)butane, 2-hydroxy-4-octoxybenzophenone, and 2-hydroxy-4-methoxybenzophenone-5-sulfonic acid.

As the ultraviolet absorbent B represented by formula (2-a) or (2-b), hexyl 2-(4-diethylamino-2-hydroxybenzoyl)benzoate, 2,2'-dihydroxy-4,4'-dimethoxybenzophenone, 2-hydroxy-4-methoxybenzophenone, 1,4-bis(4-benzoyl-3-hydroxyphenoxy)butane, 2-hydroxy-4-octoxybenzophenone, 2-hydroxy-4-methoxybenzophenone-5-sulfonic acid, 2,2',4,4'-tetrahydroxybenzophenone and 2,4-dihydroxybenzophenone are further preferable.

Further preferred examples thereof include:
(B-1) 2,2'-hydroxy-4,4'-dimethoxybenzophenone;
(B-2) 2-hydroxy-4-methoxybenzophenone;
(B-3) 2,2',4,4'- tetrahydroxybenzophenone;
(B-4) 2,4-dihydroxybenzophenone;
(B-5) 2-hydroxy-4-octoxybenzophenone; and
(B-6) 1,4-bis(4-benzoyl-3-hydroxyphenoxy)butane.
Furthermore preferred examples thereof include 2-hydroxy-4-methoxybenzophenone and 2,4-dihydroxybenzophenone; and most preferred examples thereof include 2,4-dihydroxybenzophenone.

The compound (B-1) has the following structure, and is commercially available as trade name Uvinul 3049 (manufactured by BASF Japan Ltd.).
The compound (B-2) has the following structure, and is commercially available as trade name Visorb 110 (manufactured by KYODO CHEMICAL CO., LTD.).
The compound (B-3) has the following structure, and is commercially available as trade name Uvinul 3050 (manufactured by BASF Japan Ltd.).
The compound (B-4) has the following structure, and is commercially available as trade name Uvinul 3000 (manufactured by BASF Japan Ltd.).
The compound (B-5) has the following structure, and is commercially available as trade name Chimassorb 81 (manufactured by Ciba Specialty Chemicals).
The compound (B-6) has the following structure, and is commercially available as trade name Seesorb 151 (manufactured by SHIPRO KASEI KAISHA LTD.).

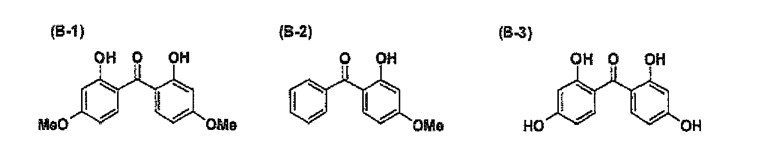

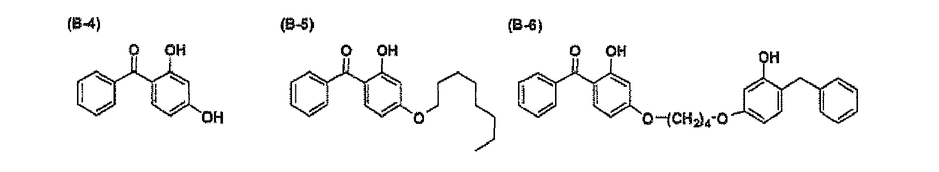

The ultraviolet absorbent B preferably shows 30% or more, more preferably of 50% or more, of absorbance at 320 nm of the absorbance at the absorption maximum wavelength. If the absorbance at 320 nm is less than 30% of the absorbance at the absorption maximum wavelength, a wavelength range that cannot be entirely covered by both the ultraviolet absorbent A and the ultraviolet absorbent B generates in the ultraviolet range (250 nm to 400 nm). The absorption maximum wavelength of the ultraviolet absorbent B is preferably 350 nm or less.

As the ultraviolet absorbent B that has an absorption maximum wavelength of 350 nm or less and showing 30% or more of absorbance at 320 nm of the absorbance at the absorption maximum wavelength, two types of the ultraviolet absorbent, i.e., the ultraviolet absorbent B-(1) having an absorption maximum wavelength of 320 nm or less and the ultraviolet absorbent B-(2) having an absorption maximum wavelength of from 320 nm to 350 nm, are considered as described above. Both are preferable.

For example, it is especially preferable that the ultraviolet absorbent B-(1) having an absorption maximum wavelength of 320 nm or less and showing 30% or more of absorbance at 320 nm is used when any other short-wavelength ultraviolet-absorbing element is not present at the time of, for example, kneading the ultraviolet absorbent into a plastic molding, or a polymer. On account that any other element capable of absorbing a short-wavelength ultraviolet of 300 nm or less is not present at the time of kneading the ultraviolet absorbent into the plastic molding, or the polymer, usage of the ultraviolet absorbent B-(1) enables to prevent the plastic molding itself and its content from ultraviolet lays without another short-wavelength ultraviolet range-absorbing filter. Further, such unexpected effects that both compatibility with respect to a polymer and light fastness are improved are achieved by using the ultraviolet absorbent A together.

It is especially preferable that the ultraviolet absorbent B-(2) having an absorption maximum wavelength of 320 nm or more and 350 nm or less and showing 30% or more of absorbance at 320 nm is used when another short-wavelength ultraviolet-absorbing element is present at the time of, for example, coating the ultraviolet absorbent on a glass film or dissolving the ultraviolet absorbent with a polymer to coat on a substrate. The ultraviolet absorbent B-(2) is excellent in shielding efficiency (capability) light of around 320 nm, and is capable of efficiently absorbing a short-wavelength ultraviolet range of 300 nm or less. However, it is sometimes difficult for the ultraviolet absorbent B-(2) to absorb the short-wavelength ultraviolet range. Accordingly, it is preferable that the ultraviolet absorbent B-(2) is coated on a polymer or a glass substrate capable of shielding efficiently the short-wavelength ultraviolet range and capable of using as a filter. Further, in the solvent-coating process, improvement of both solubility to the solvent (for example, ethyl acetate, methylethyl ketone, toluene) and light fastness are unexpectedly achieved by using the ultraviolet absorbent B-(2) in combination with the ultraviolet absorbent A that is used in the present invention.

A content of the above-described ultraviolet absorbent B in the ultraviolet absorbent composition of the present invention is in the range of preferably from 15 to 95 mol% by mole, and more preferably from 30 to 80 mol% by mole.

Next, the compound C for use in the present invention will be described in detail.
The compound C for use in the present invention is at least one kind of compound selected from a singlet oxygen scavenger, an antioxidant and a radical trapping agent. In the present specification, the term "a singlet oxygen trapping agent" refers to a compound or composition that traps singlet oxygen. The singlet oxygen quencher may be selected from quenchers mentioned in, for example, already known publications such as patent specifications. Specific examples thereof include those mentioned in JP-A-58-175693, JP-A-59-81194, JP-A-60-18387, JP-A-60-19586, JP-A-60-19587, JP-A-60-35054, JP-A-60-36190, JP-A-60-36191, JP-A-60-44554, JP-A-60-44555, JP-A-60-44389, JP-A-60-44390, JP-A-60-54892, JP-A-60-47069, JP-A-63-209995, JP-A-4-25492, JP-B-1-38680, JP-B-6-26028, German Patent No. 350399, and p. 1141 of the October, 1992 issue of Journal of the Chemical Society of Japan.
In the present specification, the term "an antioxidantt" refers to a compound or composition that prevents oxidation. For example, it is possible to use materials as described in Kobunshi Zairyo no Rekka · Henshoku mekanizumu to sono Anteika Gijutsu-Nouhau -Syu (Mechanism of Deterioration · Discoloration of Polymeric materials and Their Stabilization Technique-Collection of Know-how), published by Kabushiki kaisha Gijutsu Jyoho Kyokai (Gijutsu Jyoho Kyokai, 2006), pages 42 to 71.
In the present specification, the term "a radical trapping agent" refers to a compound or composition that traps various kinds of radicals. For example, it is possible to use materials as described in Saishin Tenkazai Zensyu-Kinosei Fuyo no tameno Saiteki Haigo · Hyoka (Complete work of Current Additives-Optimal Composition for Imparting Functionality·Evaluation-), published by Kabushiki kaisha Gijutsu Jyoho Kyokai (Gijutsu Jyoho Kyokai, 2006), pages 23 to 37.
Examples of such compound C include Seesorb 612 NH (trade name, Shipro Co., Ltd.), organic nickel-series compounds such as Irgastab 2002 (Ciba Specialty Chemicals), hindered amine-series compounds such as Tinuvin 744 (Ciba Specialty Chemicals), phenol-series compounds such as Irganox 1076 (Ciba Specialty Chemicals), amine-series compounds such as Sumilizer 9A (Sumitomo Chemical Co., Ltd.,), sulfur-containing compounds such as Sumilizer TPM (Sumitomo Chemical Co., Ltd.), and phosphorus-containing compounds such as Sumilizer TPPR (Sumitomo Chemical Co., Ltd.) (each trade name). The composition of the present invention contains at least one of these compounds.

A content of the compound C in the composition of the present invention is in the range of preferably from 0.01 to 10, more preferably from 0.02 to 7, further preferably from 0.02 to 5, and still further preferably from 0.02 to 2, in terms of a ratio of a total number of moles of the compound C to the sum of mole numbers of the ultraviolet absorbent A and mole numbers of the ultraviolet absorbent B.

The compound C is preferably a compound represented by formula (3-a) or (3-b), particularly preferably a compound represented by formula (3-b). Next, the compound represented by formula (3-a) or (3-b) will be described in detail.

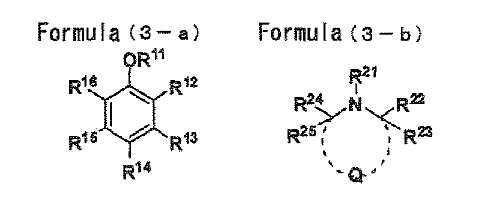

[In formula (3-a), R¹¹ represents a hydrogen atom, an aliphatic group, an aromatic group, a heterocyclic group bound via a carbon atom, or a hydrolysable protective group; R¹², R¹³, R¹⁴, R¹⁵ and R¹⁶ each independently represent a hydrogen atom or a substituent; and R¹¹ and R¹², R¹² and R¹³, R¹³ and R¹⁴, R¹⁴ and R¹⁵, R¹⁵ and R¹⁶ and/or R¹⁶ and R¹¹ may bond to each other to form a ring; and
in formula (3-b), R²¹ represents a hydrogen atom, an aliphatic group, an acyl group, a sulfonyl group, a sulfinyl group, an oxy radical group or a hydroxyl group; Q represents a group of nonmetallic atoms necessary for forming a 5-, 6- or 7-membered ring; R²², R²³, R²⁴ and R²⁵ each independently represents a hydrogen atom, an aliphatic group, an aromatic group, or a heterocyclic group bound via a carbon atom; and R²¹ and R²², R²² and R²³, R²⁴ and R²⁵ and/or R²¹ and R²⁴ may bond to each other to form a ring.]

In formula (3-a), the hydrolysable protective group represented by R¹¹ is a silyl group, a phosphate group, or a group represented by the following formula (4):

Formula (4) R¹¹¹-Y¹¹¹-Z¹¹¹-

wherein R¹¹¹ represents an aliphatic group, an aromatic group, or a heterocyclic group bound via a carbon atom; Y¹¹¹ represents a single bond, -O-, -S-, -N(R¹¹²)-, -C-, or its bound group; R¹¹² represents a hydrogen atom, an aliphatic group, an aromatic group, a heterocyclic group bound via a carbon atom, an acyl group, or a sulfonyl group; and Z¹¹¹ represents -CO- or -SO₂-.

R¹¹ is preferably a hydrogen atom, an aliphatic group having 1 to 20 carbon atoms, an aromatic group having 6 to 20 carbon atoms, a heterocyclic group having 2 to 20 carbon atoms bound via a carbon atom, or a hydrolysable protective group having 1 to 20 carbon atoms, more preferably a hydrogen atom, an aliphatic group having 1 to 10 carbon atoms, or a hydrolysable protective group having 1 to 10 carbon atoms, still more preferably a hydrogen atom, an aliphatic group having 1 to 8 carbon atoms, a silyl group having 1 to 10 carbon atoms, a phosphate group having 1 to 10 carbon atoms, or a hydrolysable protective group having 1 to 10 carbon atoms bound via a carbonyl group, further more preferably a hydrogen atom, an aliphatic group having 1 to 4 carbon atoms, a silyl group having 3 to 6 carbon atoms, a phosphate group having 2 to 8 carbon atoms, or a hydrolysable protective group having 1 to 8 carbon atoms bound via a carbonyl group, even more preferably a hydrogen atom, a trimethylsilyl group, a dimethyl or diethyl phosphate group, a benzoyl group, or an acetyl group, most preferably a hydrogen atom.

R¹², R¹³, R¹⁴, R¹⁵ and R¹⁶ each are preferably a hydrogen atom, a halogen atom, an alkyl group, an alkenyl group, an alkynyl group, an aryl group, a cyano group, a hydroxyl group, a carboxyl group, an alkoxy group, an aryloxy group, a silyloxy group, an acyloxy group, a carbamoyloxy group, an alkoxycarbonyloxy group, an aryloxycarbonyloxy group, an ammo group, an acylamino group, an aminocarbonylamino group, an alkoxycarbonylamino group, an aryloxycarbonylamino group, a sulfamoylamino group, an alkyl- or aryl-sulfonylamino group, a mercapto group, an alkylthio group, an arylthio group, a sulfamoyl group, a sulfo group, an alkyl- or aryl-sulfinyl group, an alkyl- or aryl-sulfonyl group, an acyl group, an aryloxycarbonyl group, an alkoxycarbonyl group, a carbamoyl group, an imido group, a phosphino group, a phosphinyl group, a phosphinyloxy group, a phosphinylamino group or a silyl group; further preferably a hydrogen atom, a halogen atom, an alkyl group, an alkenyl group, an aryl group, a cyano group, a hydroxyl group, a carboxyl group, an alkoxy group, an aryloxy group, a silyloxy group, an acyloxy group, a carbamoyloxy group, an alkoxycarbonyloxy group, an aryloxycarbonyloxy group, an amino group, an acylamino group, an alkylthio group, an arylthio group, an acyl group, an aryloxycarbonyl group, an alkoxycarbonyl group, a carbamoyl group, or a silyl group; furthermore preferably a hydrogen atom, a halogen atom, an alkyl group, an aryl group, a hydroxyl group, an alkoxy group, an acyloxy group, an acylamino group, a carbamoyloxy group or an alkylthio group; furthermore preferably a hydrogen atom, a halogen atom, an alkyl group, a hydroxyl group, an alkoxy group or an acylamino group; and most preferably a hydrogen atom or an alkyl group. It is preferably that one or both of R¹² and R¹⁶ is/are a tertiary alkyl group.

In the formula (3-b), R²¹ is preferably a hydrogen atom, an aliphatic group having 1 to 10 carbon atoms, an acyl group having 2 to 10 carbon atoms, an oxy radical group or a hydroxyl group; more preferably a hydrogen atom, an alkyl group having 1 to 3 carbon atoms, an acyl group having 2 to 7 carbon atoms, an oxy radical group or a hydroxyl group; further preferably a hydrogen atom, an acetyl group, an oxy radical group or a hydroxyl group; and most preferably a hydrogen atom. Each of R²², R²³, R²⁴ and R²⁵ is preferably a hydrogen atom or an aliphatic group having 1 to 10 carbon atoms; more preferably a hydrogen atom or an alkyl group having 1 to 5 carbon atoms; further more preferably a hydrogen atom or an alkyl group having 1 to 2 carbon atoms; and most preferably all of R²² to R²⁵ are a methyl group. Q is preferably a group of nonmetallic atoms necessary for forming a 5- to 7-membered ring selected from a carbon atom, a hydrogen atom, an oxygen atom, a sulfur atom and a nitrogen atom; more preferably a group of nonmetallic atoms necessary for forming a 5- to 7-membered ring selected from a carbon atom, a hydrogen atom, an oxygen atom and a nitrogen atom; further preferably a group of nonmetallic atoms necessary for forming a 5- to 7-membered ring selected from a carbon atom, a hydrogen atom and a nitrogen atom; and most preferably a group of nonmetallic atoms necessary for a piperidine ring.

Hereinafter, specific examples of the compound C represented by formula (3-a) or (3-b) will be shown, but the present invention should not be considered to be limited thereto.

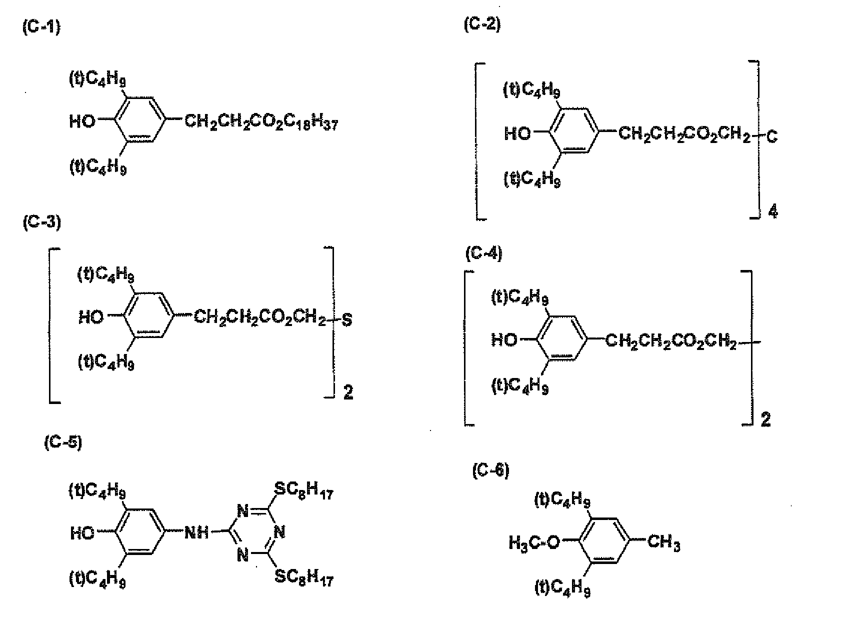

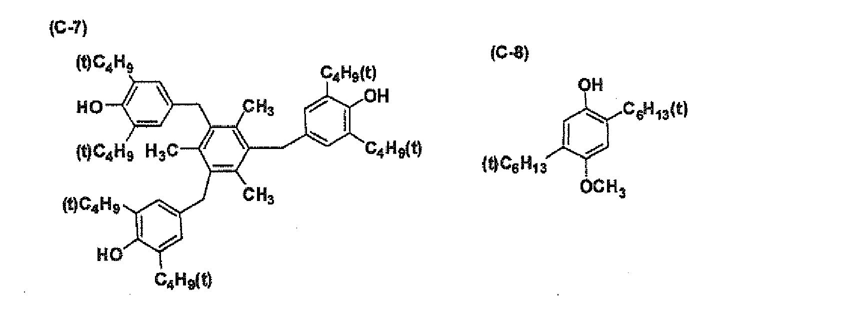

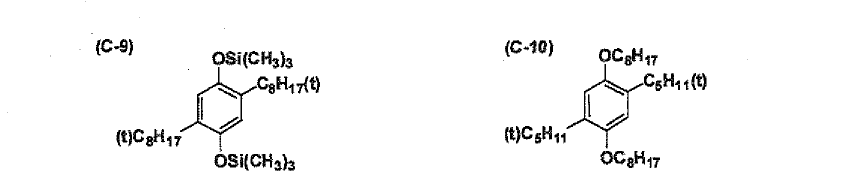

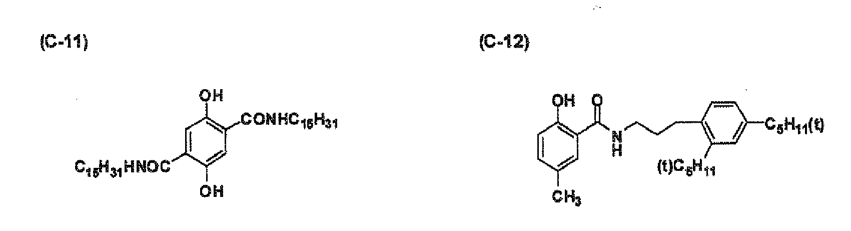

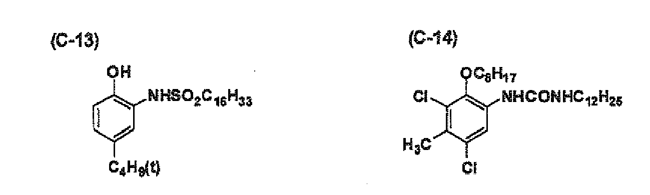

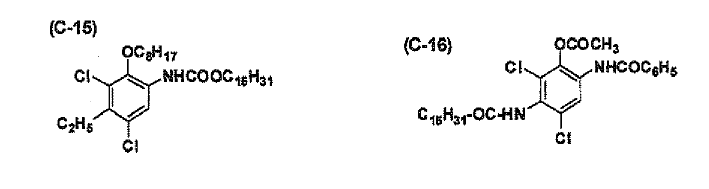

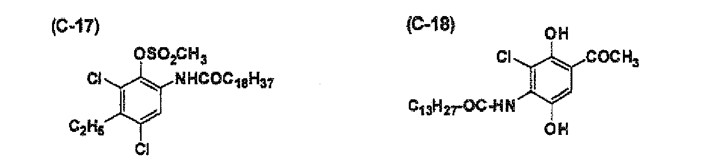

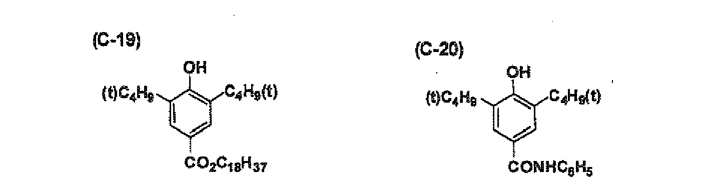

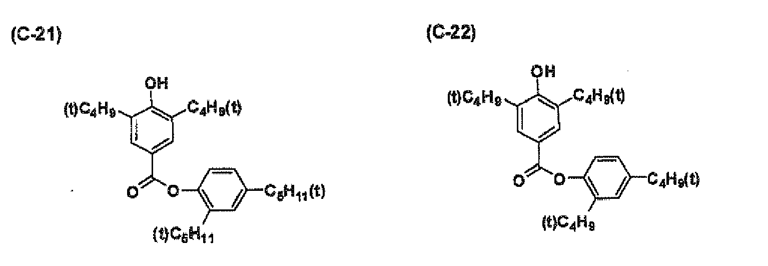

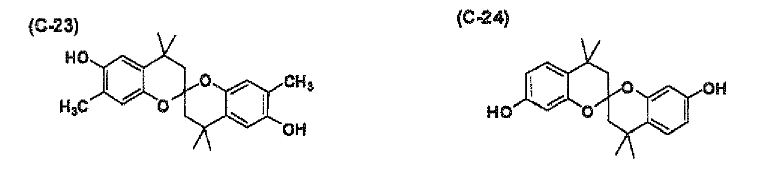

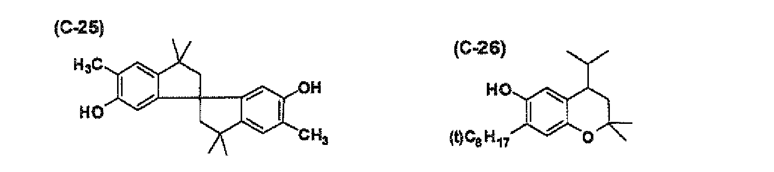

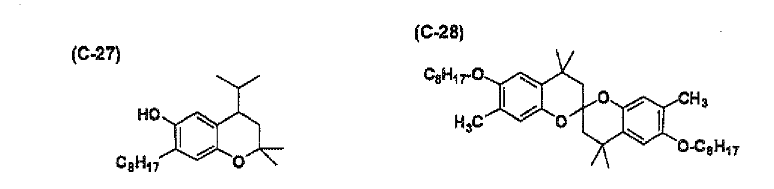

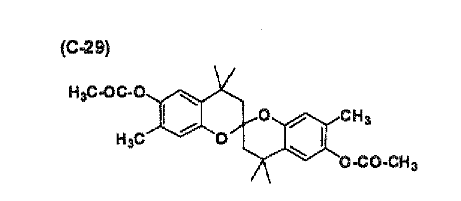

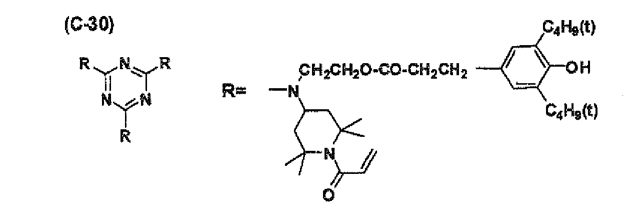

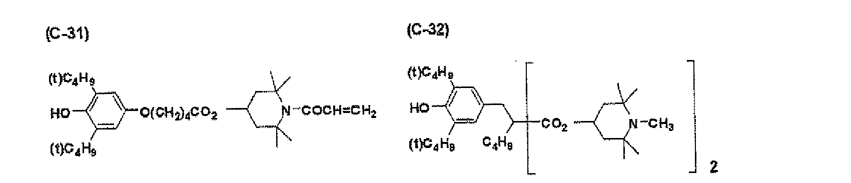

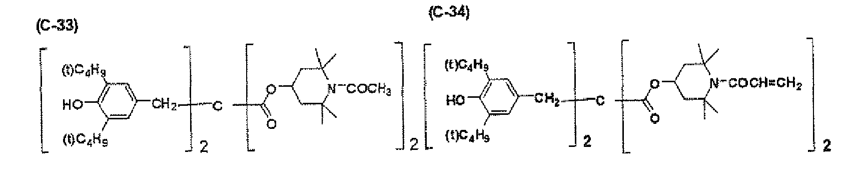

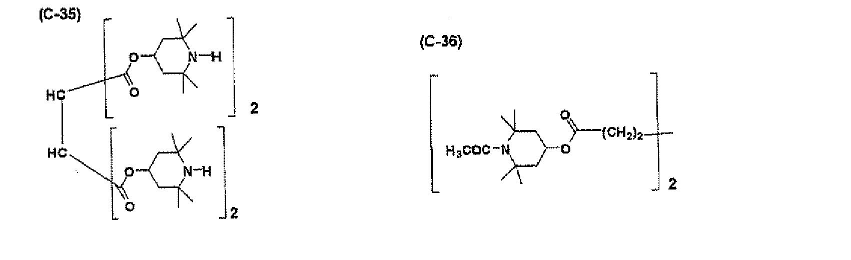

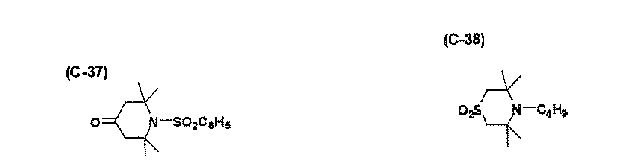

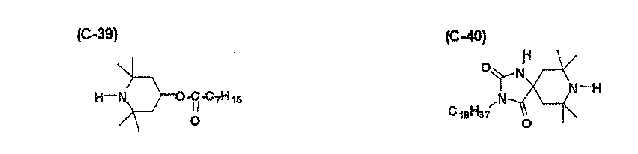

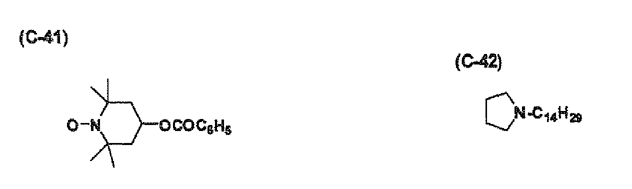

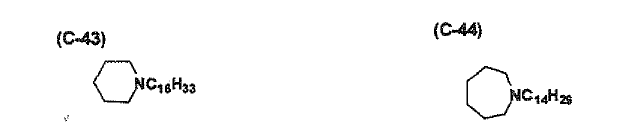

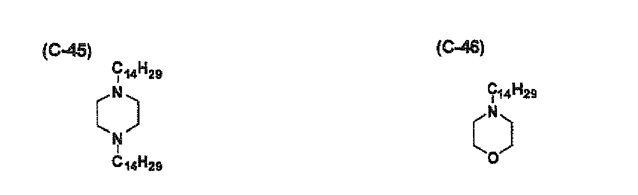

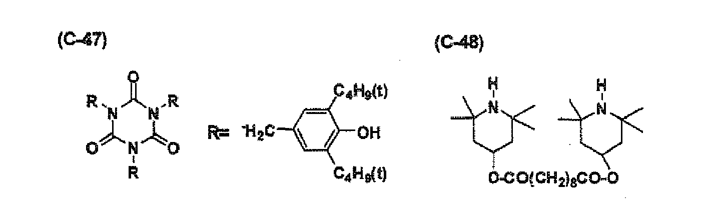

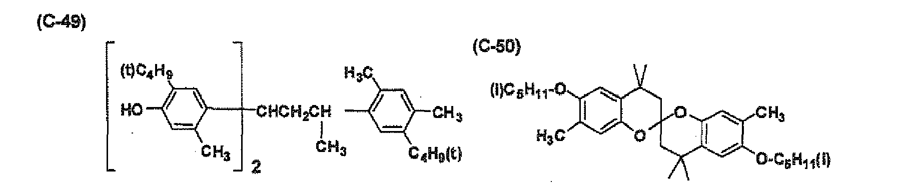

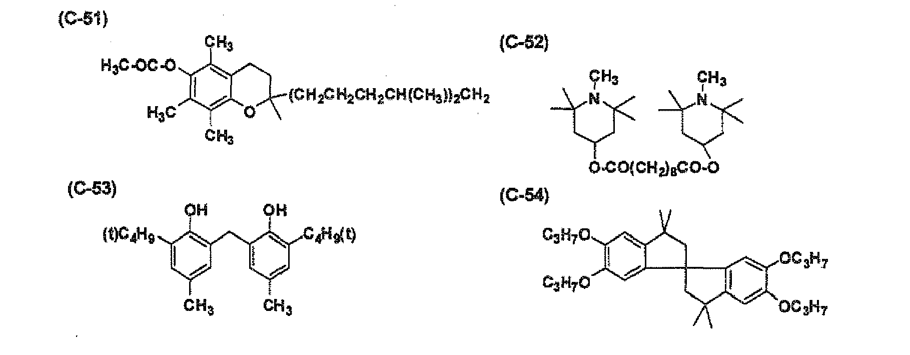

In the present invention, among these, the exemplified compounds (C-48) and (C-52) are preferable; the exemplified compound (C-48) is most preferable.

The compounds represented by formula (3-a) or (3-b) can be synthesized by methods described in U.K. Patent No. 1,326,889, U.K. Patent No. 1,354,313, U.K. Patent No. 1,410,846, U.S. Patent No. 3,336,135, U.S. Patent No. 4,268,593, U.S. Patent No. 4,558,131, U.S. Patent No. 4,584,265, JP-B-51-1420, JP-B-52-6523, JP-A-58-114036, JP-A-59-5246, JP-A-61-73152, JP-A-61-86750, JP-A-61-90155, JP-A-61-90156, and JP-A-61-172246 or by modifications thereto.

The ultraviolet absorbent A and B, and the compound C used in the present invention may be individually present, or may be connected to each other previously or by binding together with each other in a composition. Further, a polymerizable group may be bound with each of the ultraviolet absorbent A and B , and the compound C to form a polymerizable monomer respectively, followed by polymerization of these monomers to form a copolymer including these monomers as a unit structure. Alternatively, these compounds may be used together with other monomers free of the ultraviolet absorbent A and B , and the compound C to form a copolymer. A preferable embodiment is that a composition is constructed by monomers, and a copolymer is formed by polymerization of the monomers at a desired time.

The ultraviolet absorbent composition according to the present invention may be in any form, for example, liquid dispersion, solution, polymer material, or the like. The ultraviolet absorbent composition according to the present invention may contain any other desirable components according to application, in addition to the ultraviolet absorbent A and B, and the compound C.

The ultraviolet absorbent composition according to the present invention is preferably in the dispersed state as dispersed in a dispersing medium. Hereinafter, the ultraviolet absorbent dispersion according to the present invention will be described.
The medium for dispersing the ultraviolet absorbent according to the present invention is arbitrary. Examples thereof include water, organic solvents, resins, resin solutions, and the like. These media may be used alone or in combination of two or more.

Examples of the organic solvents as the dispersing medium that can be used in the present invention include hydrocarbon-based solvents such as pentane, hexane and octane; aromatic solvents such as benzene, toluene and xylene; ether-based solvents such as diethylether and methyl-t-butylether; alcoholic solvents such as methanol, ethanol and isopropanol; ester-based solvents such as acetone, ethyl acetate and butyl acetate; ketone-based solvents such as methyl ethyl ketone; nitrile-based solvents such as acetonitrile and propionitrile; amide-based solvents such as N,N-dimethylformamide, N,N-dimethylacetamide and N-methylpyrrolidone; sulfoxide-based solvents such as dimethylsulfoxide; amine-based solvents such as triethylamine and tributylamine; carboxylic acid-based solvents such as acetic acid and propionic acid; halogen-based solvents such as methylene chloride and chloroform; and heterocycle-based solvents such as tetrahydrofuran and pyridine. These solvents may be used as a mixture at any rate.

Examples of the resins as the dispersing medium that can be used in the present invention include various known thermoplastic and thermosetting resins conventionally used for production of molded article, sheet, film and others. Examples of the thermoplastic resins include polyethylene series resins, polypropylene series resins, poly(meth)acrylic ester series resins, polystyrene series resins, styrene-acrylonitrile series resins, acrylonitrile-butadiene-styrene series resins, polyvinyl chloride series resins, polyvinylidene chloride series resins, polyvinyl acetate series resins, polyvinylbutyral series resins, ethylene-vinyl acetate series copolymers, ethylene-vinylalcohol series resins, polyethylene terephthalate resins (PET), polybutylene terephthalate resins (PBT), liquid crystal polyester resins (LCP), polyacetal resins (POM), polyamide resins (PA), polycarbonate resins, polyurethane resins, and polyphenylene sulfide resins (PPS), and these resins may be used alone or as polymer blend or alloy of two or more. The resin may be used as a thermoplastic molding material containing a natural resin and additionally a filler such as glass fiber, carbon fiber, semi-carbonized fiber, cellulosic fiber or glass bead, a flame retardant, and the like. As needed, resin additives conventionally used, such as polyolefin series resin fine powder, polyolefin series wax, ethylene bisamide wax, and metal soap, may be used alone or in combination.

Examples of the thermosetting resins include epoxy resins, melamine resins, and unsaturated polyester resins, and the resin may be used as a thermosetting molding material containing a natural resin and additionally a filler, such as glass fiber, carbon fiber, semi-carbonized fiber, cellulosic fiber or glass bead, and a flame retardant.

The ultraviolet absorbent dispersion according to the present invention may contain other additives such as dispersant, antifoam, preservative, antifreezing agent, surfactant and others. The dispersion may contain any other compounds additionally. Examples of the other additives include dye, pigment, infrared absorbent, flavoring agent, polymerizable compound, polymer, inorganic material and metal.

For example, a high-shearing force high-speed-agitation dispersing machine or a high-strength ultrasonic dispersing machine may be used as the apparatus for preparation of the ultraviolet absorbent dispersion according to the present invention. Specific examples thereof include colloid mill, homogenizer, capillary emulsifier, liquid siren, electromagnetic-distortion ultrasonic wave generator, emulsifier having a Pallmann whistle, and the like. The high-speed-agitation dispersing machine favorably used in the present invention is a dispersing machine in which a dispersing part is revolving in liquid at high speed (500 to 15,000 rpm, preferably 2,000 to 4,000 rpm) such as dissolver, polytron, homomixer, homoblender, keddy mill, or jet agitator. The high-speed-agitation dispersing machine that can be used in the present invention is also called a dissolver or a high-speed impeller dispersing machine, and, as described in JP-A-55-129136, a dispersing machine having impellers of saw-teeth shaped plate alternately bent in the vertical direction that are connected to the shaft revolving at high speed is also a favorable example.

Various methods may be used in preparation of an emulsified dispersion containing a hydrophobic compound. For example, in dissolving a hydrophobic compound in an organic solvent, the hydrophobic compound is dissolved in a solvent or a mixture of two or more arbitrarily selected from high-boiling point organic materials, water-immiscible low boiling point organic solvents and water-miscible organic solvents, and the solution is then dispersed in water or an aqueous hydrophilic colloid solution in the presence of a surfactant compound. The water-insoluble phase containing the hydrophobic compound and the aqueous phase may be mixed by the so-called normal mixing method of adding the water-insoluble phase into the agitated aqueous phase or by the reverse mixing method of adding the phases reversely.

The content of the ultraviolet absorbent composition in the ultraviolet absorbent dispersion according to the present invention may not be determined specifically, because it varies according to application and type of usage, and is the concentration is arbitrary according to application. The content is preferably 0.001 to 50 mass%, more preferably 0.01 to 20 mass%, with respect to the total amount of the ultraviolet absorbent dispersion.

The ultraviolet absorbent composition according to the present invention is favorably used in the state of a solution dissolved in a liquid medium. Hereinafter, the ultraviolet absorbent solution according to the present invention will be described.
The liquid dissolving the ultraviolet absorbent composition according to the present invention is arbitrary. It is, for example, water, an organic solvent, a resin, a resin solution, or the like. Examples of the organic solvent, the resin, and the resin solution include those described above as the dispersing medium. These may be used alone or in combination.

The solution of the ultraviolet absorbent composition according to the present invention may contain any other compounds additionally. Examples of the other additives include dye, pigment, infrared absorbent, flavoring agent, polymerizable compound, polymer, inorganic material, metal and the like. Components other than the ultraviolet absorbent composition according to the present invention may not necessarily be dissolved.

The content of the ultraviolet absorbent composition in the ultraviolet absorbent solution according to the present invention may not be determined specifically, because it varies according to application and type of usage, and thus the concentration is arbitrary according to application. The concentration in the entire solution is preferably 0.001 to 50 mass%. Both the ultraviolet absorbent A and the ultraviolet absorbent B used in the present invention are compounds that exhibit high solubility. Accordingly, they can be used even in a concentration as high as, for example, the range of from 10% by mass to 50% by mass.
A solution at higher concentration may be prepared in advance and diluted at a desired time before use. The dilution solvent is selected arbitrarily from the solvents described above.

The polymer composition is used in preparation of the polymer material according to the present invention. The polymer composition for use in the present invention contains a polymer substance described below and the ultraviolet absorbent composition according to the present invention.
The ultraviolet absorbent composition according to the present invention may be contained in the polymer substance in various methods. When the ultraviolet absorbent composition according to the present invention is compatible with the polymer substance, the ultraviolet absorbent composition according to the present invention may be added to the polymer substance directly. The ultraviolet absorbent composition according to the present invention may be dissolved in a cosolvent compatible with the polymer substance, and then the obtained solution be added to the polymer substance. The ultraviolet absorbent composition according to the present invention may be dispersed in a high-boiling point organic solvent or a polymer, and the obtained dispersion be added to the polymer substance.

The boiling point of the high-boiling point organic solvent is preferably 180°C or higher, more preferably 200°C or higher. The melting point of the high-boiling point organic solvent is preferably 150°C or lower, more preferably 100°C or lower. Examples of the high-boiling point organic solvents include phosphoric esters, phosphonic esters, benzoic esters, phthalic esters, fatty acid esters, carbonate esters, amides, ethers, halogenated hydrocarbons, alcohols and paraffins. Phosphoric esters, phosphonic esters, phthalic ester, benzoic esters and fatty acid esters are preferable.
The method of adding the ultraviolet absorbent composition according to the present invention is determined, by reference to the description in JP-A-58-209735, JP-A-63-264748, JP-A-4-191851, JP-A-8-272058, and British Patent No. 2016017A.

The content of the ultraviolet absorbent composition in the ultraviolet absorbent solution according to the present invention is not determined specifically, because it varies according to application and type of usage, and the concentration is arbitrary according to application. It is preferably 0.001 to 10 mass%, more preferably 0.01 to 5 mass%, in the polymer material.

The ultraviolet absorbent composition according to the present invention is preferably used for a polymer material. Hereinafter, the polymer material according to the present invention will be described.
Although practically sufficient ultraviolet-shielding effect is obtained only with the ultraviolet absorbent composition according to the present invention in the present invention, a white pigment which has higher hiding power such as titanium oxide may be used for assurance. In addition, a trace (0.05 mass% or less) amount of colorant may be used additionally, if the appearance or the color tone is of a problem or as needed. Alternatively, a fluorescent brightener may be used additionally for applications demanding transparency or whiteness. Examples of the fluorescent brighteners include commercialized products, the compounds represented by Formula [1] and typical exemplary compounds 1 to 35 described in JP-A-2002-53824, and the like.

Hereinafter, the polymer substance that can be used in the polymer composition will be described. The polymer substance is a natural or synthetic polymer or copolymer. Examples thereof include the followings:
<1> Monoolefinic and diolefinic polymers such as polypropylene, polyisobutylene, polybut-1-ene, poly-4-methyl pent-1-ene, polyvinylcyclohexane, polyisoprene and polybutadiene; cycloolefin polymers such as of cyclopentene or norbornene; polyethylenes (crosslinkable as needed) such as high-density polyethylene (HDPE), high-density and high-molecular weight polyethylene (HDPE-HMW), high-density and ultrahigh molecular weight polyethylene (HDPE-UHMW), medium-density polyethylene (MDPE), low-density polyethylene (LDPE), and linear low-density polyethylene (LLDPE), (VLDPE) and (ULDPE).

Polyolefins (that is, polymers of the monoolefins exemplified in the paragraph above), preferably polyethylene and polypropylene, may be prepared by various methods, particularly by the following methods:
a) Radical polymerization (normally under high pressure and elevated temperature), and
b) Catalytic polymerization normally by using one or more metals in the groups IVb, Vb, VIb and VIII of the Periodic Table.
The metal is normally bound to one or more ligands, typically π- or σ-coordinating groups such as oxide, halide, alcoholate, ester, ether, amine, alkyl, alkenyl and/or aryl. The metal complex is in the free state or immobilized on a base material such as activated magnesium chloride, titanium (III) chloride, alumina or silicon oxide. The catalyst may be soluble or insoluble in the polymerization medium. The catalyst may be used as it is in polymerization or in combination with another activating agent, such as metal alkyl, metal hydride, metal alkyl halide, metal alkyl oxide or metal alkyloxane, the metal being an element in the groups Ia, IIa and/or IIIa of the Periodic Table. The activating agent may be modified properly with an other ester, ether, amine or silylether group. Such a catalyst system is normally called Philips, Standard Oil-Indiana, Ziegler (Natta), TNZ (Du Pont), metallocene or single site catalyst (SSC).

<2> Mixture of the polymers described in <1> above such as polypropylene/polyisobutylene, polypropylene/polyethylene mixture (such as PP/HDPE and PP/LDPE), and mixture of different type of polyethylenes (such as LDPE/HDPE).

<3> Copolymers of a monoolefin and a diolefin or a monoolefin or diolefin with another vinyl monomer such as ethylene/propylene copolymer, mixture of linear low-density polyethylene (LLDPE) and its low-density polyethylene (LDPE), propylene/but-1-ene copolymer, propylene/isobutylene copolymer, ethylene/but-1-ene copolymer, ethylene/hexene copolymer, ethylene/methylpentene copolymer, ethylene/heptene copolymer, ethylene/octene copolymer, ethylene/vinylcyclohexane copolymer, ethylene/cycloolefin copolymer (such as COC (Cyclo-Olefin Copolymer) of ethylene/norbornene), ethylene/1-olefin copolymer producing 1-olefin in situ, propylene/butadiene copolymer, isobutylene/isoprene copolymer, ethylene/vinylcyclohexene copolymer, ethylene/alkyl acrylate copolymer, ethylene/alkyl methacrylate copolymer, ethylene/vinyl acetate copolymer or ethylene/acrylic acid copolymer and the salts thereof (ionomers); and terpolymers of ethylene and propyrene with diene such as hexadiene, dicyclopentadiene or ethylidene-norbornene; and mixtures of such copolymers and the polymer described in the above 1) such as polypropylene/ethylene-propylene copolymer, LDPE/ethylene-vinyl acetate copolymer (EVA), LDPE/ethylene-acrylic acid copolymer (EAA), LLDPE/EVA, LLDPE/EAA and alternating or random polyalkylene/carbon monoxide copolymer and the mixture thereof with other polymer such as polyamide.

<4> Mixtures of hydrocarbon resins (for example, having 5 to 9 carbon atoms) containing hydrogenated derivatives (such as tackifier) and polyalkylene and starch.

The homopolymers and copolymers described in <1> to <4> above may have any steric structure, syndiotactic, isotactic, hemiisotactic or atactic; and atactic polymers are preferable. Stereoblock polymers are also included.

<5> Polystyrene, poly(p-methylstyrene), and poly(α-methylstyrene).

<6> Aromatic homopolymer and copolymers prepared from aromatic vinyl monomers including all isomers of styrene, α-methylstyrene, and vinyltoluene, in particular all isomers of p-vinyltoluene, ethylstyrene, propylstyrene, vinyl biphenyl, vinylnaphthalene, and vinylanthracene, and the mixture thereof. The homopolymers and copolymers may have any steric structure, syndiotactic, isotactic, hemiisotactic or atactic; and atactic polymers are preferable. Stereoblock polymers are also included.

<6a> Copolymers of the aromatic vinyl monomers or comonomers selected from ethylene, propylene, dienes, nitriles, acids, maleic anhydride, maleimide, vinyl acetate and vinyl chloride or its acryl derivative and the mixture thereof, such as styrene/butadiene, styrene/acrylonitrile, styrene/ethylene (copolymer), styrene/alkyl methacrylate, styrene/butadiene/alkyl acrylate, styrene/butadiene/alkyl methacrylate, styrene/maleic anhydride, and styrene/acrylonitrile/methyl acrylate; styrene copolymers and other polymers including high shock-resistant mixtures such as polyacrylate, diene polymer, and ethylene/propylene/diene terpolymer; and styrene block copolymers such as styrene/butadiene/styrene, styrene/isoprene/styrene, styrene/ethylene/butylene/styrene and styrene/ethylene/propylene/styrene.

<6b> Hydrogenated aromatic polymers prepared from the hydrogenated polymers described in <6>, in particular polycyclohexylethylene (PCHE), often called polyvinylcyclohexane (PVCH), prepared by hydrogenation of atactic polystyrene.

<6c> Hydrogenated aromatic polymers prepared by hydrogenation of the polymers described in <6a> above.

The homopolymers and copolymers may have any steric structure, syndiotactic, isotactic, hemiisotactic or atactic, and atactic polymers are preferable. Stereoblock polymers are also included.

<7> Graft copolymers of an aromatic vinyl monomer such as styrene or α-methylstyrene, including graft copolymers of polybutadiene/styrene; polybutadienestyrene or polybutadiene-acrylonitrile copolymer/styrene; polybutadiene/styrene and acrylonitrile (or mathacrylonitrile); polybutadiene/styrene, acrylonitrile and methyl methacrylate; polybutadiene/styrene and maleic anhydride; polybutadiene/styrene, acrylonitrile and maleic anhydride or maleimide; polybutadiene/styrene and maleimide; polybutadiene/styrene and alkyl acrylate or methacrylate; ethylene/propylene/diene terpolymer/styrene and acrylonitrile; polyalkyl acrylate or polyalkyl methacrylate/styrene and acrylonitrile; acrylate/butadiene copolymer/styrene and acrylonitrile; and mixtures thereof with the copolymers described in <6> above such as known copolymer mixtures of ABS, SAN, MBS, ASA and AES polymer.

<8> Halogen-containing polymers such as polychloroprene, chlorinated rubber, chlorinated or brominated copolymers of isobutylene-isoprene (halobutyl rubbers), chlorinated or sulfochlorinated polyethylene, ethylene-chlorinated ethylene copolymer, and epichlorohydrin homopolymer and copolymers; in particular, polymers of a halogen-containing vinyl compound such as polyvinyl chloride, polyvinylidene chloride, polyvinyl fluoride, polyvinylidene fluoride, and copolymers thereof such as polyvinyl chloride/vinylidene chloride, polyvinyl chloride/vinyl acetate or vinylidene chloride/vinyl acetate copolymer.

<9> Polymers derived from α,β-unsaturated acid and the derivatives thereof such as polyacrylates and polymethacrylates; and high-impact polymethyl methacrylate, polyacrylamide and polyacrylonitrile modified with butyl acrylate.

<10> Copolymers of the monomers described in <9> above or with another unsaturated monomer such as acrylonitrile/butadiene copolymer, acrylonitrile/alkyl acrylate copolymer, acrylonitrile/alkoxyalkyl acrylate or acrylonitrile/vinyl halide copolymer and acrylonitrile/alkyl methacrylate/butadiene terpolymer.

<11> Polymers derived from an unsaturated alcohol and an amine, and acyl derivatives or acetals thereof such as polyvinylalcohol, polyvinyl acetate, polyvinyl stearate, polyvinyl benzoate, polyvinyl maleate, polyvinylbutyral, polyallyl phthalate and polyallylmelamine; and copolymers thereof with the olefin described in <1> above.

<12> Homopolymers and copolymers of cyclic ether such as polyalkylene glycols, polyethyleneoxide, polypropyleneoxide or bisglycidylether, and the copolymers thereof.

<13> Polyacetals such as polyoxymethylene and polyoxymethylene containing ethyleneoxide as the comonomer; acrylate or MOBS.

<14> Mixtures of polyphenyleneoxide and sulfide, and those of polyphenyleneoxide and styrene polymer or polyamide.

<15> Polyamides and copolyamides derived from a diamine and a dicarboxylic acid and/or aminocarboxylic acid or the corresponding lactam, such as polyamide 4, polyamide 6, polyamides 6/6, 6/10, 6/9, 6/12, 4/6 and 12/12, polyamide 11, polyamide 12, and an aromatic polyamide from m-xylenediamine and adipic acid; polyamides prepared from hexamethylenediamine and isophthalic and/or terephthalic acid, in the presence or absence of a modifying agent elastomer such as poly-2,4,4-trimethylhexamethylene terephthalamide and poly-m-phenylene isophthalamide; block copolymers of the polyamides above with polyolefin, olefin copolymer, ionomer or chemically bonded or grafted elastomer; block copolymers of the polyamides above with polyether such as polyethylene glycol, polypropylene glycol or polytetramethylene glycol; polyamides or copolyamides modified with EPDM or ABS; and polyamides condensed during processing (RIM polyamides).

<16> Polyurea, polyimide, polyamide-imide, polyether imide, polyester-imide, polyhydantoin and polybenzimidazole.

<17> Polyesters derived from a dicarboxylic acid and a diol and/or a hydroxycarboxylic acid or the corresponding lactone such as polyethylene terephthalate, polybutylene terephthalate, poly-1,4-dimethylolcyclohexane terephthalate, polyalkylene naphthalate (PAN) and polyhydroxybenzoate; block copolyether esters derived from hydroxyl terminal polyethers; and polyesters modified with polycarbonate or MBS; the polyesters and polyester copolymers specified in U.S. Patent No. 5,807,932 (2nd column, line 53) are also incorporated herein by reference.

<18> Polycarbonates and polyester carbonates.

<19> Polyketones.

<20> Polysulfones, polyether sulfones and polyether ketones.

<21> Crosslinked polymers derived from an aldehyde component and another phenol component and also from urea and melamine such as phenol/formaldehyde resin, urea/formaldehyde resin and melamine/formaldehyde resin.

<22> Dry and non-dry alkyd resins.

<23> Unsaturated polyester resins derived from saturated and unsaturated dicarboxylic acids, a polyvalent alcohol, and a crosslinking agent vinyl compound, and less flammable halogen-containing derivatives thereof.

<24> Substituted acrylates, for example, crosslinkable acrylic resins derived from epoxy acrylate, urethane acrylate or polyester acrylate.

<25> Crosslinked alkyd, polyester and acrylate resins crosslinked with a melamine resin, urea resin, isocyanate, isocyanurate, polyisocyanate or epoxy resin.

<26> Crosslinked epoxy resins derived from an aliphatic, alicyclic, heterocyclic or aromatic glycidyl compound, for example, glycidyl ether products ofbisphenol A or bisphenol F crosslinked with a common curing agent such as anhydride or amine in the presence or absence of an accelerator.

<27> Natural polymers such as cellulose, rubber, gelatin and chemically modified derivatives of their homologous series such as cellulose acetate, cellulose propionate and cellulose butyrate, and cellulose ethers such as methylcellulose; and rosins and the derivatives thereof.

<28> Polymer blends (polyblends) of the polymers described above such as PP/EPDM, polyamide/EPDM or ABS, PVC/EVA, PVC/ABS, PVC/MBS, PC/ABS, PBTP/ABS, PC/ASA, PC/PBT, PVC/CPE, PVC/acrylate, POM/acrylate, POM/MBS, PPO/HIPS, PPO/PA6.6 and copolymer, PA/HDPE, PA/PP, PA/PPO, PBT/PC/ABS and PBT/PET/PC.

<29> Natural and synthetic organic materials of a pure monomeric compound or a mixture of the compounds such as mineral oils, animal and vegetable fats, oils and waxes, or synthetic ester (such as phthalate, adipate, phosphate or trimellitate)-based oils, fats and waxes, and mixtures thereof with a synthetic ester and mineral oil at any rate, mixtures typically used as a fiber-spinning composition, and the aqueous emulsions thereof.

<30> Aqueous emulsions of natural or synthetic rubber, for example, a natural latex or latexes of a carboxylated styrene/butadiene copolymer.

<31> Polysiloxanes, for example, the soft hydrophilic polysiloxane described in U.S. Patent No. 4,259,467 and the hard polyorganosiloxane described in U.S. Patent No. 4,355,147.

<32> Polyketimines in combination with an unsaturated acrylpolyacetoacetate resin or an unsaturated acrylic resin including urethane acrylate, polyester acrylate, vinyl or acrylic copolymers having a pendant unsaturated group, and acrylated melamines. The polyketimine is prepared from a polyamine and a ketone in the presence of an acid catalyst.

<33> Radiant ray-hardening compositions containing an ethylenically unsaturated monomer or oligomer and a polyunsaturated aliphatic oligomer.

<34> Epoxy melamine resins such as photostabilized epoxy resins crosslinked with a coetherified high-solid content melamine resin sensitive to epoxy groups, such as LSE-4103 (trade name, manufactured by Monsanto).

The polymer substance for use in the present invention is preferably a synthetic polymer, more preferably a polyolefin, an acrylic polymer, polyester, polycarbonate, or a cellulose ester. Among them, polyethylene, polypropylene, poly(4-methylpentene), polymethyl methacrylate, polycarbonate, polyethylene terephthalate, polyethylene naphthalate, polybutylene terephthalate, and triacetylcellulose are particularly preferable.
The polymer substance for use in the present invention is preferably a thermoplastic resin.

The polymer material according to the present invention may contain, in addition to the ultraviolet absorbent of the present invention, any additives such as processing stabilizer, antidegradant, and compatibilizer, as needed.

The polymer material according to the present invention contains the polymer substance above. The polymer material according to the present invention may be made only of the above polymer substance, or may be formed by using the polymer substance dissolved in an arbitrary solvent.
The polymer material according to the present invention is applicable to any application where synthetic resin is used, and particularly favorably to applications where there is possibility of exposure to light such as sunlight or ultraviolet light. Specific examples thereof include glass alternatives and their surface-coating agent; coating agents for the window glass, lighting glass and light source-protecting glass such as of house, facility, and vehicle; interior and exterior materials such as of house, facility and vehicle, paints for the interior and exterior materials; materials for ultraviolet-emission sources such as fluorescent lamp and mercury lamp; materials for precision machines and electric and electronic devices; materials for shielding electromagnetic and other waves emitted from various displays; containers or packaging material for food, chemicals, medicine and others; discoloration inhibitors for agricultural and industrial sheet or film, print, colored products, dyes and pigments; cosmetics such as anti-sunburn cream, shampoo, rinse, and hair dressing; apparel fiber products such as sport wear, stockings and cap and the fibers; home interior products such as curtain, carpet and wall paper; medical devices such as plastic lens, contact lens and artificial eye; optical materials such as optical filter, prism, mirror, and photographic material; stationery products such as tape and ink; display plates and devices and the surface-coating agents thereof, and the like.

The shape of the polymer material according to the present invention may be flat film, powder, spherical particle, crushed particle, bulky continuous particle, fiber, solenoid, hollow fiber, granule, plate, porous particle, or the other.

The polymer material according to the present invention, which contains the ultraviolet absorbent composition according to the present invention, is superior in light resistance (ultraviolet fastness), causing no precipitation or bleed out of the ultraviolet absorbent during long-term use. In addition, the polymer material according to the present invention, which has superior long-wavelength ultraviolet absorption capability, can be used as an ultraviolet-absorbing filter or container, for protection, for example, of an ultraviolet-sensitive compound therein. It is possible to obtain a molded article (such as container) of the polymer material according to the present invention, for example, by molding the polymer substance by any molding method such as extrusion molding or injection molding. It is also possible to prepare a molded article coated with an ultraviolet-absorbing film made of the polymer material according to the present invention, by coating and drying a solution of the polymer substance on a separately prepared molded article.

When the polymer material according to the present invention is used as an ultraviolet-absorbing filter or film, the polymer substance is preferably transparent. Examples of the transparent polymer materials include cellulose esters (such as diacetylcellulose, triacetylcellulose (TAC), propionylcellulose, butyrylcellulose, acetyl propionyl cellulose, and nitrocellulose), polyamides, polycarbonates, polyesters (such as polyethylene terephthalate, polyethylene naphthalate, polybutylene terephthalate, poly-1,4-cyclohexane dimethylene terephthalate, polyethylene-1,2-diphenoxyethane-4,4'-dicarboxylate, and polybutylene terephthalate), polystyrenes (such as syndiotactic polystyrene), polyolefins (such as polyethylene, polypropylene, and polymethylpentene), polymethyl methacrylate, syndiotactic polystyrene, polysulfones, polyether sulfones, polyether ketones, polyether imides, polyoxyethylene, and the like. Preferable are cellulose esters, polycarbonates, polyesters, polyolefins, and acrylic resins. The polymer material according to the present invention may be used as a transparent support, and the transmittance of the transparent support in such a case is preferably 80% or more, more preferably 86% or more.

Hereinafter, the packaging material containing the ultraviolet absorbent composition according to the present invention will be described. The packaging material containing the ultraviolet absorbent composition according to the present invention may be a packaging material of any kind of polymer, as long as it contains the ultraviolet absorbent A and B, and the compound C above-described. Examples thereof include the thermoplastic resins described in JP-A-8-208765; the polyvinylalcohols described in JP-A-8-151455; the polyvinyl chlorides described in JP-A-8-245849; the polyesters described in JP-A-10-168292 and JP-A-2004-285189; the heat-shrinkable polyesters described in JP-A-2001-323082; the styrene-based resins described in JP-A-1 0-298397; the polyolefins described in JP-A-11-315175, JP-A-2001-26081, and JP-A-2005-305745; the ROMP's described in JP-T-2003-524019; and the like. It may be, for example, the resin having a vapor-deposition thin film layer of an inorganic compound described in JP-A-2004-50460 or JP-A-2004-243674. It may be, for example, the paper coated with a resin containing the ultraviolet absorbent described in JP-A-2006-240734.

The packaging material containing the ultraviolet absorbent composition according to the present invention may be that for packaging anything such as food, beverage, cosmetics, or individual health care product. Examples thereof include the food packaging materials described in JP-A-11-34261 and JP-A-2003-237825; the photographic photosensitive material packaging materials described in JP-A-7-287353; the photograph film packaging materials described in JP-A-2000-56433; the UV-hardening ink packaging materials described in JP-A-2005-178832; the shrink labels described in JP-A-2003-200966 and JP-A-2006-323339; and the like.

The packaging material containing the ultraviolet absorbent composition according to the present invention may be the transparent packaging material described, for example, in JP-A-2004-51174 or the light-shielding packaging material described, for example, in JP-A-2006-224317.

The packaging material containing the ultraviolet absorbent composition according to the present invention may have ultraviolet light-shielding property as well as other properties, as described, for example, in JP-A-2001-26081 and JP-A-2005-305745. Examples thereof include the packaging materials having gas-barrier property described, for example, in JP-A-2002-160321; those containing an oxygen indicator as described, for example, in JP-A-2005-156220; those containing both an ultraviolet absorbent and a fluorescent brightener described, for example, in JP-A-2005-146278; and the like.

The packaging material containing the ultraviolet absorbent composition according to the present invention may be prepared by any method. Examples of the method include the method of melt-extruding and laminating a resin containing an ultraviolet absorbent described, for example, in JP-A-2001-323082 and JP-A-2005-305745; the method of dispersing an ultraviolet absorbent in an adhesive described, for example, in JP-A-9-157626; and the like.

Hereinafter, the container containing the ultraviolet absorbent composition according to the present invention will be described. The container containing the ultraviolet absorbent composition according to the present invention may be a container of any kind of polymer, as long as it contains the ultraviolet absorbent A and B, and the compound C. Examples thereof include the thermoplastic resin containers described in JP-A-8-324572; the polyester containers described in JP-A-2001-48153, JP-A-2005-105004, and JP-A-2006-1568; the polyethylene naphthalate containers described in JP-A-2000-238857; the polyethylene containers described in JP-A-2001-88815; the cyclic olefin-based resin composition containers described in JP-A-7-216152; the plastic containers described in JP-A-2001-270531; the transparent polyamide containers described in JP-A-2004-83858; and the like. It may be the paper container containing a resin described, for example, in JP-A-2001-114262 or JP-A-2001-213427. It may be, alternatively, the glass container having an ultraviolet-absorbing layer described, for example, in JP-A-7-242444, JP-A-8-133787, or JP-A-2005-320408.

The container containing the ultraviolet absorbent composition according to the present invention is used as containers in various applications including food, beverage, cosmetics, individual health care product, shampoo and the like. Examples thereof include the liquid fuel-storing containers described in JP-A-5-139434; the golf ball containers described in JP-A-7-289665; the food containers described in JP-A-9-295664 and JP-A-2003-237825; the liquor containers described in JP-A-9-58687; the beverage containers described in JP-A-8-324572 and JP-A-2006-298456; the oily food containers described in JP-A-9-86570; the analytical reagent solution containers described in JP-A-9-113494; the instant noodle containers described in JP-A-9-239910; the light-resistant cosmetic preparation containers described in JP-A-11-180474, JP-A-2002-68322, and JP-A-2005-278678; the high-purity chemical solution containers described in JP-A-11-290420; the liquid agent containers described in JP-A-2001-106218; the UV-hardening ink containers described in JP-A-2005-178832; the plastic ampoules described in WO 04/93775 pamphlet; and the like.

The container containing the ultraviolet absorbent composition according to the present invention may have ultraviolet-shielding property as well as other properties, as described, for example, in JP-A-5-305975 and JP-A-7-40954. Examples of such containers include the antimicrobial containers described in JP-A-10-237312; the flexible containers described in JP-A-2000-152974; the dispenser containers described in JP-A-2002-264979; the biodegradable containers described in, for example, JP-A-2005-255736; and the like.

The container containing the ultraviolet absorbent composition according to the present invention may be prepared by any method. Examples of the method include the two-layer stretching blow-molding method described in JP-A-2002-370723; the multilayer coextrusion blow-molding method described in JP-A-2001-88815; the method of forming an ultraviolet-absorbing layer on the external surface of an container described in JP-A-9-241407; the methods of using a shrinkable film described in JP-A-8-91385, JP-A-9-48935, JP-T-11-514387, JP-A-2000-66603, JP-A-2001-323082, JP-A-2005-105032, and WO 99/29490 pamphlet; the method of using a supercritical fluid described in JP-A-11-255925; and the like.

Hereinafter, the paint and the coated film containing the ultraviolet absorbent composition according to the present invention will be described. The paint containing the ultraviolet absorbent composition according to the present invention may be a paint of any composition, as long as it contains the ultraviolet absorbent A and B, the compound C. Examples thereof include those of acrylic resin-base, aminoalkyd resin-base, epoxy resin-base, silicone resin-base, and fluororesin-base. To these resins, a base compound, curing agent, diluent, leveling agent, cissing inhibitor or the like may be arbitrarily added.

For example, when a silicon acrylic resin is selected as the transparent resin component, the curing agent is preferably a polyisocyanate; and the diluent is preferably a hydrocarbon-based solvent such as toluene and xylene, an ester-based solvent such as isobutyl acetate, butyl acetate and amyl acetate, or an alcohol-based solvent such as isopropyl alcohol and butyl alcohol. In such a case, the polyisocyanate is, for example, tolylene diisocyanate, diphenylmethane diisocyanate, polymethylene polyphenylene polyisocyanate, tolidine diisocyanate, naphthalene diisocyanate, hexamethylene diisocyanate, isophorone diisocyanate, xylylene diisocyanate, dicyclohexylmethane diisocyanate, hexamethylene diisocyanate or the like. Examples of other transparent resin components include polymethyl methacrylate, polymethyl methacrylate/styrene copolymer, polyvinyl chloride, polyvinyl acetate, and the like. In addition to these components, a leveling agent such as an acrylic or silicone resin, a silicone-based or acrylic cissing inhibitor, and others may be arbitrarily added as needed.

The paint containing the ultraviolet absorbent composition according to the present invention may be used in any application. Examples thereof include the ultraviolet-shielding paints described in JP-A-7-26177, JP-A-9-169950, JP-A-9-221631, and JP-A-2002-80788; the ultraviolet- and near-infrared-shielding paints described in JP-A-10-88039; the electromagnetic wave-shielding paints described in JP-A-2001-55541; the clear paints described in JP-A-8-81643; the metallic paint compositions described in JP-A-2000-186234; the cationic electrodeposition paints described in JP-A-7-166112; the antimicrobial and lead-free cationic electrodeposition paints described in JP-A-2002-294165; the powder paints described in JP-A-2000-273362, JP-A-2001-279189, and JP-A-2002-271227; the aqueous intermediate-layer paints, aqueous metallic paints, and aqueous clear paints described in JP-A-2001-9357; the topcoat paints for automobile, construction, and civil work described in JP-A-2001-316630; the hardening paints described in JP-A-2002-356655; the coat-film forming compositions for use on plastic materials such as automobile bumper described in JP-A-2004-937; the paints for a metal plate described in JP-A-2004-2700; the hardening gradient coat films described in JP-A-2004-169182; the coating materials for an electric wire described in JP-A-2004-107700; the paints for automobile repair described in JP-A-6-49368; the anionic electrodeposition paints described in JP-A-2002-38084 and JP-A-2005-307161; the paints for an automobile described in JP-A-5-78606, JP-A-5-185031, JP-A-10-140089, JP-T-2000-509082, JP-T-2004-520284, and WO 2006/097201 pamphlet; the paints for a coated steel plate described in JP-A-6-1945; the paints for a stainless steel described in JP-A-6-313148; the lamp moth-repellent paints described in JP-A-7-3189; the UV-hardening paints described in JP-A-7-82454; the antimicrobial paints described in JP-A-7-118576; the eyestrain protection paints described in JP-A-2004-217727; the anti-fog paints described in JP-A-2005-314495; the ultra-weather-resistance paints described in JP-A-10-298493; the gradient paints described in JP-A-9-241534; the photocatalyst paints described in JP-A-2002-235028; the strippable paints described in JP-A-2000-345109; the concrete separation paints described in JP-A-6-346022; the anticorrosion paints described in JP-A-2002-167545; the protective paints described in JP-A-8-324576; the water-repellent protective paints described in JP-A-9-12924; the anti-plate glass scattering paints described in JP-A-9-157581; the alkali-soluble protective paints described in JP-A-9-59539; the aqueous temporary protective paint compositions described in JP-A-2001-181558; the flooring paints described in JP-A-10-183057; the emulsion paints described in JP-A-2001-115080; the two-pack type aqueous paints described in JP-A-2001-262056; the one-pack type paints described in JP-A-9-263729; the UV-hardening paints described in JP-A-2001-288410; the electron beam-hardening paint compositions described in JP-A-2002-69331; the thermosetting paint compositions described in JP-A-2002-80781; the aqueous paints for baking lacquer described in JP-T-2003-525325; the powder paints and the slurry paints described in JP-A-2004-162021; the repair paints described in JP-A-2006-233010; the powder-paint aqueous dispersions described in JP-T-11-514689; the paints for a plastic article described in JP-A-2001-59068 and JP-A-2006-160847; the electron beam-hardening paints described in JP-A-2002-69331; and the like.

The paint containing the ultraviolet absorbent composition according to the present invention generally contains a paint (containing a transparent resin component as the principal component) and an ultraviolet absorbent. The paint contains the ultraviolet absorbent preferably in an amount of 0 to 20 mass% with respect to the resin. The thickness of the film coated is preferably 2 to 1,000 µm, more preferably 5 to 200 µm. The method of coating the paint is arbitrary, and examples of the method include a spray method, a dipping method, a roller coating method, a flow coater method, a curtain-flow coating method, and the like. The drying after coating is preferably carried out at a temperature of approximately room temperature to 120°C for 10 to 90 minutes, although the condition may vary according to the paint composition.

The coated film containing the ultraviolet absorbent composition according to the present invention is a coated film formed by using the paint containing the ultraviolet absorbent according to the present invention that contains the ultraviolet absorbent A and B, and the compound C.

Hereinafter, the ink containing the ultraviolet absorbent composition according to the present invention will be described. The ink containing the ultraviolet absorbent composition according to the present invention may be any ink in any form, as long as it contains the ultraviolet absorbent A and B, and the compound C. For example, it may be a dye ink, a pigment ink, an aqueous ink, a solvent ink, or the like. It may be used in any application. Examples of the applications include the screen printing ink described in JP-A-8-3502; the flexographic printing ink described in JP-T-2006-521941; the gravure printing ink described in JP-T-2005-533915; the lithographic offset printing ink described in JP-T-11-504954; the letterpress printing ink described in JP-T-2005-533915; the UV ink described in JP-A-5-254277; the EB ink described in JP-A-2006-30596; and the like. Other examples thereof include the inkjet inks described in JP-A-11-199808, WO 99/67337 pamphlet, JP-A-2005-325150, JP-A-2005-350559, JP-A-2006-8811, and JP-T-2006-514130; the photochromic ink described in JP-A-2006-257165; the thermal transfer ink described in JP-A-8-108650; the masking ink described in JP-A-2005-23111; the fluorescence ink described in JP-A-2004-75888; the security ink described in JP-A-7-164729; the DNA ink described in JP-A-2006-22300; and the like.

Hereinafter, the fiber containing the ultraviolet absorbent composition according to the present invention will be described. The fiber containing the ultraviolet absorbent composition according to the present invention may be a fiber of any kind of polymer, as long as it contains the ultraviolet absorbent A and B, and the compound C. Examples thereof include the polyester fibers described in JP-A-5-117508, JP-A-7-119036, JP-A-7-196631, JP-A-8-188921, JP-A-10-237760, JP-A-2000-54287, JP-A-2006-299428, and JP-A-2006-299438; the polyphenylene sulfide fibers described in JP-A-2002-322360 and JP-A-2006-265770; the polyamide fibers described in JP-A-7-76580, JP-A-2001-348785, JP-A-2003-41434, and JP-A-2003-239136; the epoxy fibers described in WO 03/2661 pamphlet; the aramide fibers described in JP-A-10-251981; the polyurethane fibers described in JP-A-6-228816; the cellulosic fibers described in JP-T-2005-517822; and the like.

The fiber containing the ultraviolet absorbent composition according to the present invention may be prepared by any method. Examples of the method include the method, as described in JP-A-6-228818, of processing a polymer previously containing the ultraviolet absorbent agent A and B, and the compound C into fiber, and the methods, as described, for example, in JP-A-5-9870, JP-A-8-188921, and JP-A-10-1587, of processing a material processed in a fiber form with a solution containing the ultraviolet absorbent A and B, and the compound C. As described in JP-A-2002-212884 and JP-A-2006-16710, the fiber may be processed by using a supercritical fluid.

The fiber containing the ultraviolet absorbent composition according to the present invention can be used in various applications. Examples thereof include the clothing described in JP-A-5-148703; the backing cloth described in JP-A-2004-285516; the underwear described in JP-A-2004-285517; the blanket described in JP-A-2003-339503; the hosiery described in JP-A-2004-11062; the synthetic leather described in JP-A-11-302982; the moth-repellent mesh sheet described in JP-A-7-289097; the mesh sheet for construction described in JP-A-10-1868; the carpet described in JP-A-5-256464; the moisture-permeable water-repellent sheet described in JP-A-5-193037; the nonwoven fabric described in JP-A-6-114991; the ultrafine fiber described in JP-A-11-247028; the fibrous sheet described in JP-A-2000-144583; the refreshing clothing described in JP-A-5-148703; the moisture-permeable water-repellent sheet described in JP-A-5-193037; the flame-resistant synthetic suede cloth structure described in JP-A-7-18584; the resin tarpaulin described in JP-A-8-41785; the filming agent, external wall material, and agricultural greenhouse described in JP-A-8-193136; the net and mesh for construction described in JP-A-8-269850; the filter substrate described in JP-A-8-284063; the stainproof filming agent described in JP-A-9-57889; the mesh fabric and land net described in JP-A-9-137335; the underwater net described in JP-A-10-165045; the ultrafine fibers described in JP-A-11-247027 and 11-247028; the textile fiber described in JP-A-7-310283 and JP-T-2003-528974; the air-bag base cloth described in JP-A-2001-30861; the ultraviolet-absorbing fiber products described in JP-A-7-324283, JP-A-8-20579, and JP-A-2003-147617; and the like.

Hereinafter, the construction material containing the ultraviolet absorbent composition according to the present invention will be described. The construction material containing the ultraviolet absorbent composition according to the present invention may be a construction material of any kind of polymer, as long as it contains the ultraviolet absorbent A and B, and the compound C. Examples thereof include the vinyl chloride-based material described in JP-A-10-6451; the olefinic-based material described in JP-A-10-16152; the polyester-based material described in JP-A-2002-161158; the polyphenylene ether-based material described in JP-A-2003-49065; the polycarbonate-based material described in JP-A-2003-160724; and the like.

The construction material containing the ultraviolet absorbent composition according to the present invention may be prepared by any method. Examples of the method include the method, as described in JP-A-8-269850, of forming a material containing the ultraviolet absorbent A and B, and the compound C into a desired shape; the methods, as described, for example, in JP-A-10-205056, of forming a laminate of a material containing the ultraviolet absorbent A and B, and the compound C; the methods, as described, for example, in JP-A-8-151457, of forming a coated layer containing the ultraviolet absorbent A and B, and the compound C; and the methods, as described, for example, in JP-A-2001-172531, of forming it by coating a paint containing the ultraviolet absorbent A and B, and the compound C.

The construction material containing the ultraviolet absorbent composition according to the present invention can be used in various applications. Examples thereof include the external construction materials described in JP-A-7-3955, JP-A-8-151457, and JP-A-2006-266042; the wood structure for construction described in JP-A-8-197511; the roofing material for construction described in JP-A-9-183159; the antimicrobial construction material described in JP-A-11-236734; the base construction material described in JP-A-10-205056; the antifouling construction material described in JP-A-11-300880; the flame-resistant material described in JP-A-2001-9811; the ceramic construction material described in JP-A-2001-172531; the decorative construction material described in JP-A-2003-328523; the painted matter for construction described in JP-A-2002-226764; the facing materials described in JP-A-10-6451, JP-A-10-16152, and JP-A-2006-306020; the net for construction materail described in JP-A-8-269850; the moisture-permeable water-repellent sheet for construction described in JP-A-9-277414; the mesh sheet for construction material described in JP-A-10-1868; the film for construction material described in JP-A-7-269016; the decorative film described in JP-A-2003-211538; the coating materials for construction described in JP-A-9-239921, JP-A-9-254345, and JP-A-10-44352; the adhesive composition for construction described in JP-A-8-73825; the civil work construction structure described in JP-A-8-207218; the pathway coating material described in JP-A-2003-82608; the sheet-shaped photocuring resin described in JP-A-2001-139700; the wood-protecting paint described in JP-A-5-253559; the push-switch cover described in JP-A-2005-2941780; the bond-sheeting agent described in JP-A-9-183159; the base construction material described in JP-A-10-44352; the wall paper described in JP-A-2000-226778; the decorative polyester film described in JP-A-2003-211538; the decorative polyester film for molding material described in JP-A-2003-211606; the flooring material described in JP-A-2004-3191; and the like.

Hereinafter, the recording medium containing the ultraviolet absorbent composition according to the present invention will be described. The recording medium containing the ultraviolet absorbent composition according to the present invention may be any medium, as long as it contains the ultraviolet absorbent A and B, and the compound C. Examples thereof include the inkjet recording media described in JP-A-9-309260, JP-A-2002-178625, JP-A-2002-212237, JP-A-2003-266926, JP-A-2003-266927, and JP-A-2004-181813; the image-receiving medium for thermal transfer ink described in JP-A-8-108650; the image-receiving sheet for sublimation transfer described in JP-A-10-203033; the image-recording medium described in JP-A-2001-249430; the heat-sensitive recording medium described in JP-A-8-258415; the reversible heat-sensitive recording media described in JP-A-9-95055, JP-A-2003-145949, and JP-A-2006-167996; the information-photorecording medium described in JP-A-2002-367227; and the like.

Hereinafter, the image display device containing the ultraviolet absorbent composition according to the present invention will be described. The image display device containing the ultraviolet absorbent composition according to the present invention may be any device, as long as it contains the ultraviolet absorbent A and B, and the compound C. Examples thereof include the image display device employing an electrochromic element described in JP-A-2006-301268; the image display device of so-called electronic paper described in JP-A-2006-293155; the plasma display described in JP-A-9-306344; the image display device employing an organic EL element described in JP-A-2000-223271; and the like. The ultraviolet absorbent composition according to the present invention may be contained, for example, in the ultraviolet-absorbing layer formed in the laminated structure described in JP-A-2000-223271, or in a necessary part such as the circularly polarizing plate described, for example, in JP-A-2005-189645.

Hereinafter, the solar cell cover containing the ultraviolet absorbent composition according to the present invention will be described. The solar cell according to the present invention may be made of any type of element. Examples thereof include a crystalline silicon solar cell, an amorphous silicon solar cell, and a dye-sensitized solar cell. As described in JP-A-2000-174296, a cover material has been used as a part for providing a crystalline silicon solar cell or an amorphous silicon solar cell with antifouling property, impact resistance, and durability. As described in JP-A-2006-282970, dye-sensitized solar batteries, which employ a metal oxide-based semiconductor that is activated by excitation of light (in particular, ultraviolet light) as its electrode material, have a problem of the photosensitizer colorant adsorbed being decomposed and thus the photovoltaic efficiency gradually declining, and for that reason, installation of an additional ultraviolet-absorbing layer was proposed.

The solar cell cover containing the ultraviolet absorbent composition according to the present invention may be a cover of any kind of polymer. Examples of the polymer include the polyester described in JP-A-2006-310461; the thermosetting transparent resin described in JP-A-2006-257144; the α-olefin polymer described in JP-A-2006-210906; the polypropylene described in JP-A-2003-168814; the polyether sulfone described in JP-A-2005-129713; the acrylic resin described in JP-A-2004-227843; the transparent fluorine resin described in JP-A-2004-168057; and the like.

The solar cell cover containing the ultraviolet absorbent composition according to the present invention may be prepared by any method. For example, the ultraviolet-absorbing layer described in JP-A-11-40833 may be formed; the layers respectively containing the ultraviolet absorbent may be laminated, as described in JP-A-2005-129926; it may be contained in the filler layer resin, as described in JP-A-2000-91611; or a film may be formed, together with the ultraviolet absorbent-containing polymer described in JP-A-2005-346999.

The solar cell cover containing the ultraviolet absorbent composition according to the present invention may be in any form. Examples thereof include the film and sheet described in JP-A-2000-91610 and JP-A-11-261085; the laminate film described, for example, in JP-A-11-40833; the cover glass structure described in JP-A-11-214736; and the like. The ultraviolet absorbent may be contained in the sealer described in JP-A-2001-261904.

Other examples of applications include the illumination light source covers described in JP-A-8-102296, JP-A-2000-67629, and JP-A-2005-353554; the synthetic leathers described in JP-A-5-272076 and JP-A-2003-239181; the sport goggle described in JP-A-2006-63162; the deflection lens described in JP-A-2007-93649; the hard-coat for various plastic products described in JP-A-2001-214121, JP-A-2001-214122, JP-A-2001-315263, JP-A-2003-206422, JP-A-2003-25478, JP-A-2004-137457, and JP-A-2005-132999; the hard-coat for bonding on external window described in JP-A-2002-36441; the window film described in JP-A-10-250004; the high-definition antiglare hard-coat film described in JP-A-2002-36452; the antistatic hard-coat film described in JP-A-2003-39607; the permeable hard-coat film described in JP-A-2004-114355; the antiforgery ledger sheet described in JP-A-2002-113937; the turf purpura-preventing agent described in JP-A-2002-293706; the resin film/sheet-bonding sealant described in JP-A-2006-274179; the light guiding body described in JP-A-2005-326761; the coating agent for rubber described in JP-A-2006-335855; the agricultural covering materials described in JP-A-10-34841 and JP-A-2002-114879; the color candles described in JP-T-2004-532306 and JP-T-2004-530024; the cloth-rinsing agent composition described in JP-T-2004-525273; the laminated glass described in JP-A-10-194796; the prism sheet described in JP-A-10-287804; the protective layer transfer sheet described in JP-A-2000-71626; the photocuring resin product described in JP-A-2001-139700; the flooring sheet described in JP-A-2001-159228; the water droplet-repellent and heat wave-shielding glass plate described in JP-A-2002-127310; the light-blocking printing label described in JP-A-2002-189415; the fuel cup described in JP-A-2002-130591; the articles with hard-coat film described in JP-A-2002-307619; the intermediate transfer recording medium described in JP-A-2002-307845; the synthetic hair described in JP-A-2006-316395; the low-temperature heat-shrinkable films for label described in WO 99/29490 pamphlet and JP-A-2004-352847; the fishing goods described in JP-A-2000-224942; the micro beads described in JP-A-8-208976; the precoated metal plate described in JP-A-8-318592; the thin film described in JP-A-2005-504735; the heat-shrinkable film described in JP-A-2005-105032; the in-mold molding label described in JP-A-2005-37642; the projection screen described in JP-A-2005-55615; the decorative sheets described in JP-A-9-300537, JP-A-2000-25180, JP-A-2003-19776, and JP-A-2005-74735; the hot-melt adhesive described in JP-A-2001-207144; the adhesives described in JP-T-2002-543265, JP-T-2002-543266 and U.S. Patent No. 6,225,384; the electrodeposition coat and the basecoat described in JP-A-2004-352783; the wood surface-protecting agent described in JP-A-7-268253; the light-controlling materials, light-controlling films, and light-controlling glasses described in JP-A-2003-253265, JP-A-2005-105131, JP-A-2005-300962, and Japanese Patent No. 3915339; the moth-repellent lamp described in JP-A-2005-304340; the touch panel described in JP-A-2005-44154; the sealant for bonding resin film sheet described in JP-A-2006-274197; the polycarbonate film coating material described in JP-A-2006-89697; the optical fiber tape described in JP-A-2000-231044; the solid wax described in JP-T-2002-527559; and the like.

Hereinafter, the method of evaluating the light stability of the polymer material will be described. Preferable methods of evaluating the light stability of the polymer material are described, for example, in "Methods for Improving the Photostability of Polymers" (CMC Publishing, 2000), pp. 85 to 107; "Basis and Physical Properties of High Functional Coatings" (CMC Publishing, 2003), pp. 314 to 359; "Durability of Polymer Materials and Composite Material Products" (CMC Publishing, 2005); "Elongation of Lifetime of Polymer Materials and Environmental Measures" (CMC Publishing, 2000); H. Zweifel Ed., "Plastics Additives Handbook, 5th Edition" (Hanser Publishers), pp. 238 to 244; and Tadahiko Kutsura, "Basic Seminar 2. Science of Plastic Packaging Container" (Society of packaging Science & Technology, Japan, 2003), Chapter 8.
In addition, the light stability in each application can be attained by the following known evaluation methods.
The photodegradation of polymer materials can be evaluated by the method described in JIS-K7105:1981, JIS-K7101:1981, JIS-K7102:1981, JIS-K7219:1998, JIS-K7350-1:1995, JIS-K7350-2:1995, JIS-K7350-3:1996, JIS-K7350-4:1996 or a method referring to those.

The light stability in the packaging or container application can be evaluated by the method of JIS-K7105 and a method referring to that. Typical examples thereof include the light transmittance and transparency evaluation of the bottle body and the functional test evaluation of the bottle content after ultraviolet irradiation by using a xenon light source described in JP-A-2006-298456; the haze value evaluation after xenon lamp irradiation described in JP-A-2000-238857; the haze value evaluation by using a halogen lamp as the light source described in JP-A-2006-224317; the yellowing evaluation after mercury lamp irradiation by using a blue wool scale described in JP-A-2006-240734; the haze value evaluation and the visual observation of color development by using Sunshine Weather Meter described in JP-A-2005-105004 and JP-A-2006-1568; the ultraviolet light transmittance evaluation described in JP-A-7-40954, JP-A-8-151455, JP-A-10-168292, JP-A-2001-323082, and JP-A-2005-146278; the ultraviolet-blocking rate evaluation described in JP-A-9-48935 and 9-142539; the light transmittance evaluation described in JP-A-9-241407, JP-A-2004-243674, JP-A-2005-320408, JP-A-2005-305745, and JP-A-2005-156220; the evaluation of the viscosity of the ink in ink container described in JP-A-2005-178832; the light transmittance evaluation, the visual observation of the container sample and the color difference ΔE evaluation after sunlight irradiation described in JP-A-2005-278678; the ultraviolet light transmittance evaluation, the light transmittance evaluation, and the color difference evaluation after white fluorescent lamp irradiation described in JP-A-2004-51174; the light transmittance evaluation, the haze value evaluation, and the color tone evaluation described in JP-A-2004-285189; the yellowness index evaluation described in JP-A-2003-237825; the light-blocking evaluation and the brightness evaluation by using the color difference Formula of the L*a*b* color system described in JP-A-2003-20966; the yellowing evaluation by using the color difference ΔEa*b* of a sample after irradiation of xenon lights of different in wavelength described in JP-A-2002-68322; the ultraviolet absorbance evaluation after ultraviolet light irradiation described in JP-A-2001-26081; the film tensile elongation test after photoirradiation by using Sunshine Weather Meter described in JP-A-10-298397; the antimicrobial evaluation after photoirradiation in a xenon weather meter described in JP-A-10-237312; the evaluation of discoloration of a package content after fluorescent lamp irradiation described in JP-A-9-239910; the evaluation of oil peroxide value and color tone of a salad oil-filled bottle after fluorescent lamp irradiation described in JP-A-9-86570; the evaluation of the difference in absorbance after chemical lamp irradiation described in JP-A-8-301363; the evaluation of surface glossiness retention rate and appearance after photoirradiation by using Sunshine Weather Meter described in JP-A-8-208765; the evaluation of color difference and bending strength after photoirradiation by using Sunshine Weather-O-meter described in JP-A-7-216152; the light-blocking rate evaluation and the evaluation of the peroxide generated in kerosene described in JP-A-5-139434; and the like.

The long-term durability, in the case where the polymer material is used in the coating material and coated film applications, can be evaluated according to the method of JIS-K5400, JIS-K5600-7-5:1999, JIS-K5600-7-6:2002, JIS-K5600-7-7:1999, JIS-K5600-7-8:1999, or JIS-K8741 or a method referring to those. Typical examples thereof include the evaluation using the color density, the color difference ΔEa*b* in the CIE L*a*b* color coordinates, and the residual brilliance after photoirradiation in an xenon light-endurance test machine and an UVCON apparatus described in JP-T-2000-509082; the absorbance evaluation after photoirradiation on a film placed on a quartz slide in an xenon arc light-endurance test machine, and the evaluation of the color density and the color difference ΔEa*b* in the CIE L*a*b* color coordinates after fluorescent or UV lamp irradiation on wax described in JP-T-2004-520284; the color tone evaluation after photoirradiation in a Metalweather weather-resistance test machine described in JP-A-2006-160847; the evaluation of brilliance retention rate and the evaluation by using color difference ΔEa*b* after photoirradiation test by using a metal halide lamp, and the evaluation of glossiness after photoirradiation by a sunshine carbon arc light source described in JP-A-2005-307161; the evaluation by using color difference ΔEa*b*, the brilliance retention rate evaluation and the appearance evaluation after photoirradiation in a Metalweather weather-resistance test machine described in JP-A-2002-69331; the brilliance retention rate evaluation after photoirradiation by using Sunshine Weather-O-Meter described in JP-A-2002-38084; the evaluation by using the color difference ΔEa*b* and the brilliance retention rate evaluation after photoirradiation in a QUV weather-resistance test machine described in JP-A-2001-59068; the brilliance retention rate evaluation after photoirradiation by using Sunshine Weather-O-Meter described in JP-A-2001-115080, JP-A-6-49368, and JP-A-2001-262056; the evaluation of post-irradiation appearance after photoirradiation on a coated plate by using Sunshine Weather-O-Meter described in JP-A-8-324576, JP-A-9-12924, JP-A-9-169950, JP-A-9-241534, and JP-A-2001-181558; the evaluation of the brilliance retention rate and the fluctuation in brightness after photoirradiation by using Sunshine Weather-O-Meter described in JP-A-2000-186234; the evaluation of the appearance of the deteriorated coated film after dew cycle WOM photoirradiation on coated film described in JP-A-10-298493; the evaluation of the ultraviolet light transmittance of coated film described in JP-A-7-26177; the evaluation of the ultraviolet-blocking rate of coated film described in JP-A-7-3189 and JP-A-9-263729; the comparative evaluation of the period until the brilliance retention rate of the coated film declines to 80% by using Sunshine Weather-O-Meter as described in JP-A-6-1945; the evaluation of rusting after photoirradiation by using a Dewpanel Light Control Weather Meter described in JP-A-6-313148; the evaluation of the strength of a concrete to the coated formwork after external exposure described in JP-A-6-346022; the evaluation by using the color difference ΔEa*b*, the lattice adhesion test and the surface appearance evaluation after external photoirradiation described in JP-A-5-185031; the brilliance retention rate evaluation after external photoirradiation described in JP-A-5-78606; the evaluation of post-irradiation yellowing (ΔYI) by using a carbon arc light source described in JP-A-2006-63162; and the like.

The light stability, in the case where the polymer material is used in the ink application, is determined by the method of JIS-K5701-1:2000, JIS-K7360-2, or IBO105-B02 or a method referring to those. Specific examples thereof include the evaluation of the color density and the measurement by the CIE L*a*b* color coordinates after photoirradiation by using an office fluorescent lamp or a discoloration tester described in JP-T-2006-514130; the electrophoretic evaluation after ultraviolet light irradiation by using a xenon arc light source described in JP-A-2006-22300; the print concentration evaluation with a xenon fade meter described in JP-A-2006-8811; the ink blurring evaluation by using a 100W chemical lamp described in JP-A-2005-23111; the evaluation of the dye residual ratio in the image-forming range by using a weather meter described in JP-A-2005-325150; the evaluation of print chalking and discoloration by using an Eye Super UV Tester described in JP-A-2002-127596; the evaluation of print by using the color difference ΔEa*b* in the CIE L*a*b* color coordinates after photoirradiation by a xenon fade meter described in JP-A-11-199808 and JP-A-8-108650; the reflectance evaluation after photoirradiation by using a carbon arc light source described in JP-A-7-164729; and the like.

The light stability of the solar cell module can be evaluated according to the method of JIS-C8917:1998 or JIS-C8938:1995 or a method referring to those.
Specific examples thereof include the I-V-measuring photovoltaic efficiency evaluation after photoirradiation by a xenon lamp light source having a sunlight-simulating compensation filter described in JP-A-2006-282970; and the evaluation of discoloration gray scale degree, color, and apparent adhesiveness after photoirradiation by using Sunshine Weather Meter or a fade mater described in JP-A-11-261085 and JP-A-2000-144583.

The light stability of fibers and fiber products can be evaluated according to the method of JIS-L1096:1999, JIS-A5905:2003, JIS-L0842, JIS-K6730, JIS-K7107, DIN75.202, SAEJ1885, SN-ISO-105-B02, or AS/NZS4399 or a method referring to those. Examples thereof include the ultraviolet light transmittance evaluation described in JP-A-10-1587, JP-A-2006-299428, and JP-A-2006-299438; the blue scale discoloration evaluation after photoirradiation by using a xenon light source or a carbon arc light source described in JP-A-6-228816, JP-A-7-76580, JP-A-8-188921, JP-A-11-247028, JP-A-11-247027, JP-A-2000-144583, JP-A-2002-322360, JP-A-2003-339503, and JP-A-2004-11062; the UV-blocking rate evaluation described in JP-A-2003-147617; the ultraviolet-blocking property evaluation described in JP-A-2003-41434; the blue scale discoloration evaluation after dry cleaning and after irradiation by using a carbon arc light source described in JP-A-11-302982; the evaluation of lightness index and color difference ΔE* according to chromaticness index after irradiation by using a Fade-O-meter described in JP-A-7-119036 and JP-A-10-251981; the tensile strength evaluation after photoirradiation by using a UV tester or Sunshine Weather Meter described in JP-A-9-57889, JP-A-9-137335, JP-A-10-1868, and JP-A-10-237760; the total transmission and strength retention evaluation described in JP-A-8-41785 and JP-A-8-193136; the ultraviolet protection factor (UPF) evaluation described in JP-T-2003-528974, JP-T-2005-517822, and JP-A-8-20579; the discoloration gray scale evaluation after irradiation by using a high-temperature fade meter described in JP-A- 6-228818, JP-A-7-324283, JP-A-7-196631, and JP-A-7-18584; the appearance evaluation after external photoirradiation described in JP-A-7-289097; the evaluation of yellowness index (YI) and yellowing degree (ΔYI) after ultraviolet irradiation described in JP-A-7-289665; the reflection evaluation described in JP-T-2003-528974; and the like.

The light stability of the construction material can be evaluated according to the method of JIS-A1415:1999 or a method referring to that. Specific examples thereof include the surface color tone evaluation after photoirradiation by using Sunshine Weather-O-Meter described in JP-A-2006-266402; the appearance evaluation after irradiation by using a carbon arc light source, the post-irradiation appearance evaluation by using an Eye Super UV Tester, the post-irradiation absorbance evaluation, the post-irradiation chromaticity and color difference evaluation, and the evaluation by using the color difference ΔEa*b* of CIE L*a*b* color coordinates and brilliance retention rate after photoirradiation by using a metal halide lamp light source described in JP-A-2004-3191 and JP-A-2006-306020; the evaluation of the change in haze value after photoirradiation by using Sunshine Weather Meter, and the elongation retention rate after photoirradiation by using a tensile test machine described in JP-A-10-44352, JP-A-2003-211538, JP-A-9-239921, JP-A-9-254345, and JP-A-2003-211606; the evaluation of ultraviolet transmittance after solvent dipping and the visual evaluation of post-irradiation appearance by using an Eye Super UV Tester described in JP-A-2002-161158; the evaluation of brilliance change after a QUV test described in JP-A-2002-226764; the brilliance retention rate evaluation after irradiation by using Sunshine Weather-O-Meter described in JP-A-2001-172531; the evaluation by using the color difference ΔEa*b* after ultraviolet irradiation by using a black light blue fluorescent lamp described in JP-A-11-300880; the evaluation of post-irradiation adhesion retention rate and ultraviolet-blocking property by using a UVCON acceleration test machine described in JP-A-10-205056; the appearance evaluation, the total light transmittance evaluation, the haze change evaluation, and tensile shear adhesive strength evaluation after external exposure (JIS-A1410) described in JP-A-8-207218 and JP-A-9-183159; the evaluation of total light transmittance of the light in the entire wavelength range, the haze evaluation, and the yellowing degree evaluation after irradiation by using a xenon weather meter described in JP-A-8-151457; the evaluation of yellowing degree (ΔYI) and ultraviolet absorbent residual ratio after irradiation by using Sunshine Weather-O-Meter described in JP-A-7-3955; and the like.

The light stability when the polymer material is used in the recording medium application can be evaluated according to the method of JIS-K7350 or a method referring to that. Specific examples thereof include the evaluation of the difference in base color in the printing unit after fluorescent lamp irradiation described in JP-A-2006-167996; the evaluation of image density residual rate after irradiation by using a xenon weather meter described in JP-A-10-203033 and JP-A-2004-181813; the evaluation of the change in optical reflection density after irradiation by using a xenon weather meter described in JP-A-2002-207845; the yellowing degree evaluation based on the L*a*b* evaluation system after irradiation by using a Suntest CPS photodiscoloration tester described in JP-A-2003-266926; the post-irradiation discoloration evaluation by using a fade meter described in JP-A-2003-145949; the visual evaluation of post-irradiation discoloration by using a xenon fade meter described in JP-A-2002-212237; the color density retention rate evaluation after indoor sunlight irradiation and the post-irradiation color density retention rate evaluation by using a xenon weather meter described in JP-A-2002-178625; the evaluation of post-exposure C/N by using a fade meter described in JP-A-2002-367227; the fog density evaluation after fluorescent lamp irradiation described in JP-A-2001-249430; the optical reflection density evaluation and the erasability evaluation after irradiation by using a fluorescent lamp described in JP-A-9-95055; the evaluation of post-irradiation color difference ΔE* by using an Atlas fade meter described in JP-A-9-309260; the visual evaluation of post-irradiation discoloration by using a carbon arc fade meter described in JP-A-8-258415; the evaluation of the retention rate of organic EL element color-changing property described in JP-A-2000-223271; the measurement and evaluation of organic EL display brightness after photoirradiation by a xenon discoloration tester described in JP-A-2005-189645; and the like.

Other evaluation methods include those of JIS-K7103 and ISO/DIS9050 or a method referring to those. Specific examples thereof include the appearance evaluation of a polycarbonate coating film after irradiation by a UV tester described in JP-A-2006-89697; the blue scale evaluation of a synthetic hair after irradiation with ultraviolet light described in JP-A-2006-316395; the evaluation of water contact angle on a test cloth after irradiation by using an accelerated weather-resistance test machine described in JP-A-2006-335855; the evaluation of a visual image projected on a projection screen after irradiation by using a weather-resistance test machine described in JP-A-2005-55615; the evaluation of the deterioration of sample surface and visual evaluation of ornamental change after irradiation by using a Sunshine Weather Meter or a metal weather meter described in JP-A-2005-74735; the visual evaluation of appearance after photoirradiation by using a metal lamp reflector described in JP-A-2005-326761; the evaluation of the light transmittance of bottle label described in JP-A-2002-189415 and JP-A-2004-352847; the evaluation of polypropylene deterioration after irradiation by using a xenon weather meter under humid condition described in JP-A-2003-19776; the evaluation of the deterioration of a hard-coat film, the deterioration evaluation, the hydrophilicity evaluation and the abrasion resistance evaluation of the base material by using Sunshine Weather-O-Meter described in JP-A-2002-36441 and JP-A-2003-25478; the evaluation of the gray scale color difference of synthetic leather after irradiation by using a xenon lamp light described in JP-A-2003-239181; the evaluation of liquid crystal device characteristics after irradiation by using a mercury lamp described in JP-A-2003-253265; the post-irradiation adhesiveness evaluation by using Sunshine Weather-O-Meter described in JP-A-2002-307619; the evaluation of the degree of turf purpura described in JP-A-2002-293706; the evaluation of ultraviolet light transmittance and tensile strength after irradiation by using a xenon arc light source described in JP-A-2002-114879; the concrete adhesion velocity evaluation described in JP-A-2001-139700; the appearance evaluation and the coated-film adhesiveness evaluation after irradiation by using Sunshine Weather-O-Meter described in JP-A-2011-315263; the evaluation of post-irradiation yellowing degree and adhesiveness by using a carbon arc light source described in JP-A-2001-214121 and JP-A-2001-214122; the adhesiveness evaluation by using an ultraviolet fade meter described in JP-A-2001-207144; the evaluation of insect-repellency when illumination is turned on described in JP-A-2000-67629; the evaluation of the laminated glass yellowing degree (ΔYI) by using an Eye Super UV Tester described in JP-A-10-194796; the evaluation of the surface appearance and brilliance retention rate after QUV irradiation and humidity-resistance tests described in JP-A-8-318592; the evaluation of color difference with time by using a dew panel light control weather meter described in JP-A-8-208976; the evaluation of the glossiness (DI) and the yellowness index (YI) in the wood base-coated state after irradiation by using a xenon Weather-O-meter described in JP-A-7-268253; the ultraviolet absorbance evaluation after repeated processing of UV irradiation and storage in dark described in JP-T-2002-5443265 and JP-T-2002-543266; the evaluation of dye discoloration color difference ΔE after ultraviolet irradiation described in JP-T-2004-532306; and the like.

### EXAMPLES

The present invention will be described in more detail based on the following examples, but the invention is not intended to be limited thereby.

### Example 1

### (Preparation of ultraviolet absorbent composition samples)

Ultraviolet absorbent composition samples 1 to 7 in combination of ultraviolet absorbents A and B, and the compound C were prepared, as shown in the following Table. In the following Table 1-1, the ratio of the ultraviolet absorbents A to B, and the compound C (A:B:C) is expressed by molar ratio.
The ultraviolet absorbent A was subjected to be a solution in ethyl acetate at a concentration of approximately 5 × 10⁻⁵ mol·dm⁻³, and the UV spectrum of the solution was measured in a 1-cm quartz cell by using a spectrophotometer UV-3600 (trade name) manufactured by Shimadzu Corporation. The absorption maximum wavelength, the half value width, and the rate of the absorbance at 320 nm relative to that at the absorption maximum wavelength were calculated form the spectral chart obtained. As a result, absorption maximum wavelength was 369 nm, the half value width was 34 nm and the molar extinction coefficient at the maximum absorption wavelength was 50,000 or more. Further, with respect to the compound used as the ultraviolet absorbent B, measurement of the maximum absorption wavelength was performed in the same manner as the above. Results are summarized in the following Table 1-2.

**Table 1-1**

| Sample | Ultraviolet absorbent | | Compound C | (A:B:C) | Remarks |
|---|---|---|---|---|---|
| | A | B | | | |
| 1 | (47) | B-1 | C-48 | 1 : 2 : 0.06 | This invention |
| 2 | (47) | B-2 | C-48 | 1 : 2 : 0.06 | This invention |
| 3 | (47) | B-3 | C-48 | 1 : 1.5 : 0.06 | This invention |
| 4 | (47) | B-4 | C-48 | 1 : 2 : 0.06 | This invention |
| 5 | (47) | B-4 | C-48 | 1 : 3 : 0.06 | This invention |
| 6 | (47) | B-4 | C-48 | 1 : 2 : 0.06 | This invention |
| 7 | (47) | B-1 | C-2 | 1 : 2 : 0.5 | This invention |
| 8 | (47) | X-1 | C-48 | 1 : 2 : 0.06 | Comparative example |
| 9 | (47) | X-2 | C-48 | 2 : 1 : 0.06 | Comparative example |
| 10 | (47) | B-4 | C-48 | 1 : 2 : 0 | Comparative example |

**Table 1-2**

| Compound | Absorption maximum wavelength (nm) | Absorbance at 320 nm relative to that at the absorption maximum wavelength (%) |
|---|---|---|
| B-1 | 346 | 61 |
| B-2 | 286 | 62 |
| B-3 | 282 | 57 |
| B-4 | 288 | 62 |
| X-1 | 339 | 76 |
| X-2 | 346 | 57 |

The compound X-1 has the following structure, and is commercially available as trade name TINUVIN 329 (manufactured by Ciba Specialty Chemicals).
The compound X-2 has the following structure, and is commercially available as trade name TINUVIN 460 (manufactured by Ciba Specialty Chemicals).

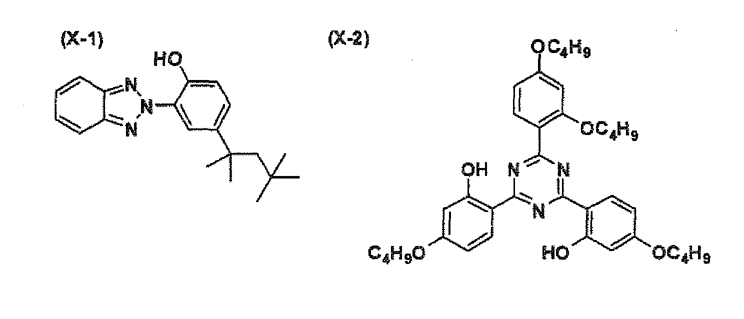

### Example 2

### (Preparation of Paint Samples)

10g of a polymethylmethacrylate resin (PMMA resin), 80g of a mixed liquid of ethyl acetate: 2-buthanone = 1:1, and 20g of sample 1 were mixed, and dissolved while stirring. Thereby, paint 1 was obtained. Further, paints 2 to 10 were obtained in the same manner as the paint 1, except that the sample 1 was substituted by the samples 2 to 10.

### (Evaluation-1, Pot Life of Paint)

The obtained paints 1 to 10 were stood at room temperature for one week. Thereafter, a color of the paint liquid and deposits were visually observed. The results are shown in Table 2. Evaluation was performed with respect to a paint immediately after preparation (flesh) and another paint after over time at room temperature, and the case in which neither discoloration nor deposit is observed was determined as ○, whereas the case in which discoloration and/or deposit are observed was determined as ×.

### (Production of Coating Film)

The paint 1 was coated on a polyethyleneterephthalate (PET) film having a thickness of 100 µm using a coil bar (#3). The obtained coating film was dried at 80°C for 1 minute to produce coating film 1. Coating films 2 to 10 were produced in the same manner as the coating film 1, except that the sample 1 was substituted by the samples 2 to 10.

### (Evaluation-2, Surface state of Coating Film)

The obtained coating films 1 to 10 were stood at room temperature for one week. Thereafter, a surface state of each coating film was visually observed. The results are shown in Table 2. Evaluation was performed with respect to a coating film immediately after preparation (flesh) and another coating film after a period at room temperature, and the case in which the surface state is clear was determined as ○, whereas the case in which there are defects of the surface state such as bleeding out was determined as x.

**Table 2**

| Sample | Evaluation-1 | | Evaluation-2 | | Remarks |
|---|---|---|---|---|---|
| | Flesh | After a period | Flesh | After a period | |
| 1 | ○ | ○ | ○ | ○ | This invention |
| 2 | ○ | ○ | ○ | ○ | This invention |
| 3 | ○ | ○ | ○ | ○ | This invention |
| 4 | ○ | ○ | ○ | ○ | This invention |
| 5 | ○ | ○ | ○ | ○ | This invention |
| 6 | ○ | ○ | ○ | ○ | This invention |
| 7 | ○ | ○ | ○ | ○ | This invention |
| 8 | ○ | × | × | × | Comparative example |
| 9 | × | × | × | × | Comparative example |
| 10 | ○ | × | ○ | × | Comparative example |

As is apparent from Table 2, it is understood that the paint and the coating films (samples 1 to 7) in each of which the ultraviolet absorbent composition of the present invention is used are excellent in both pot life of paint and surface state of coating film. On the other hand, in the case (samples 8 and 9) in which the compounds other than the compound represented by formula (2-a) or (2-b) are used as the ultraviolet absorbent B, when the paints were stood for a long time, there were deposits. In the case (sample 10) in which the compound C is not added, its color was changed, and were inferior as to the pot life of paint and surface state of coating film.

### (Evaluation-3, Transmittance of Coating Film, Deterioration resistance to light)

With respect to each of the obtained coating films 1 to 10, a portion the surface state of which is clear was cut off. Transmittance spectrum of the portion was measured using a spectrophotometer (U-4100 SPECTROPHOTOMETER, trade name, manufactured by Hitachi High-Technologies Corporation). The case in which both transmittances at 320 nm and 390 nm are less than 1% was determined as ○. In contrast, the case in which both transmittances at 320 nm and 390 nm are equal to 1% or more than 1% was determined as ×.
Further, each coating film was exposed to light from a xenon lamp (a product of Eagle Engineering) equipped with a WG 320 filter (a product of SCHOTT AG) at an illumination intensity of 170,000 lux. Transmittance spectrum of the coating film which has been exposed for 10 hours was measured. Evaluation was performed with respect to a coating film before exposure and another coating film after exposure, and the case in which transmittance at 390 nm is 0.5% or less was determined as o. In contrast, the case in which transmittance at 390 nm is more than 0.5% was determined as ×
The results are shown in Table 3.

**Table 3**

| Film | Evaluation-3 | | | | Remarks |
|---|---|---|---|---|---|
| | Transmittance | | Deterioration resistance to light | | |
| | 320 nm | 390 nm | Before irradiation | After irradiation | |
| 1 | ○ | ○ | ○ | ○ | This invention |
| 2 | ○ | ○ | ○ | ○ | This invention |
| 3 | ○ | ○ | ○ | ○ | This invention |
| 4 | ○ | ○ | ○ | ○ | This invention |
| 5 | ○ | ○ | ○ | ○ | This invention |
| 6 | ○ | ○ | ○ | ○ | This invention |
| 7 | ○ | ○ | ○ | ○ | This invention |
| 8 | × | ○ | ○ | ○ | Comparative example |
| 9 | × | ○ | ○ | ○ | Comparative example |
| 10 | ○ | ○ | ○ | × | Comparative example |

As is apparent from Table 3, it is understood that the cases (coating films 1 to 7) in each of which the ultraviolet absorbent composition of the present invention is used are excellent in both transmittance and deterioration resistance to light. On the other hand, it is understood that the cases (samples 8 and 9) in which the compounds other than the compound represented by formula (2-a) or (2-b) are used as the ultraviolet absorbent B show inferior transmittance at near-320 nm. Further, it is understood that the case (sample 10) in which the compound C is not added shows inferior resistance to light, and transmittance at near-390 nm is deteriorated after xenon lamp irradiation test.

From the above-described results, it is understood that the ultraviolet absorbent composition of the present invention shows a wide-wavelength range of ultraviolet absorptive capacity and high resistance to light in combination. Further, it is understood that, in a case in which the ultraviolet absorbent composition of the present invention is used as paints, a pot life property is conspicuously improved, and in a case in which the ultraviolet absorbent composition of the present invention is formed as a coating film, bleeding out of the ultraviolet absorbent is suppressed.

### INDUSTRIAL APPLICABILITY

The ultraviolet absorbent composition of the present invention may be favorably used, for example, in an ultraviolet absorbing filter, an ultraviolet absorbing film, a wrapping material, a container, a paint, an ink, a fiber, an architectural material, a recording medium, a liquid crystal display device, and a cover for a solar cell. The ultraviolet absorbent composition of the present invention may be favorably used, for example, as dispersion, a solution, or a polymeric material.

Having described our invention as related to the present embodiments, it is our intention that the invention not be limited by any of the details of the description, unless otherwise specified, but rather be construed broadly within its spirit and scope as set out in the accompanying claims.

This application claims priority on Patent Application No. 2008-123714 filed in Japan on May 9, 2008, which is entirely herein incorporated by reference.

## Claims

1. An ultraviolet absorbent composition, comprising:
an ultraviolet absorbent A represented by formula (1);
an ultraviolet absorbent B represented by formula(2-a) or (2-b); and
a compound C, which is at least one kind of compound selected from the group consisting of a singlet oxygen scavenger, an antioxidant and a radical trapping agent: 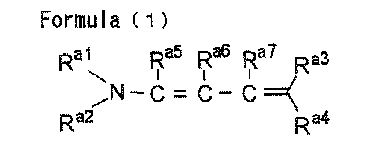
wherein
R^{a1} and R^{a2} each independently represent a hydrogen atom, a substituted or unsubstituted alkyl group, a substituted or unsubstituted aryl group, or a substituted or
unsubstituted heterocyclic group; R^{a1} and R^{a2} may bond to each other to form a nitrogen-containing ring;
R^{a3} and R^{a4} each independently represent a substituent having a Hammett substituent constant σp value of 0.2 or more; R^{a3} and R^{a4} may bond to each other to form a ring;
R^{a5}, R^{a6} and R^{a7} each represent a hydrogen atom or a monovalent substituent; and any two of R^{a1}, R^{a5}, R^{a6} and R^{a7} may bond with each other to form a ring; and 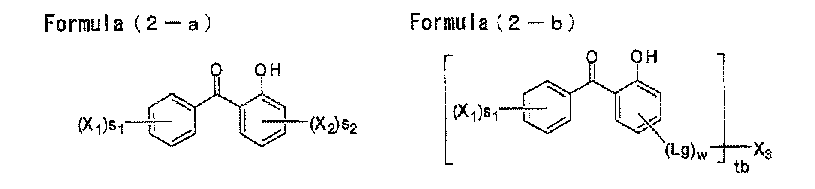
wherein, in formula (2-a),
X₁ and X₂ each independently represent a hydrogen atom, a halogen atom, a hydroxyl group, a substituted or unsubstituted alkyl group, a substituted or unsubstituted phenyl group, a substituted or unsubstituted alkoxy group, a substituted or unsubstituted alkylsulfonyl group, a substituted or unsubstituted arylsulfonyl group, a sulfonic acid group, a substituted or unsubstituted alkyloxycarbonyl group, a substituted or unsubstituted aryloxycarbonyl group or a substituted or unsubstituted amino group; and
s₁ and s₂ each independently represent an integer of 1 to 3; and
wherein, in formula (2-b),
X₁ represents a hydrogen atom, a halogen atom, a hydroxyl group, a substituted or
unsubstituted alkyl group, a substituted or unsubstituted phenyl group, a substituted or
unsubstituted alkoxy group, a substituted or unsubstituted alkylsulfonyl group, a substituted or unsubstituted arylsulfonyl group, a sulfonic acid group, a substituted or
unsubstituted alkyloxycarbonyl group, a substituted or unsubstituted aryloxycarbonyl group, or a substituted or unsubstituted amino group; s₁ represents an integer of 1 to 3;
Lg represents a divalent substituent or a single bond; w represents 0 or 1;
tb represents 1 or 2; X₃ represents, when tb is 1, a hydrogen atom, a halogen atom, a hydroxyl group, a substituted or unsubstituted alkyl group, a substituted or unsubstituted phenyl group, a substituted or unsubstituted alkoxy group, a substituted or unsubstituted alkylsulfonyl group, a substituted or unsubstituted arylsulfonyl group, a sulfonic acid group, a substituted or unsubstituted alkyloxycarbonyl group, a substituted or
unsubstituted aryloxycarbonyl group, or a substituted or unsubstituted amino group; and when tb is 2, X₃ represents a divalent substituent.

2. The ultraviolet absorbent composition according to Claim 1, wherein the compound C is a compound represented by formula (3-a) or (3-b): 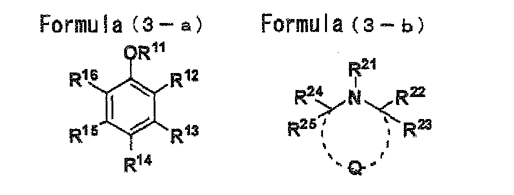 wherein
in formula (3-a), R¹¹ represents a hydrogen atom, an aliphatic group, an aromatic group, a heterocyclic group bound via a carbon atom, or a hydrolysable protective group; R¹², R¹³, R¹⁴, R¹⁵ and R¹⁶ each independently represent a hydrogen atom or a substituent;
and R¹¹ and R¹², R¹² and R¹³, R¹³ and R¹⁴, R¹⁴ and R¹⁵, R¹⁵ and R¹⁶, and R¹⁶ and R¹¹ may bond to each other to form a ring; and
in formula (3-b), R²¹ represents a hydrogen atom, an aliphatic group, an acyl group, a sulfonyl group, a sulfinyl group, an oxy radical group or a hydroxyl group; Q represents a group of nonmetallic atoms necessary for forming a 5-, 6- or 7-membered ring; R²², R²³, R²⁴ and R²⁵ each independently represents a hydrogen atom, an aliphatic group, an aromatic group, or a heterocyclic group bound via a carbon atom; and R²¹ and R²², R²² and R²³, R²⁴ and R²⁵, and R²¹ and R²⁴ may bond to each other to form a ring.

3. The ultraviolet absorbent composition according to Claim 1 or 2, wherein the ultraviolet absorbent A has the maximum absorption wavelength of 3 50 nm or more and 400 nm or less, the half width of 55 nm or less, and the molar extinction coefficient at the maximum absorption wavelength of 50,000 or more.

4. The ultraviolet absorbent composition according to any one of Claims 1 to 3, wherein the ultraviolet absorbent B has the maximum absorption wavelength of less than 320 nm.

5. The ultraviolet absorbent composition according to any one of Claims 1 to 3, wherein the ultraviolet absorbent B has the maximum absorption wavelength of 320 nm or more and 350 nm or less.

6. The ultraviolet absorbent composition according to any one of Claims 1 to 5, wherein a mixing ratio of the ultraviolet absorbent A the ultraviolet absorbent B is 1:10 to 10:1.

7. The ultraviolet absorbent composition according to any one of Claims 2 to 6, wherein the compound C is the compound represented by formula (3-b).

8. An ultraviolet absorbent dispersion, comprising the ultraviolet absorbent composition according to any one of Claims 1 to 7.

9. An ultraviolet absorbent solution, comprising the ultraviolet absorbent composition according to any one of Claims 1 to 7.

10. A polymer material, comprising the ultraviolet absorbent composition according to any one of Claims 1 to 7.
